# EUROPEAN PATENT APPLICATION

(11) **EP 1 653 737 A1**
(43) Date of publication of application: **03.05.2006**
(21) Application number: 04771236.9
(22) Date of filing: 29.07.2004
(51) Int. Cl.: H04N 5/76

(54) **PROGRAM RESERVATION RECORDING DEVICE, INFORMATION PROVIDING SERVER, PROGRAM RESERVATION INFORMATION MANAGEMENT SERVER, PROGRAM RECEPTION DEVICE, AND PROGRAM RESERVATION RECORDING SYSTEM**

(30) Priority: 04.08.2003 JP 2003286090
(71) Applicant: MATSUSHITA ELECTRIC INDUSTRIAL CO., LTD., Kadoma-shi, Osaka 571-8501 (JP)
(72) Inventor: YAMAOKA, Masaru, / (JP); KOMMA, Yoshiaki, / (JP); YAMAMOTO, Hiroaki, / (JP)
(74) Representative: TBK-Patent
(86) International application number: PCT/JP2004/011209
(87) International publication number: WO 2005/013612

(57) **Abstract**

There is provided a program reservation recording device capable of reducing load on a server and performing program recording as is reserved by a user. Immediately before the reserved program is started and immediately before the end of it (S1), the program reservation recording device makes a request to an information providing server connected via a general-purpose network so as to acquire the latest program list (S2). The program reservation recording device compares the reservation information indicating the program reservation contents (start time, end time, etc.) to be stored in a memory with the latest program list acquired (S3). If any mismatch is present, the reservation information is updated according to the program list (S4)

## Description

### Technical Field

The present invention relates to a program reservation-and-recording apparatus, an information-providing server, a program reservation-information management server, a program reception apparatus and a program reservation-and-recording system which are suitable for a picture recording and a reservation for a broadcast program.

### Background Art

Conventionally, a number of systems are known which have been established so that a picture-recording reservation for a broadcast program in a program reservation and picture-recording apparatus for home use can be easily made, based upon program information, such as a program broadcast channel and a program time (i.e., a broadcast date, a broadcast start time and a broadcast completion time)(e.g., Patent Documents 1 to 4 enumerated below).
Patent Document 1: Japanese Patent Laid-Open No. 9-180291 specification
Patent Document 2: Japanese Patent Laid-Open No. 10-93936 specification
Patent Document 3: Japanese Patent Laid-Open No. 10-155131 specification
Patent Document 4: Japanese Patent Laid-Open No. 2002-300559 specification

Patent Document 1 discloses the art of receiving program information distributed from an information center in a program reservation and picture-recording apparatus and displaying this program information on a screen so that a user can make a choice. This provides advantages in that the user can make a reservation by a simple operation and can also be prevented from making a wrong operation. However, the program information is only used as a choice menu at the time of a reservation operation. Hence, the reservation contents cannot be automatically varied according to a program-time change after the reservation or another such operation.

In contrast, Patent Document 2 discloses a system in which the contents of a reservation are automatically varied when a program is changed. According to this prior art, information on a program is placed and transmitted in the vertical blanking interval (i.e., the blank period from the time when a screen image finishes being written to the time when the following screen image begins to be written) of each channel in a broadcast signal which is transmitted from a broadcasting station. Then, each program reservation and picture-recording apparatus automatically changes the reservation contents of a program, based on the latest program information it has received. However, according to this prior art, program information is provided using a space in a broadcast signal. This presents a disadvantage in that it takes some time to transmit necessary program information. Besides, the prior art can be applied only to analog-system TV (or television) broadcasting.

On the other hand, Patent Document 3 discloses the art of a server connected via a network to each program reservation and picture-recording apparatus, not only providng program information to each program reservation and picture-recording apparatus, but also changing the contents of a reservation for each program reservation and picture-recording apparatus when a program time is changed. However, the number of program reservation and picture-recording apparatuses is expected to reach tens of thousands or more. If a server controls them, the server is loaded too much to be used in practice.

In contrast, Patent Document 4 discloses the art of a server distributing the newest program information periodically to each program reservation and picture-recording apparatus connected through a network, and each program reservation and picture-recording apparatus changing the reservation contents of a program on the basis of the program information it has received. However, even according to this prior art, every time the program information is updated, the server has to distribute the program information to each program reservation and picture-recording apparatus. This gives a disadvantage in that the server is still overloaded so that it cannot be practically used.

Furthermore, in a conventional program reservation and picture-recording apparatus, even if a program time is not changed, its interference may occur with the regeneration operation of a program from a recording medium, or with the use of a tuner for receiving a program and outputting it to a monitor. In this time, a disadvantage arises in that the program cannot often be recorded exactly at a reservation time. Moreover, in a program reservation and picture-recording apparatus, it can be considered that a program should be reserved by reflecting not only a user's desire, but also a large number of users' inclinations for a program. However, such an apparatus which can do this easily has not conventionally been known. In addition, a program reservation and picture-recording apparatus has been unknown which is capable of recording the picture of a reserved program even if a program time is changed, and at the same time, automatically erasing other unnecessary programs than the reserved program. Furthermore, no program reservation and picture-recording apparatus has been known which can simultaneously record the pictures of several reserved programs, using tuners whose number is smaller than that of the programs to be concurrently picture-recorded.

### Disclosure of the Invention

In view of the above described disadvantages, it is an object of the present invention to provide a program reservation-and-recording apparatus, an information-providing server, a program reservation-information management server and a program reservation-and-recording system which can be used even for a program except for an analog TV-broadcast program and which are capable of lightening the load on the side of a server and recording a program exactly according to a user's reservation. Furthermore, it is another object of the present invention to provide a program reservation-and-recording apparatus which is restrained from being affected by a regeneration operation for a recording medium or the use of a tuner, so that a program can be recorded according to a user's reservation. Moreover, it is still another object of the present invention to provide a program reservation-and-recording apparatus, an information-providing server, a program reservation-information management server and a program reservation-and-recording system which are capable of making a reservation for a program easily that reflects a great many users' inclinations for the program.

In addition, it is still another object of the present invention to provide a program reservation-and-recording apparatus and a program reservation-and-recording system which are capable of recording a reserved program even if a program-provision time is changed, and at the same time, automatically erasing other unnecessary programs than the reserved program. Furthermore, it is still another object of the present invention to provide a program reservation-and-recording apparatus, a program reception apparatus connected to the program reservation-and-recording apparatus, and a program reservation-and-recording system including the mutually-connected program reservation-and-recording apparatus and program reception apparatus which are capable of recording a plurality of reserved programs simultaneously, using tuners whose number is smaller than that of the programs to be concurrently recorded.

In order to attain the above described objects, an program reservation-and-recording apparatus according to an aspect of the present invention which records a reserved program in a recording medium, characterized by including: a reservation-information input section which accepts a reservation for a program by a user; a reservation-information memory which stores reservation information which indicates the contents of a reservation for a program; a recording control section which records the program in the recording medium, based on the reservation information; a program-list acquisition section which makes a request to an information-providing server that is connected via a general-purpose network, and from the information-providing server, acquires a program list on which a program time is described for each program; and a reservation-information update section which updates the reservation information that is stored in the reservation-information memory, based on the acquired program list.

The objects, characteristics, aspects and advantages of the present invention will be more obvious in the following detailed description and attached drawings.

### Brief Description of the Drawings

Fig. 1 is a block diagram, showing a program reservation and picture-recording system according to a first embodiment of the present invention.
Fig. 2 is a block diagram, showing the configuration of a program reservation and picture-recording apparatus which makes up the system of Fig. 1.
Fig. 3 is a block diagram, showing the configuration of a picture-recording reservation section in the apparatus of Fig. 2.
Fig. 4 is a block diagram, showing the configuration of a drive control section in the apparatus of Fig. 2.
Fig. 5 is a flow chart, showing a processing for updating reservation information.
Fig. 6 is an illustration, showing an example of a program list.
Fig. 7 is an illustration, showing an example of the data structure of a program identifier.
Fig. 8 is a flow chart, showing the flow of a trimming processing.
Fig. 9 is an illustration, showing an example of the operation of the trimming processing.
Fig. 10 is an illustration, showing another example of the operation of the trimming processing.
Fig. 11 is a block diagram, showing a program reservation and picture-recording apparatus according to a second embodiment of the present invention.
Fig. 12 is a block diagram, showing the configuration of a picture-recording reservation section in the apparatus of Fig. 11.
Fig. 13 is a block diagram, showing the configuration of a drive control section in the apparatus of Fig. 11.
Fig. 14 is a flow chart, showing the processing of a step S6 in the apparatus of Fig. 11.
Fig. 15 is a flow chart, showing another characteristic operation in the apparatus of Fig. 11.
Fig. 16 is an illustration, showing a warning which is displayed in a display.
Fig. 17 is an illustration, showing a warning which is displayed in a display.
Fig. 18 is a block diagram, showing an example of the variation of the apparatus of Fig. 11.
Fig. 19 is a flow chart, showing a processing in the apparatus of Fig. 18.
Fig. 20 is a flow chart, showing a processing in the apparatus of Fig. 11 or Fig. 18.
Fig. 21 is a block diagram, showing a program reservation and picture-recording system according to a third embodiment of the present invention.
Fig. 22 is a block diagram, showing the configuration of a picture-recording reservation section in the apparatus of Fig. 21.
Fig. 23 is a flow chart, showing a processing in the system of Fig. 21.
Fig. 24 is a flow chart, showing a processing in the system of Fig. 21.
Fig. 25 is a flow chart, showing a processing in the system of Fig. 21.
Fig. 26 is a flow chart, showing a processing in the system of Fig. 21.
Fig. 27 is an illustration, showing a procedure for a processing which is executed by an audience-rating prediction section.
Fig. 28 is an illustration, showing a procedure for a processing which is executed by the audience-rating prediction section.
Fig. 29 is a block diagram, showing a program reservation and picture-recording system according to a fourth embodiment of the present invention.
Fig. 30 is a block diagram, showing the configuration of a picture-recording reservation section in the apparatus of Fig. 29.
Fig. 31 is an illustration, showing a processing in the system of Fig. 29.
Fig. 32 is an illustration, showing a processing in the system of Fig. 29.
Fig. 33 is a block diagram, showing a program reservation and picture-recording system according to a fifth embodiment of the present invention.
Fig. 34 is a block diagram, showing the configuration of a program reservation and picture-recording apparatus according to a sixth embodiment of the present invention.
Fig. 35 is a block diagram, showing the configuration of a picture-recording reservation section in the apparatus of Fig. 34.
Fig. 36 is a block diagram, showing the configuration of a drive control section in the apparatus of Fig. 34.
Fig. 37 is a flow chart, showing a processing in the program reservation-and-recording apparatus of Fig. 34.
Fig. 38 is a flow chart, showing the processing of a step S205 in Fig. 37.
Fig. 39 is an illustration, showing a program list.
Fig. 40 is an illustration, showing the data structure of an address table.
Fig. 41 is an illustration, showing a program list which is provided after the program list of Fig. 39.
Fig. 42 is an illustration, showing an example of a program which is picture-recorded during a picture-recording period of time.
Fig. 43 is an illustration, showing another example of a program which is picture-recorded during a picture-recording period of time.
Fig. 44 is a block diagram, showing the configuration of a program reservation and picture-recording system according to a seventh embodiment of the present invention.
Fig. 45 is a block diagram, showing the configuration of a picture-recording reservation section in the apparatus of Fig. 44.
Fig. 46 is a block diagram, showing the configuration of a drive control section in the apparatus of Fig. 44.
Fig. 47 is a flow chart, showing a picture-recording processing for a reserved program in the program reservation-and-recording apparatus of Fig. 44.
Fig. 48 is a flow chart, showing the processing of a step S263 in Fig. 47.
Fig. 49 is a flow chart, showing the processing of a step S266 in Fig. 47.
Fig. 50 is a flow chart, showing the processing of a step S267 in Fig. 47.
Fig. 51 is an illustration, showing an example of a warning which is displayed by a first warning display signal.
Fig. 52 is an illustration, showing an example of a warning which is displayed by a second warning display signal.
Fig. 53 is a flow chart, showing a picture-recording processing for a reserved program in a variation of the program reservation-and-recording apparatus of Fig. 44.

### Best Mode for Implementing the Invention

### [First Embodiment]

### (The configuration and operation of a system)

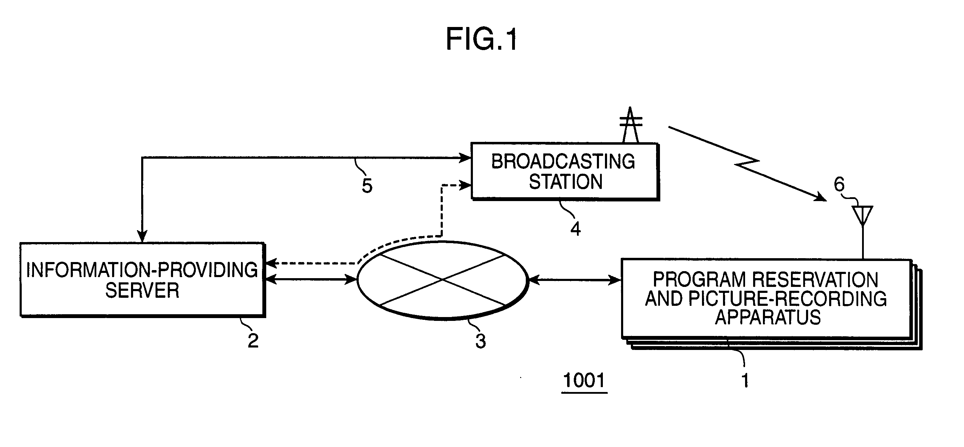

Fig. 1 is a block diagram, showing the configuration of a program reservation and picture-recording system according to a first embodiment of the present invention. The program reservation and picture-recording system 1001 is a program reservation-and-recording system according to an embodiment of the present invention. It includes: a plurality of program reservation and picture-recording apparatuses 1; an information-providing server 2; and a broadcasting station 4. The plurality of program reservation and picture-recording apparatuses 1 and the information-providing server 2 are connected to each other, via a general-purpose network 3. The information-providing server 2 is connected to the broadcasting station 4, through a dedicated line 5 or the general-purpose network 3. The general-purpose network 3 includes, for example, a public telephone line. The plurality of program reservation and picture-recording apparatuses 1 and the information-providing server 2 can communicate together, for example, in a communication system where an Internet-related protocol is used, such as a TCP/IP (or transmission control protocol/Internet protocol).

The program reservation and picture-recording apparatus 1 is a program reservation-and-recording apparatus according to an embodiment of the present invention. It has the function of receiving an electronic radio wave from the broadcasting station 4 and recording the picture of a reserved program in a recording medium. Besides, it acquires a program list which is provided by the information-providing server 2. The program list is information on a program channel, a program time or the like. On the basis of the program list, it changes the contents of a reservation for a program automatically. In order to acquire such a program list, the general-purpose network 3 is used, so that costs for a circuit connection can be prevented from being greater. Hence, the program reservation and picture-recording apparatus 1 is suitable as an apparatus for home and personal use.

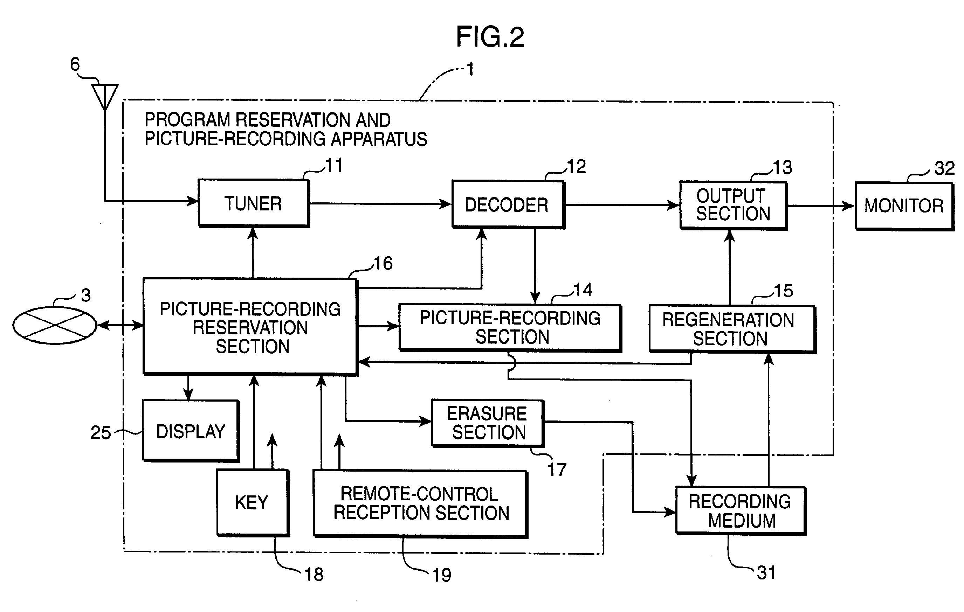

Fig. 2 is a block diagram, showing the configuration of the program reservation and picture-recording apparatus 1. This apparatus 1 is designed to receive a TV broadcast program and output it to a monitor 32. Then, it reserves and records the picture of this TV broadcast program in a recording medium 31. Besides, it regenerates the program from the recording medium 31 and outputs it to the monitor 32. For this purpose, the apparatus 1 is provided with: a tuner 11; a decoder 12; an output section 13; a picture-recording section 14; a regeneration section 15; a picture-recording reservation section 16; an erasure section 17; a key 18; a remote-control reception section 19; and a display 25.

The tuner 11 is connected to an antenna 6. It is an apparatus element which picks any channel program data (i.e., a signal which represents the contents of a broadcast program) from a broadcast radio wave received by the antenna 6. Herein, in this specification, program data is also appropriately simplified as "program". The decoder 12 is an apparatus element which decodes a program received in a compressed-code format. It starts to operate, for example, when a digital-TV broadcast program is received. The output section 13 is an apparatus element which outputs a program to the monitor 32.

The picture-recording section 14 is an apparatus element which records the picture of a program in the recording medium 31. The recording medium 31 can be an optional medium which can record the picture of a program and regenerate it. It is, for example, a DVD (or digital versatile disk), a video tape such as a VHS, a CD (or compact disk), a PD (or phase change rewritable disk), a Blu-ray disk, a hard disk, a semiconductor memory, and the like. The recording medium 31 may also be either the one which can be freely attached and detached (i.e., removable), or the one which is embedded in the apparatus 1. In Fig. 2, the recording medium 31 is shown as the removable one.

The regeneration section 15 is an apparatus element which regenerates a program whose picture is recorded in the recording medium 31. The erasure section 17 is an apparatus element which erases a program whose picture is recorded in the recording medium 31. The picture-recording section 14, the regeneration section 15 and the erasure section 17 are each an apparatus element which accesses the recording medium 31. Hence, each of them includes a mutually overlapping element. For example, in the case where the recording medium 31 is a DVD, or in another such case, if a mechanical drive element, a magnetic (or optical) head and the like is required, the picture-recording section 14, the regeneration section 15 and the erasure section 17 have these elements in common.

The picture-recording reservation section 16 is an apparatus element which makes a reservation for recording the picture of a program. It is an apparatus element which records the picture of a program in the recording medium 31 according to the contents of a program reservation by a user. Or, it is an apparatus element which acquires a program list via the network 3 from the information-providing server 2, and based on this, changes the reservation contents of a program automatically. The structure of the picture-recording reservation section 16 will be described in detail later. The key 18 and the remote-control reception section 19 are each an apparatus element which is operated by a user so that information can be inputted. A user touches the key 18 directly, or sends the contents of a remote-control operation to the remote-control reception section 19, using infrared rays or radio as a transmission medium. Thereby, for example, a desired program can be reserved. The display 25 is an apparatus element which displays various kinds of information for assisting with a user's input operation. It includes, for example, a liquid-crystal display panel.

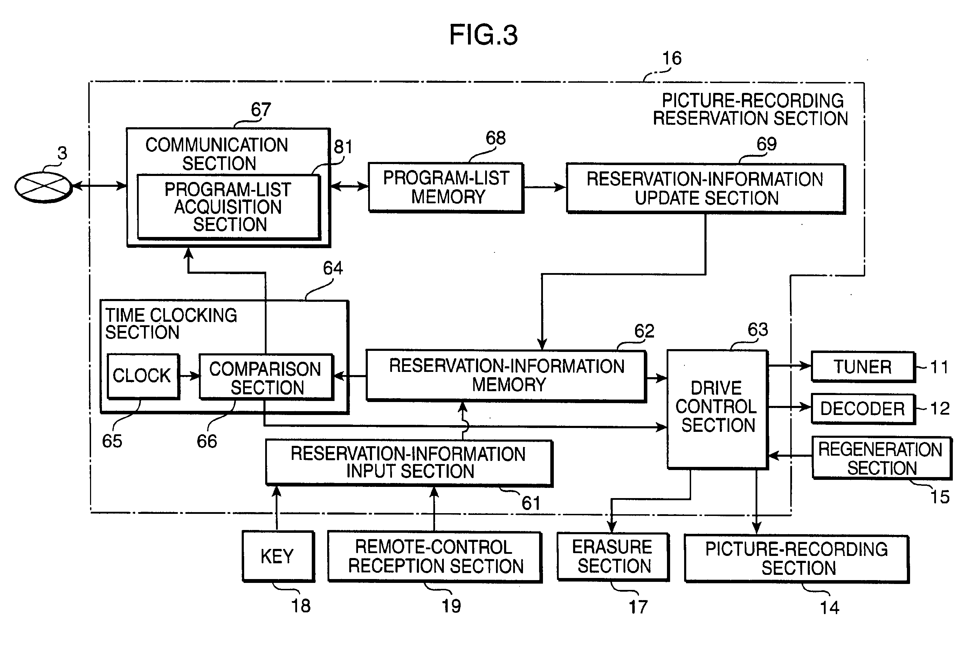

Fig. 3 is a block diagram, showing the configuration of the picture-recording reservation section 16. The picture-recording reservation section 16 is provided with: a reservation-information input section 61; a reservation-information memory 62; a drive control section 63; a time clocking section 64; a communication section 67; a program-list memory 68; and a reservation-information update section 69. These apparatus elements may be formed by hardware which needs no software. However, if each apparatus element except for the reservation-information memory 62 and the program-list memory 68 is equivalently formed by a computer which operates according to a program, it is simpler and easier. The program which governs the operation of such a computer is stored in a memory, such as an ROM (or read only memory) and a hard disk (or HDD) (not shown). Thereby, the computer realizes each apparatus element equivalently. The program can be provided through transmission media which include the general-purpose network 3. It can also be provided through a recording medium such as an ROM or a CD-ROM. This is also the same as the computer programs in the other embodiments.

The reservation-information input section 61 is an apparatus element which creates reservation information that indicates the contents of a reservation for a program, based on the contents of an operation of the key 18 by a user or the contents of a remote-control operation sent through the remote-control reception section 19. Then, it stores the reservation information in the reservation-information memory 62. The time clocking section 64 is an apparatus element which clocks the time. It includes a clock 65 and a comparison section 66. The comparison section 66 refers to a picture-recording start time and a picture-recording completion time for each program which are included in the reservation information that is stored in the reservation-information memory 62. Thereby, it gives notice that the time which is indicated in the clock 65 has reached the picture-recording start time for each program and the time immediately before it, and the picture-recording completion time and the time immediately before and after it, respectively.

The communication section 67 is an apparatus element which communicates via the general-purpose network 3 with the information-providing server 2. It includes a program-list acquisition section 81 which transmits a request to the information-providing server 2 and thereby receives a program list in return. The program-list memory 68 is a memory which stores the acquired program list. The reservation-information update section 69 is an apparatus element which updates the reservation information stored in the reservation-information memory 62, on the basis of the program list stored in the program-list memory 68. The drive control section 63 is an apparatus element which records the picture of a program in the recording medium 31 or erases the program picture-recorded in the recording medium 31, based on the reservation information stored in the reservation-information memory 62.

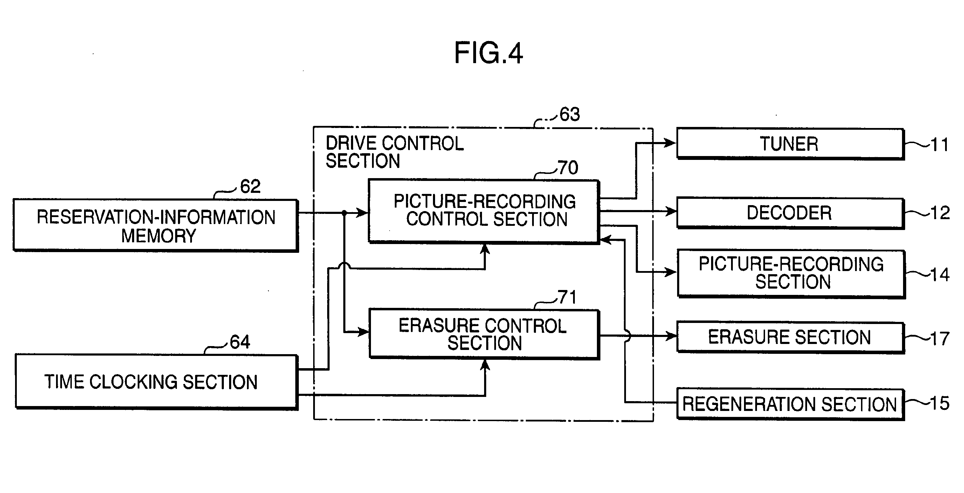

Fig. 4 is a block diagram, showing the configuration of the drive control section 63. The drive control section 63 is provided with a picture-recording control section 70 and an erasure control section 71. The picture-recording control section 70 refers to a time which is given by the notification of the time clocking section 64. Thereby, it controls the tuner 11, the decoder 12 and the picture-recording section 14, so that a specific-channel program which is described in the reservation information stored in the reservation-information memory 62 starts to be picture-recorded in the recording medium 31 at its program picture-recording start time and finishes being picture-recorded at the program picture-recording completion time. Besides, depending upon the operational state of the regeneration section 15, the picture recording of a program in the recording medium 31 can be hindered. Hence, the picture-recording control section 70 also has the function of detecting how the regeneration section 15 is operating. The erasure control section 71 refers to a time which is given by the notification of the time clocking section 64. Thereby, after the program picture-recording completion time which is described in the reservation information stored in the reservation-information memory 62, if an unreserved program is included within this program's picture-recording time, then it has the function of erasing the unreserved program from the recording medium 31.

### (Reservation-information update processing and trimming processing)

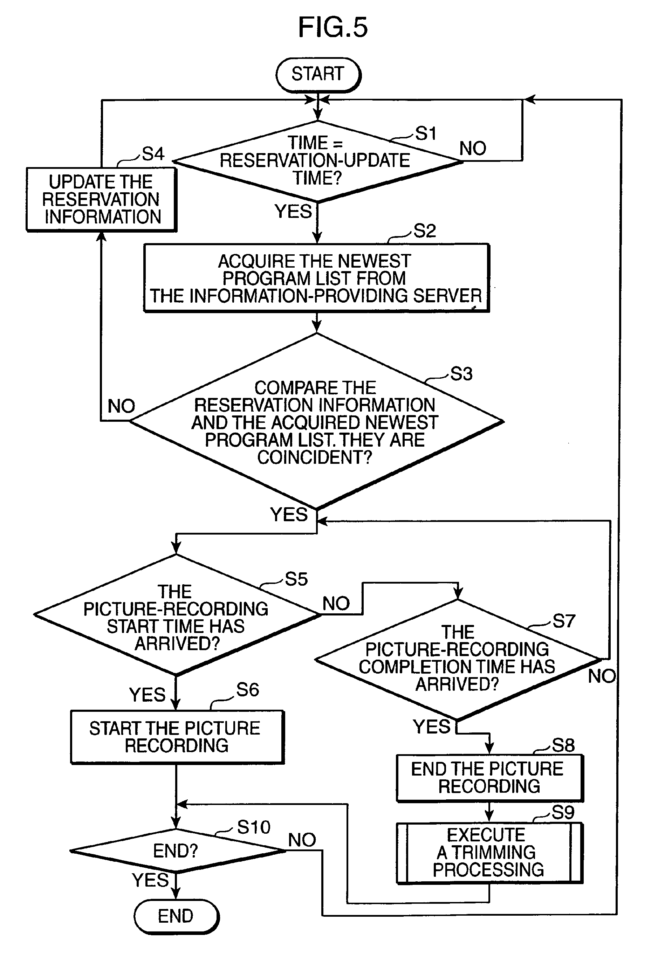

Fig. 5 is a flow chart, showing a processing for updating the reservation information stored in the reservation-information memory 62, which is a characteristic operation of the above described program reservation-and-recording apparatus 1. When the processing starts, the time clocking section 64 decides whether or not the current time has reached the time when the reservation should be updated (in a step S1). This reservation-update time is a time immediately before the program picture-recording start time and a time immediately before the program picture-recording completion time which are described in the reservation information stored in the reservation-information memory 62. Herein, the phrase of immediately before is a time which is short enough, compared with the program picture-recording time, ahead of the program picture-recording start time and the program picture-recording completion time. It means a time which is long enough to execute the processing of the following steps S2, S3 and S4. For example, it is a time several seconds to several minutes ahead. This length of time is preset in the time clocking section 64.

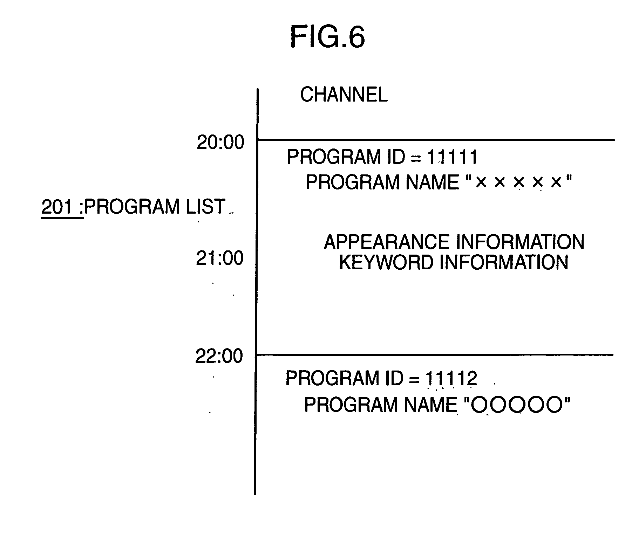

The time clocking section 64 iterates the processing of the step S1 until the present time reaches the reservation-update time. If the present time has reached the reservation-update time, it notifies the program-list acquisition section 81 of the fact. Then, the program-list acquisition section 81 transmits a request to the information-providing server 2. Thereby, it acquires a program list from the information-providing server 2 (in a step S2). Fig. 6 is an illustration, showing an example of the program list. As shown in Fig. 6, on a program list 201, a program name, a program start time, a program completion time, information on those who appear on a program, keyword information and a program identifier (which is suitably abbreviated as a program ID) are enumerated for each broadcast channel and for each program. The keyword information is a list of keywords available for retrieving a program.

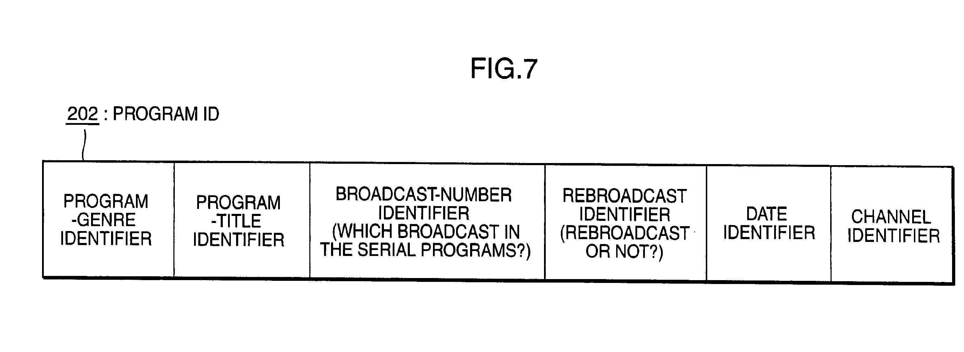

The program ID is a simple code for identifying a program. For example, it has such a structure as shown in Fig. 7. A program ID 202 shown in Fig. 7 includes an identifier or a flag which expresses, using a simple code, a program genre, a program title, the number of broadcasts for serial programs, a rebroadcast or not, a date and a program channel, respectively. Herein, an identifier which has a length of one bit is especially called a flag. As the program list, the information-providing server 2 provides the latest one. Incidentally, the processing for the information-providing server 2 creating a program ID and a program list will be described later in a fifth embodiment of the present invention.

Moving back to Fig. 5, if the processing of the step S2 ends, the reservation-information update section 69 compares the reservation information stored in the reservation-information memory 62 and the acquired latest program list, and decides whether or not they are coincident with each other. In terms of the program included in the reservation information, if the program time (i.e., the program start time and the program completion time) is changed or the program is cancelled for some reason on the side of a broadcasting station, the contents of such a change are reflected in the latest program list. Hence, if this kind of change is made, the decision that they are not coincident is made in a step S3. Then, the reservation information is updated according to the program list (in a step S4) . As a result, the reservation information stored in the reservation-information memory 62 is rewritten to the contents which reflect the contents of the latest program list. Thereafter, the processing returns to the step S1.

If the decision that they are coincident is made in the step S3, the picture-recording control section 70 waits for the time clocking section 64 to notify it that the current time has reached either the program picture-recording start time or the program picture-recording completion time which are described in the reservation information (in steps S5 and S7). Then, it starts to record the picture of the program in the recording medium 31 (in a step S6), or it finishes recording it (in a step S8). After the step S6 is completed, or after a trimming processing (in a step S9) after the step S8 is completed, a decision is made whether or not the whole processing of Fig. 5 should be ended. In the case where a user operates the key 18 so that the entire operation of the program reservation and picture-recording apparatus 1 comes to a stop, or in another such case, the whole processing of Fig. 5 is terminated. In an ordinary case where it should not be terminated, the processing moves back to the step S1.

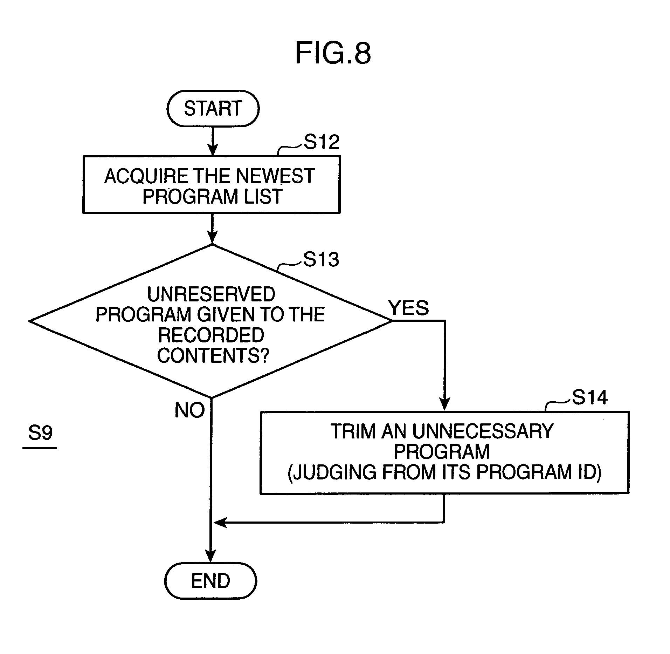

Fig. 8 is a flow chart, showing the flow of the trimming processing (in the step S8). When this processing begins, the program-list acquisition section 81 transmits a request to the information-providing server 2, and thereby, acquires a program list from the information-providing server 2 (in a step S12) . This processing of the step S12 may also be omitted, if it is executed immediately after the program picture-recording completion time. Because the program list has already been acquired immediately before the program picture-recording completion time (in the step S2). Thereafter, the erasure control section 71 decides whether or not an unreserved program is included within the picture-recording time of the program whose picture-recording is completed in the step S8 (in a step S13). This decision is made by comparing the newest program list which is acquired immediately before the program picture-recording completion time (in the step S2) or after the program picture-recording completion time (in the step S12) with the reservation information stored in the reservation-information memory 62. If an unreserved unnecessary program is included, the erasure control section 71 erases the unnecessary program through the erasure section 17 from the recording medium 31. Unless an unnecessary program is included (in the step S13), or if the processing of the step S14 finishes, then the processing of the step S9 is completed.

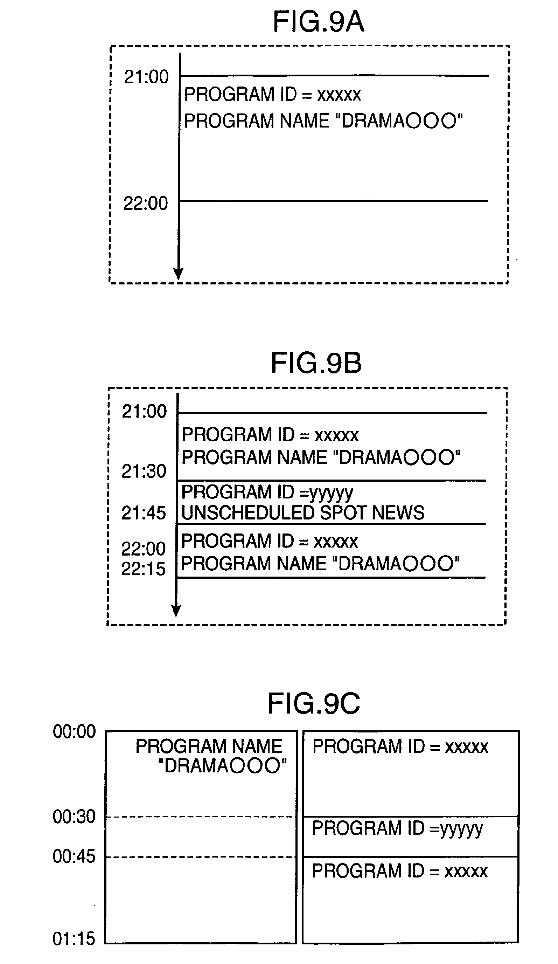

Fig. 9 is an illustration, showing an example of the operation of the trimming processing. Fig. 9(a) illustrates the contents of an initial program list which corresponds to a program whose picture is expected to be recorded. Fig. 9(b) illustrates the contents of a changed program list which corresponds to the same program. In the example of Fig. 9, in terms of a program (whose program ID = xxxxx) which is scheduled to start at 21:00 and end at 22:00, 15-minute unscheduled spot news (whose program ID = yyyyy) is inserted in the middle of the program after the program start time 21:00. Thereafter, the initially-scheduled program continues to be aired. Consequently, the initially-scheduled program is delayed for fifteen minutes and ends at 22:15. Because of this program change, in the recording medium 31, as shown in Fig. 9(c), the picture of the unreserved unnecessary program is recorded in the middle of the reserved initial program.

The erasure control section 71 compares the reservation information stored in the reservation-information memory 62 with the program list illustrated in Fig. 9(b). Thereby, it specifies the unscheduled spot news which is the unnecessary program and erases this unnecessary program from the recording medium 31. Thus, the program whose program ID = yyyyy illustrated in Fig. 9(c) is erased from the recording medium 31. Hence, the reserved initial program is picture-recorded as the one-hour continuous program in the recording medium 31 . For this trimming processing, a random-access medium such as a DVD is suitable as the recording medium 31.

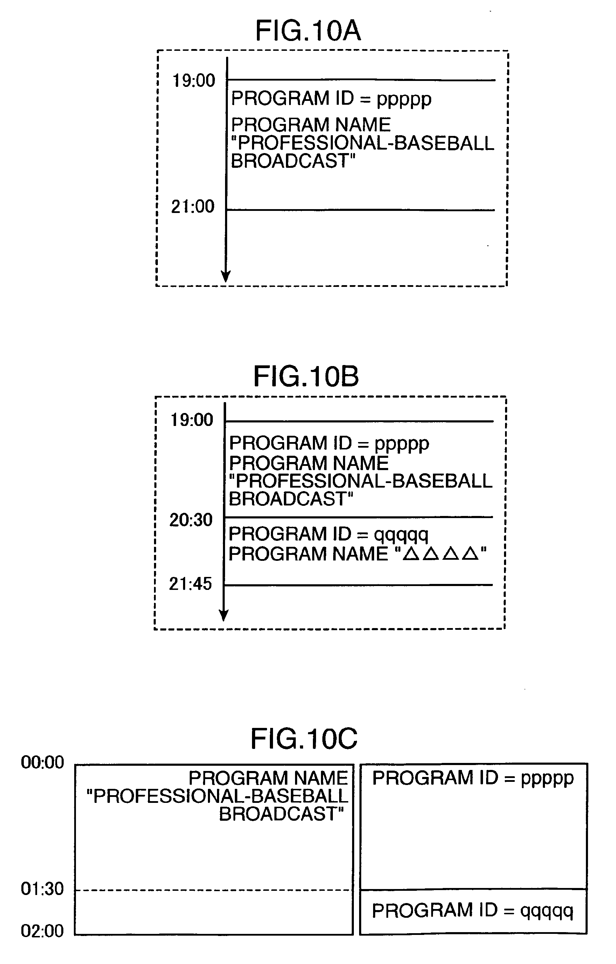

Fig. 10 is an illustration, showing another example of the operation of the trimming processing. Fig. 10(a) illustrates the contents of an initial program list which corresponds to a programwhose picture is expected to be recorded. Fig. 10(b) illustrates the contents of a changed program list which corresponds to the same program. In the example of Fig. 9, a program (whose program ID = ppppp) which is scheduled to start at 21:00 and end at 22:00 finishes at 20:30, earlier than scheduled. Thereafter, another program (whose program ID = qqqqq) is broadcast. Because of this program change, in the recording medium 31, as shown in Fig. 10(c), the reserved initial program is picture-recorded for one and a half hours. Afterward, the picture of an unreserved unnecessary program is recorded.

The erasure control section 71 compares the reservation information stored in the reservation-information memory 62 with the program list illustrated in Fig. 10(b). Thereby, it specifies the unnecessary program and erases this unnecessary program from the recording medium 31. Thus, the program whose program ID = qqqqq illustrated in Fig. 10(c) is erased from the recording medium 31. Hence, in the recording medium 31, the reserved initial program is picture-recorded as the one-and-a-half hour program which is shorter than scheduled.

As described so far, in the program reservation and picture-recording apparatus 1, a program list is acquired immediately before the picture of a reserved program begins to be recorded and immediately before it ends. Thereby, the reservation information is updated. Hence, if the program time is changed by the time shortly before the reserved program starts to be, or finishes being, picture-recorded, then a response to this change is automatically made so that the reserved program is picture-recorded. Furthermore, based on a program list, if an unreserved program is included within the recording time of a program whose recording is already completed, this unreserved program is erased from the recording medium 31. This can save a user from manually erasing an unreserved program from the recording medium 31. Moreover, in the program reservation and picture-recording apparatus, a program list is acquired by request. This helps lighten the load on the information-providing server 2 which is required to provide the program list.

Even when a program is reserved through the key 18 or the remote-control reception section 19, it is more desirable that the program-list acquisition section 81 transmit a request and acquire a program list from the information-providing server 2. The reservation-information input section 61 may extract a program ID which corresponds to a reserved program from the program list acquired at this time. Then, it stores this program ID as a part of the reservation information in the reservation-information memory 62. Thereby, the picture-recording control section 70 compares the program ID included in the reservation information and the program ID included in the program list. This makes it possible to easily specify the unnecessary program whose program ID = yyyyy illustrated in Fig. 9. Similarly, the erasure control section 71 compares the program ID included in the reservation information and the program ID included in the program list. This makes it possible to easily specify the unnecessary program whose program ID = qqqqq illustrated in Fig. 10.

In addition, if these trimming form and configuration for an unnecessary program are used, for example, in a system which continues to record the same channel, after a program is recorded, the program can be easily divided in each program unit.

Herein, in the program reservation and picture-recording apparatus 1, a program list is acquired when a program is reserved and a program ID which corresponds to the reserved program is extracted. For this purpose, a desirable configuration of the program reservation and picture-recording apparatus 1 will be described in detail in a third embodiment of the present invention. The embodiments of the present invention can be arbitrarily combined and embodied.

### [Second Embodiment]

### (The configuration of an apparatus)

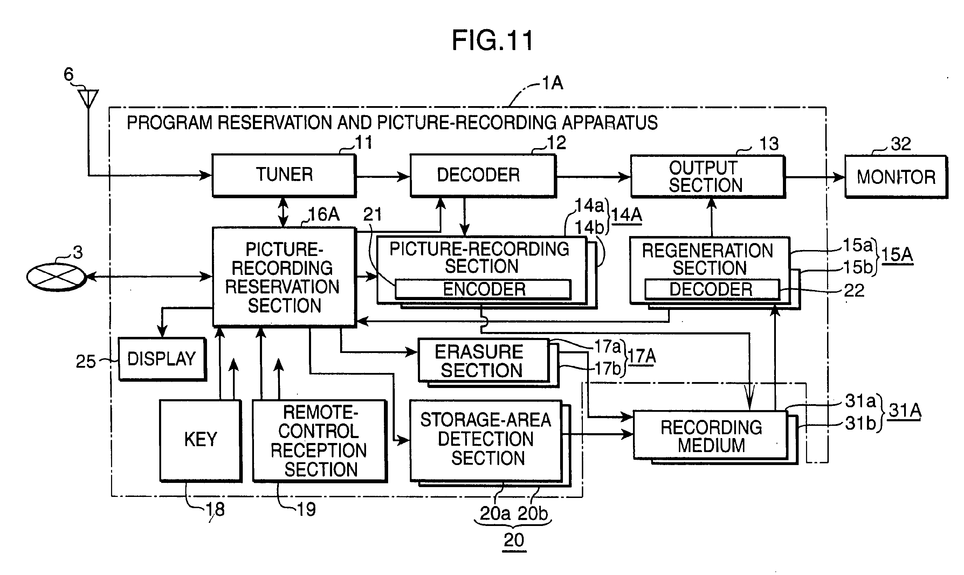

Fig. 11 is a block diagram, showing the configuration of a program reservation and picture-recording apparatus 1A according to a second embodiment of the present invention. This apparatus 1A includes two recording media 31a, 31b (referred to together as a recording medium 31A). Hence, it is configured so that a program can be recorded and regenerated individually in them. In this respect, it is different from the apparatus 1 according to the first embodiment. Therefore, in the apparatus 1A, as a picture-recording section 14A, a regeneration section 15A and an erasure section 17A, two (in general, a plurality of) picture-recording sections 14a, 14b, regeneration sections 15a, 15b and erasure sections 17a, 17b are provided so that they correspond to the two (in general, a plurality of) recording media 31a, 31b. The picture-recording section 14A, the regeneration section 15A and the erasure section 17A each have the function which corresponds to the picture-recording section 14, the regeneration section 15 and the erasure section 17 of Fig. 2, respectively.

The recording media 31a, 31b may also be of the same type as each other, or of different types. For example, the recording medium 31a may also be a hard disk in which reading and writing can be executed at a double speed or faster, while the recording medium 31b may also be a DVD. Furthermore, in the apparatus 1A, as a storage-area detection section 20, storage-area detection sections 20a, 20b are provided which detect a storable blank area inside of the recording media 31a, 31b. In the picture-recording section 14a, an encoder 21 is provided which compresses a program into a code. In the regeneration section 15A, a decoder 22 is provided which decodes a compressed-code program.

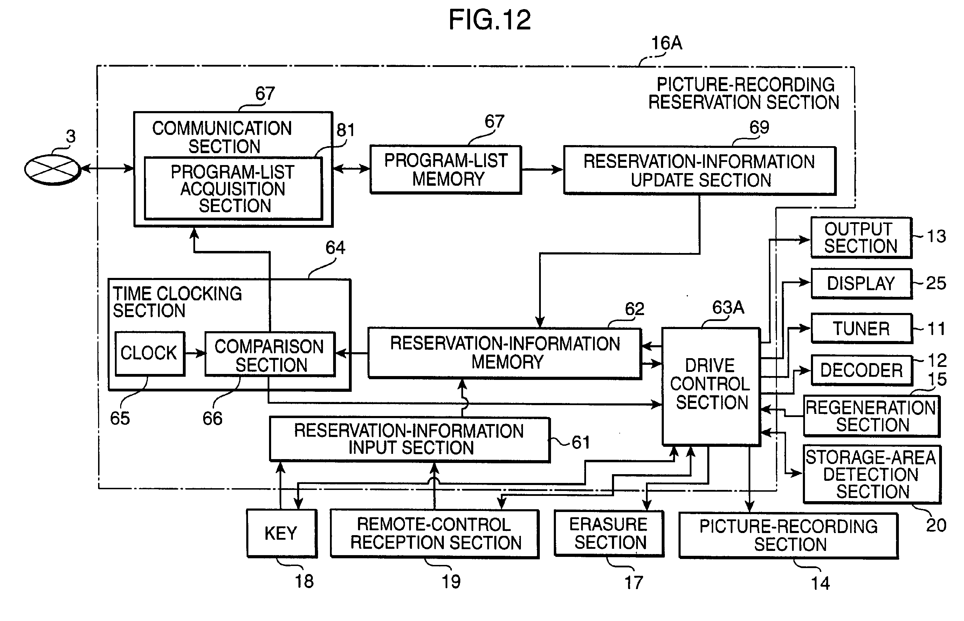

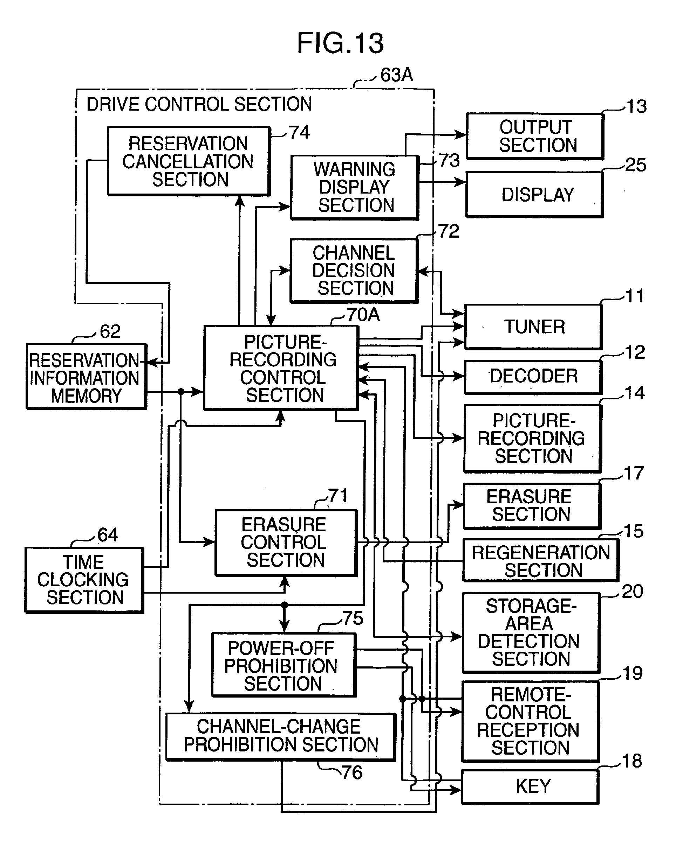

Fig. 12 is a block diagram, showing the configuration of the picture-recording reservation section 16 in the apparatus 1A. In Fig. 12, a picture-recording reservation section 16A of the apparatus 1A is different from the picture-recording reservation section 16 of the apparatus 1 (see Fig. 3), in their relations with the drive control section 63, the output section 13, the tuner 11, the storage-area detection section 20, the key 18, the remote-control reception section 19 and the reservation-information memory 62. Fig. 13 is a block diagram, showing the configuration of the drive control section 63 in the apparatus 1A. This drive control section 63A is provided with a channel decision section 72; a warning display section 73; a drive control section 74; a power-off prohibition section 75; and a channel-change prohibition section 76. This causes the picture-recording control section 70 to be replaced with a picture-recording control section 70A. In those points, it is different from the drive control section 63 of the apparatus 1 shown in Fig. 4. The characteristic functions of these apparatus elements will be suitably described in the following processing procedures.

### (Processing in which several recording media are used)

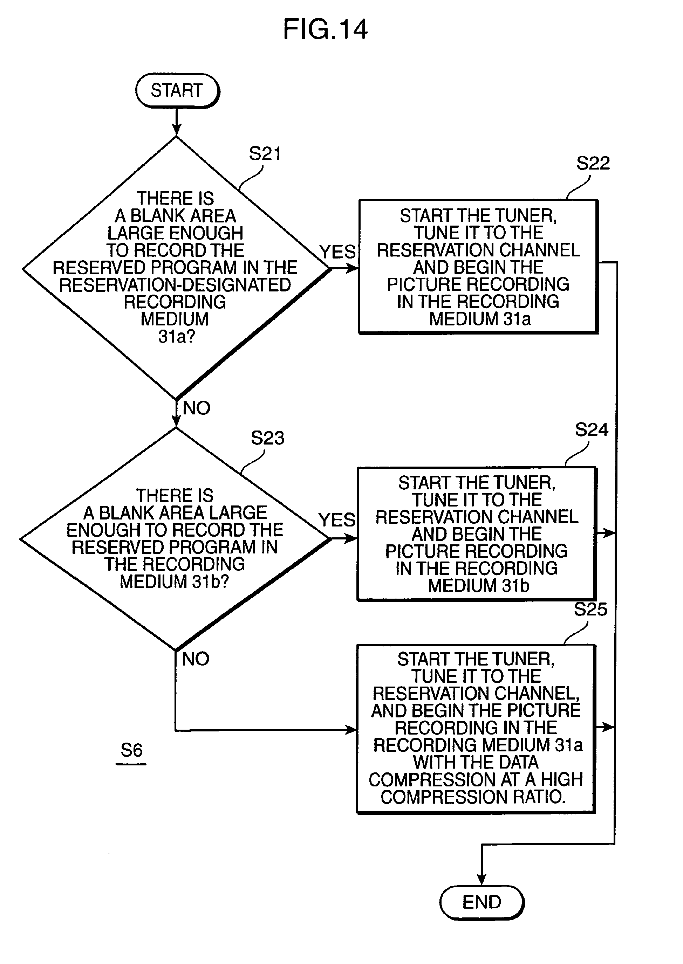

Fig. 14 is a flow chart, showing the processing of the step S6 of Fig. 5 which is one of the characteristic operations of the program reservation and picture-recording apparatus 1A. When the processing of the step S6 starts, the storage-area detection section 20 decides whether or not, in the reserved recording medium 31a, there is a blank area large enough to record the picture of a program to be picture-recorded (in a step S21). If there is a blank area large enough to record the picture, the picture-recording control section 70A activates the tuner 11. Then, it allows the tuner 11 to choose the channel of the picture-recorded program and starts a picture recording of the program through the picture-recording section 14a in the recording medium 31a (in a step S22). On the other hand, unless there is a blank area large enough to record the picture in the recording medium 31a, the storage-area detection section 20 further decides whether or not, in the recording medium 31b, there is a blank area large enough to record the picture of the program to be picture-recorded (in a step S23).

If there is a blank area large enough to record the picture in the recording medium 31b, the picture-recording control section 70A activates the tuner 11. Then, it allows the tuner 11 to choose the channel of the picture-recorded program and starts a picture recording of the program through the picture-recording section 14b in the recording medium 31b (in a step S24). On the other hand, unless there is a blank area large enough to record the picture in the recording medium 31b, the picture-recording control section 70A activates the tuner 11 and allows the tuner 11 to choose the channel of the picture-recorded program. Sequentially, it activates the encoder 21 so that the program is compressed into a code at a high compression ratio. Then, it starts to record the picture through the picture-recording section 14a in the recording medium 31a (in a step S25). If the recording starts through the processing of any of the steps S22 , S24 and S25 , the processing of the step S6 comes to an end.

If such a processing as described above is executed, a part or the whole of a program reserved by a user can be restrained from being left out without recorded because of a shortage of a blank area in the reserved recording medium 31a.

### (Processing in which a tuner-choice channel is changed)

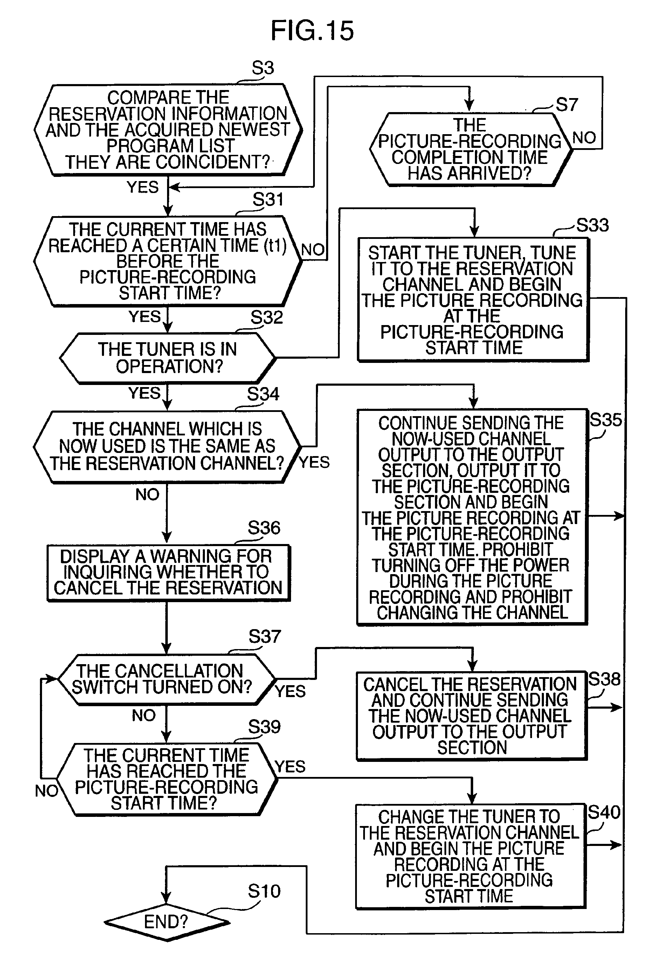

Fig. 15 is a flow chart, showing another characteristic operation of the program reservation and picture-recording apparatus 1A. The processing of steps S31 to S40 in Fig. 15 is executed instead of the steps S5 and S6 of Fig. 5. In Fig. 15, in order to clarify its relations with the steps S3, S7 and S10 of Fig. 3, these steps are shown in the same way. In a step S31 which is executed instead of the step S5, the time clocking section 64 decides whether or not the current time has reached immediately before a picture-recording start time for a program which is described in the reservation information stored in the reservation-information memory 62. Herein, immediately before the program picture-recording start time is a time ahead of the program picture-recording start time, by a time t1 enough to wait for a user to make an operation after a warning to cancel the reservation begins to be displayed in a step S36 described later. The time t1 is preset in the time clocking section 64. For example, it is a period of time approximately one minute to several minutes ahead.

The time clocking section 64 repeats the processing of the step S31 until the present time reaches immediately before the program picture-recording start time. If the present time has reached immediately before the program picture-recording start time, it notifies the picture-recording control section 70A of the fact. Then, the channel decision section 72 decides, based on an instruction from the picture-recording control section 70A, whether the tuner 11 is in operation or not (in a step S32). Unless the tuner 11 is in operation, the picture-recording control section 70A activates the tuner 11. Then, it allows the tuner 11 to choose the channel of the picture-recorded program. Sequentially, it waits to be notified from the time clocking section 64 that the present time has reached the picture-recording start time. Then, it starts a picture recording of the program through the picture-recording section 14A in the recording medium 31A (in a step S33).

On the other hand, if the tuner 11 is in operation, the channel decision section 72 further decides whether or not the tuner 11 has chosen the same channel as the channel of the program to be picture-recorded (in a step S34). If the same channel is chosen, the picture-recording control section 70A continues to send the program outputted by the tuner 11 to the output section 13. Thus, it displays it in the monitor 32 and also transmits it to the picture-recording section 14A. Sequentially, it waits to be notified from the time clocking section 64 that the present time has reached the picture-recording start time. Then, it starts a picture recording of the program through the picture-recording section 14A in the recording medium 31A (in a step S35) . At this time, the picture-recording control section 70A starts to operate the power-off prohibition section 75. Thereby, it prohibits accepting a power-off operation by the key 18 and the remote-control reception section 19. Then, it starts the channel-change prohibition section 76, so that the channel chosen by the tuner 11 is prohibited from being changed by a user.

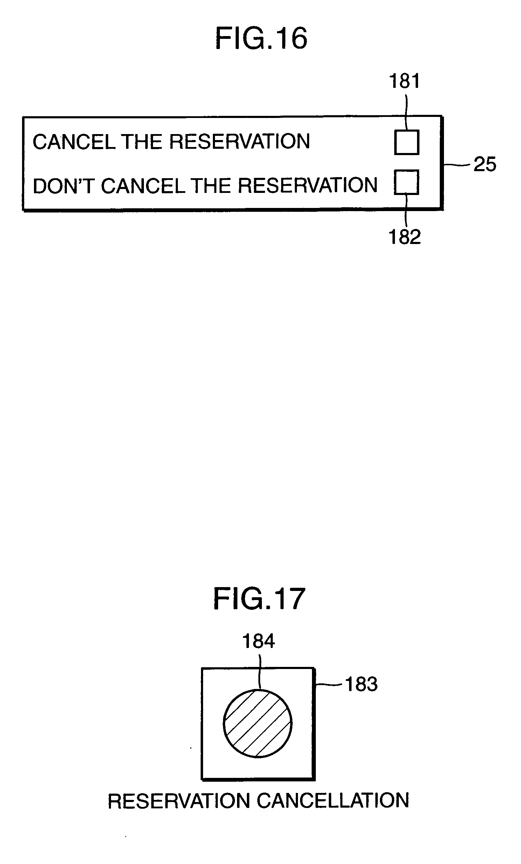

In the decision of the step S34, if a different channel is chosen, then according to an instruction from the picture-recording control section 70A, the warning display section 73 outputs, to the display 25, a signal to display a warning for inquiring whether or not the reservation should be cancelled (in a step S36). Fig. 16 is an illustration, showing a warning which is displayed in the display 25. In the display 25, a choice item for canceling a reservation and a choice item for not canceling a reservation are displayed in a menu form. In the position which corresponds to each choice item, choice keys 181, 182 are provided as a part of the key 18, respectively. If a user presses either choice key, the user can choose either of the choice items easily. This warning signal is outputted to the display 25, but instead, or it may also be outputted to the display 25 as well as the output section 13 so that it can be displayed in the monitor 32. In this case, a user operates a remote-control operation unit (not shown). Thereby, the user can choose either choice item on the screen of the monitor 32.

Fig. 17 is an illustration, showing another example of the warning which is displayed in the display 25. In this example, a lump 184 which is embedded as a part of the display 25 in a button 183 for canceling a reservation provided as a part of the key 18 flashes on and off according to a warning signal. If a user presses the reservation-cancellation button 183 within a given waiting time (which is substantially equal to the time t1), the user can choose the cancellation of a reservation easily. In the form of Fig. 17, the structure is simpler, thus presenting an advantage in that the cost of manufacturing the apparatus 1A can be cut down.

Returning to Fig. 15, if an operation is made of a cancellation switch (or an operation input section), such as the reservation-cancellation button 183 (in a step S37), then the reservation cancellation section 74 erases the reservation of the program to be picture-recorded from the reservation information stored in the reservation-information memory 62 (in a step S38) . At the same time, the picture-recording control section 70A continues to send the program outputted by the tuner 11 to the output section 13 and displays the program in the monitor 32. Unless the cancellation switch is operated (in the step S37), the picture-recording control section 70A allows the tuner 11 to choose the channel of the picture-recorded program. Then, it waits to be notified from the time clocking section 64 that the present time has reached the picture-recording start time (in the step S39). Sequentially, it starts a picture recording of the program through the picture-recording section 14A in the recording medium 31A (in a step S40). If the processing of any of the steps S33, S35, S38 and S40 is completed, the processing shifts to the step S10 (see Fig. 5).

In the above described processing, a reserved program can be prevented from being unconditionally omitted from its recording because another channel is used in the tuner 11.

### (Processing in which several tuners are used)

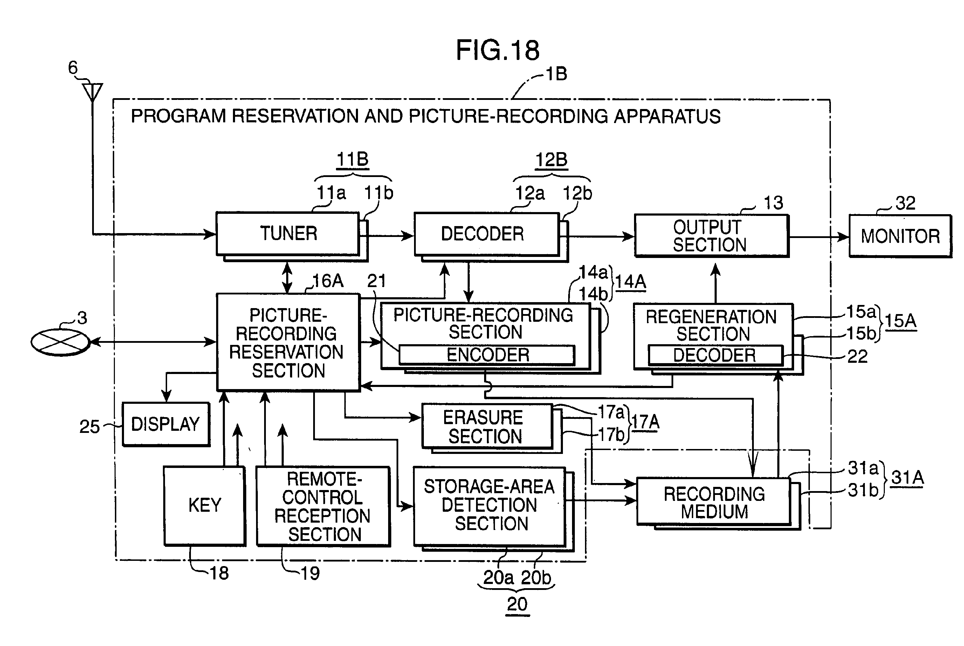

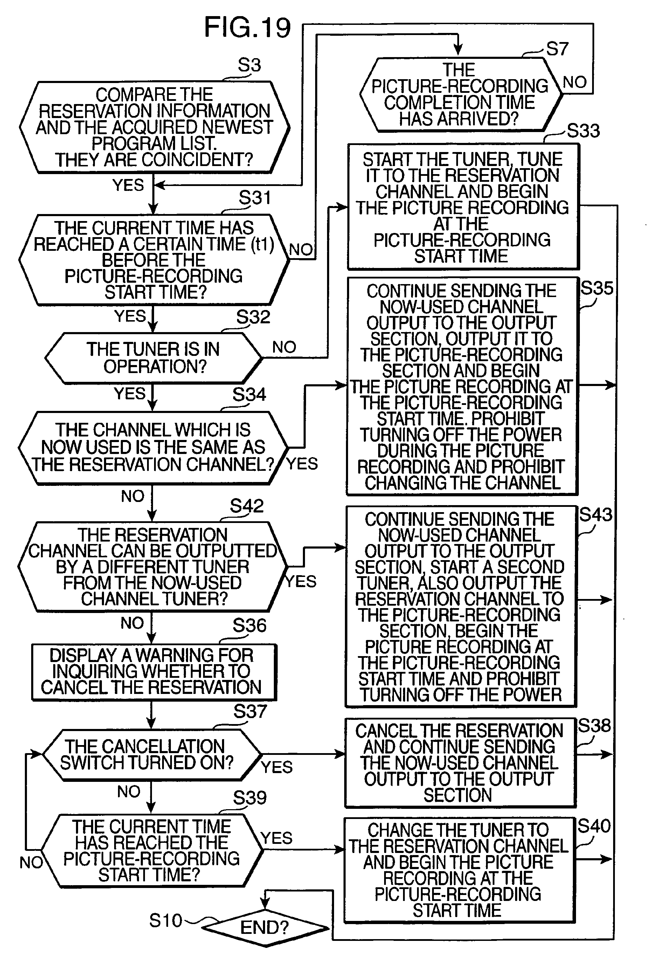

As shown in Fig. 18, the program reservation and picture-recording apparatus 1A (see Fig. 11) is provided with two tuners as the tuner 11. This helps provide a more desirable processing. Specifically, this program reservation and picture-recording apparatus 1B includes, as a tuner 11B, two (in general, a plurality of) tuners 11a, 11b. According to this, two (in general, a plurality of) decoders 12a, 12b are used as a decoder 12B. Thereby, such a processing as shown in the flow chart of Fig. 19 can be realized. The processing of steps S31 to S43 in Fig. 19 is executed instead of the steps S5 and S6 of Fig. 5. In order to clarify its relations with the steps S3 , S7 and S10 of Fig. 3, these steps are shown together in the same way as Fig. 15. Among the steps S31 to S43 in Fig. 19, the steps S31 to S40 are the same as the steps of their identical reference characters and numerals in Fig. 15. Hence, their detailed description is omitted.

In a step S32, a decision made which of the tuners 11a, 11b is in operation or not. In a step S33, either of the tuners 11a, 11b starts to operate. In a step S34, a decision made whether or not the tuner 11a or 11b in operation has chosen the same channel as the channel of the program to be picture-recorded. In a step S35, the picture-recording control section 70A continues to send the program outputted by the tuner 11a or 11b in operation to the output section 13. Thus, it displays it in the monitor 32 and also transmits it to the picture-recording section 14A.

In the decision of the step S34, if a different channel is chosen, the channel decision section 72 further decides whether not the tuner 11a (or 11b) in operation but the other tuner 11b (or 11a) can receive the program to be picture-recorded, or not (in a step S42). If the other tuner 11b (or 11a) can receive the picture-recorded program, the picture-recording control section 70 continues to send the program outputted by the tuner 11a (or 11b) in operation to the output section 13 and displays it in the monitor 32. Then, it starts the other tuner 11b (or 11a) and allows the other tuner 11b (or 11a) to choose the channel of the picture-recorded program. Thereby, it waits to be notified from the time clocking section 64 that the present time has reached the picture-recording start time. Then, it starts a picture recording of the program through the picture-recording section 14A in the recording medium 31A (in a step S43). At this time, in the same way as the step 35, the picture-recording control section 70A starts to operate the power-off prohibition section 75. Thereby, it prohibits accepting a power-off operation by the key 18 and the remote-control reception section 19. Then, it starts the channel-change prohibition section 76, so that the channel chosen by the tuners 11a, 11b is prohibited from being changed by a user.

In the decision of the step S42, unless the other tuner 11b (or 11a) can receive the program to be picture-recorded, then according to an instruction from the picture-recording control section 70, the warning display section 73 outputs, to the display 25 and/or the output section 13, a signal to display a warning to inquire whether or not the reservation should be cancelled (in a step S36). If an operation is made of a cancellation switch (or an operation input section), such as the reservation-cancellation button 183 (see Fig. 17) (in a step S37), then the reservation cancellation section 74 erases the reservation of the program to be picture-recorded from the reservation information stored in the reservation-information memory 62 (in a step S38). Unless the cancellation switch is operated (in the step S37), the picture-recording control section 70A allows the tuner 11a (or 11b) in operation to choose the channel of the picture-recorded program. Then, it waits for the picture-recording start time (in the step S39) and starts a picture recording of the program through the picture-recording section 14 in the recording medium 31A (in a step S40). If the processing of any of the steps S33, S35, S43, S38 and S40 is completed, the processing shifts to the step S10 (see Fig. 5).

In the above described processing, a reserved program can be further restrained from being left out without recorded because another channel is used in the tuner 11B.

In Fig. 19, in the case where the processing of the steps S42, S43, S36 and S37 is omitted, if the decision is made at the step S34 that a different channel is chosen, then the picture-recording control section 70 may also allow the tuner 11a (or 11b) in operation to choose the channel of the program to be picture-recorded, wait for the picture-recording start time (in the step S39) and start a picture recording of the program through the picture-recording section 14A in the recording medium 31A (in a step S40). Even in this case, a reserved program can be prevented from being unconditionally omitted from its recording because another channel is used in the tuner 11B. Besides, in this case, there is no need to wait for a user to respond to a warning display. Hence, the step S31 can be replaced by the step S5 of Fig. 5.

### (Processing in which a double-speed recording medium 31 is used)

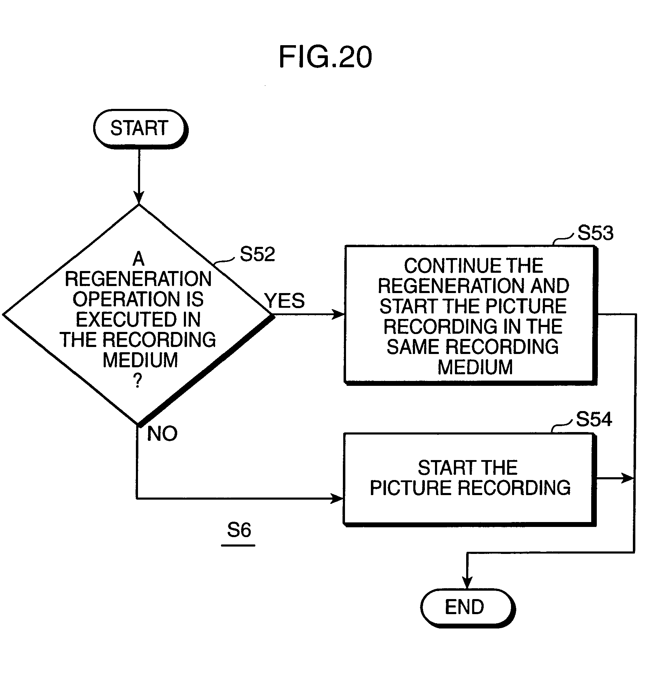

In the case of the recording medium 31A in which the reading and writing of a program can be executed at a double speed (or faster), as the step S6 of Fig. 5, such a processing as shown in the flow chart of Fig. 20 can be executed. If the processingof the step S6 in Fig. 20 starts, thepicture-recording control section 70A decides whether or not the regeneration section 15A is regenerating a program from either of the recording medium 31a and the recording medium 31b (in a step S52). If the program is being regenerated from the recording medium 31a (or 31b), then based on an instruction from the picture-recording control section 70A, the regeneration section 15A continues to regenerate the program from the same recording medium 31a (or 31b). Then, the picture-recording control section 70 starts a picture recording of a program to be reserved in the same recording medium 31a (or 31b) as the one which is now regenerating it. At this time, in the recording medium 31a, the program is read and written at a double speed or faster. At the step S32, if the decision is made that the program is not currently regenerated from either of the recording medium 31a and the recording medium 31b, the picture-recording control section 70A starts a picture recording of the program in the reserved recording medium 31a or 31b (in a step S54). If the processing of the step S53 or S54 is completed, the processing of the step S6 comes to an end.

In the above described processing, a reserved program can be prevented from being unconditionally omitted from its recording because another program is being regenerated from the recording medium 31.

Herein, the program reservation and picture-recording apparatus 1A or 1B can also be configured, as a matter of course, so that any processing of Fig. 14, Fig. 15, Fig. 19 and Fig. 20 is separately executed. For example, if only the processing of Fig. 14 is designed to be executed, there is no need to provide the channel decision section 72, the warning display section 73, the drive control section 74, the power-off prohibition section 75 and the channel-change prohibition section 76. Furthermore, if only the processing of Fig. 20 is designed to be executed by itself, then not only those sections are unnecessary, but also the apparatus does not need to apply to the plurality of recording media 31a and 31b. As a result, a single unit is enough for each of the picture-recording section 14A, the regeneration section 15A and the erasure section 17A. Moreover, if only the processing of Fig. 15 or Fig. 19 is designed to be independently executed, there is no need to apply to the plurality of recording media 31a and 31b. Thus, only one unit is necessary for each of the picture-recording section 14A, the regeneration section 15A and the erasure section 17A.

### [Third Embodiment]

### (The configuration and operation of a system)

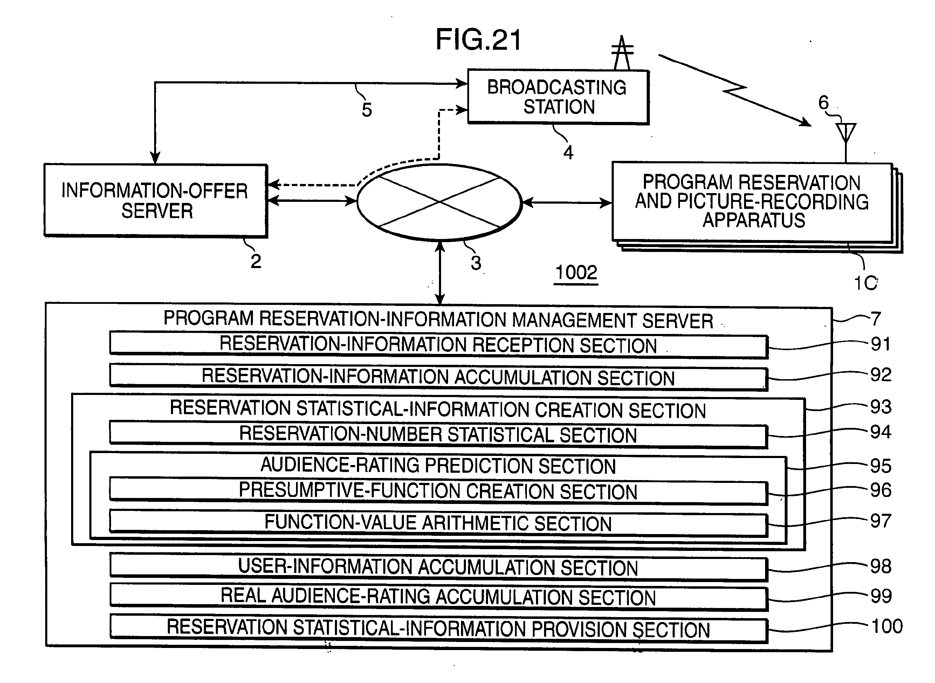

Fig. 21 is a block diagram, showing the configuration of a program reservation and picture-recording system according to a third embodiment of the present invention. This program reservation and picture-recording system 1002- includes a plurality of program reservation and picture-recording apparatuses 1C, an information-providing server 2 and a broadcasting station 4. In addition, it includes a program reservation-information management server 7. In this respect, it is different from the system 1001 according to the first embodiment. In the same way as the information-providing server 2, the program reservation-information management server 7 and the plurality of program reservation and picture-recording apparatuses 1 are connected via the general-purpose network 3. They can communicate, for example, in a communication system where an Internet-related protocol such as a TCP/IP is used.

The program reservation-information management server 7 receives reservation information from many program reservation and picture-recording apparatuses 1C. Then, it collects the reservation information it has received and creates program-reservation statistical information. In response to a request through the general-purpose network 3 from the program reservation and picture-recording apparatus 1C, it sends the program-reservation statistical information. The program reservation and picture-recording apparatus 1C refers to the program-reservation statistical information it has acquired and automatically reserves a program. Then, it acquires a program list including a program ID from the information-providing server 2 and transmits the reservation information in a program-ID contracted form to the program reservation-information management server 7.

As shown in Fig. 21, the program reservation-information management server 7 is provided with: a reservation-information reception section 91; a reservation-information accumulation section 92; a reservation statistical-information creation section 93; a user-information accumulation section 98; and a real audience-rating accumulation section 99. These apparatus elements may be formed by hardware which needs no software. However, if they are equivalently formed by a computer which operates according to a program, it is simpler and easier. The program which governs the operation of such a computer is stored in a memory, such as an ROM (or read only memory) (not shown). Thereby, the computer realizes each apparatus element equivalently. The program can be provided through transmission media which include the general-purpose network 3. It can also be provided through a recording medium such as an ROM or a CD-ROM.

The reservation-information reception section 91 is an apparatus element which receives reservation information transmitted from the program reservation and picture-recording apparatus 1C. The reservation-information accumulation section 92 is an apparatus element which accumulates the received reservation information in a memory (not shown). The reservation statistical-information creation section 93 is an apparatus element which collects the accumulated reservation information and creates program-reservation statistical information. It includes a reservation-number statistical section 94 and an audience-rating prediction section 95. The reservation-number statistical section 94 is an apparatus element which collects the accumulated reservation information and creates the number of reservations for each program, or the ranking of the number of reservations. The audience-rating prediction section 95 is an apparatus element which collects the accumulated reservation information, predicts the audience rating of each program, and as its information, creates audience-rating prediction information. It includes a presumptive-function creation section 96 and a function-value arithmetic section 97. The work of the presumptive-function creation section 96 and the function-value arithmetic section 97 will be described together in the following processing procedures.

The user-information accumulation section 98 is an apparatus element which accumulates, in a memory (not shown), user information which is transmitted from the program reservation and picture-recording apparatus 1C. The user information is information (e.g., name, birthday, gender and address) on a user who uses the program reservation and picture-recording apparatus 1C. The real audience-rating accumulation section 99 is an apparatus element which accumulates information on a real audience rating in a memory (not shown). The user information and the real audience-rating information are used for the prediction of an audience rating by the audience-rating prediction section 95. A reservation statistical-information provision section 100 is an apparatus element which sends the created program-reservation statistical information to a client such as the program reservation and picture-recording apparatus 1C, in response to a request.

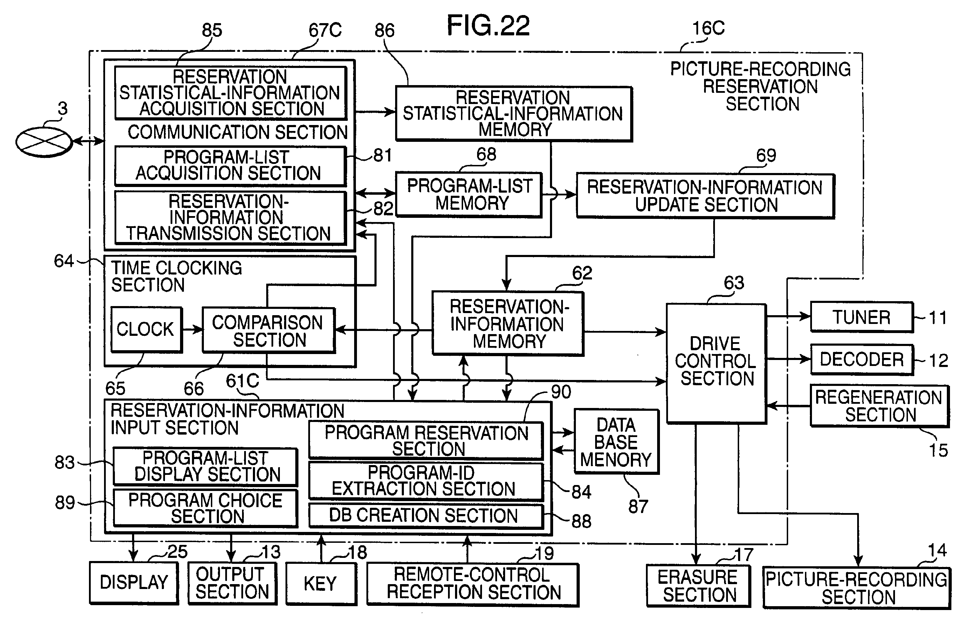

The configuration of the program reservation and picture-recording apparatus 1C is the same as Fig. 2, and thus, its figure is omitted. Fig. 22 is a block diagram, showing the configuration of a picture-recording reservation section 16C in the program reservation and picture-recording apparatus 1C. This picture-recording reservation section 16C is different from the picture-recording reservation section 16 (see Fig. 3) of the program reservation and picture-recording apparatus 1, in the following points. It includes a reservation statistical-information memory 86 and a database memory 87. The communication section 67 is replaced with a communication section 67C which includes a reservation-information transmission section 82 and a reservation statistical-information acquisition section 85. Then, the reservation-information input section 61 is replaced with a reservation-information input section 61C which includes a program-list display section 83, a program-ID extraction section 84, a program choice section 89, a database (or DB) creation section 88, and a program reservation section 90.

The reservation-information transmission section 82 is an apparatus element which transmits, to the program reservation-information management server 7, reservation information inputted through the reservation-information input section 61C by a user. The reservation statistical-information acquisition section 85 is an apparatus element which transmits a request to the program reservation-information management server 7, and in reply, receives program-reservation statistical information. The reservation statistical-information memory 86 is an apparatus element which stores the received program-reservation statistical information.

The program-list display section 83 is an apparatus element which outputs, to the display 25 or the output section 13, a signal to display a program list stored in the program-list memory 68. The program-ID extraction section 84 is an apparatus element which extracts the program ID that corresponds to a program reserved through the reservation-information input section 61C from the program list stored in the program-list memory 68. The program choice section 89 is an apparatus element which accepts a choice operation chosen by a user from a displayed program list. It chooses, from the program list, a program which is given by a user's instruction when the user operates the key 18 or the like, as the program whose picture-recording should be reserved. The database creation section 88 is an apparatus element which finds a user's inclinations for a program reservation to date and accumulates them as the database in a memory (not shown). What programs a user inclines to reserve can be obtained by colleting reservation information which is created in the reservation-information input section 61C on the basis of the programs reserved up until now by the user. The program reservation section 90 is an apparatus element which refers to the program-reservation statistical information stored in the reservation statistical-information memory 86 and reserves a program automatically.

### (Processing by a system)

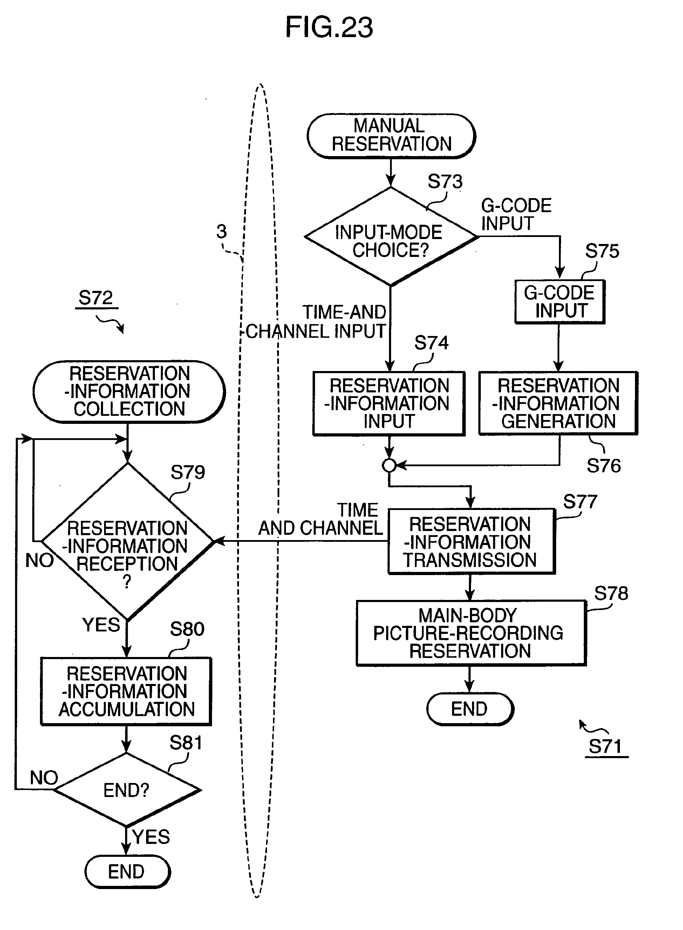

Fig. 23 to Fig. 26 are each a flow chart, showing a processing in the system 1002. The system 1002 is configured to execute any processing of Fig. 23 to Fig. 26, based on a user's choice in the program reservation and picture-recording apparatus 1C. Fig. 23 shows an example of the processing which is executed when a user chooses a manual reservation. In the processing (in a step S71) on the side of the program reservation and picture-recording apparatus 1C, a user operates the key 18 or the like to request a manual reservation. Then, the user chooses either a time-and-channel input mode or a G-code (which may generally be some appointed identifier for identifying a program) input mode (in a step S73). This choice enables either of the input of reservation information (in a step S74) and the input of a G-code (in a step S75).

The G-code is a program identifier developed by Gemstar Co. It is expressed in figures from a minimum one-digit number to a maximum eight-digit number by compressing into a code, a channel number, a time (including a date) when a program is scheduled to start broadcasting, and the length of a program, which are required for a program reservation. Therefore, on the basis of such a G-code, a program's channel number and the program's broadcast-start schedule time and broadcast-end schedule time can be specified.

In the step S74, a user operates the key 18 or the like and inputs the channel of a program to be reserved, a picture-recording start time, a picture-recording completion time, or the like. Then, the reservation-information input section 61C creates reservation information which indicates the contents of a reservation. In the step S75, a user operates the key 18 or the like and inputs the G-code which corresponds to the program to be reserved. Then, based upon the G-code, the reservation-information input section 61C creates reservation information which indicates the reservation contents (in a step S76).

Thereafter, the reservation-information transmission section 82 transmits the created reservation information to the program reservation-information management server 7 (in a step S77). At the same time, the reservation-information input section 61C stores the reservation information it has created in the reservation-information memory 62 (in a step S78). Thereby, the user's manual program reservation is completed (in the step S71).

On the other hand, on the side of the program reservation-information management server 7, a processing for collecting the reservation information is executed (in a step S72). In this processing, the reservation-information reception section 91 is on standby until the reservation information is transmitted from any program reservation and picture-recording apparatus 1C. It receives the reservation information when it is transmitted (in the step S79). Sequentially, the reservation-information accumulation section 92 accumulates the received reservation information in a memory (not shown)(in the step S80). Thereafter, the processing returns to the step S79, except for the case where the reservation-information collection processing (in the step S72) should be terminated, such as the time when the program reservation-information management server 7 itself should be closed (in a step S81). The accumulated reservation information is used, as described later, as material for the reservation statistical-information creation section 93 creating reservation statistical information.

In the above described processing, the program reservation and picture-recording apparatus 1C can automatically contribute toward creating program statistical information. Besides, on the side of the program reservation-information management server 7, reservation information which is transmitted from each program reservation and picture-recording apparatus 1C is collected, so that program-reservation statistical information can be created and supplied.

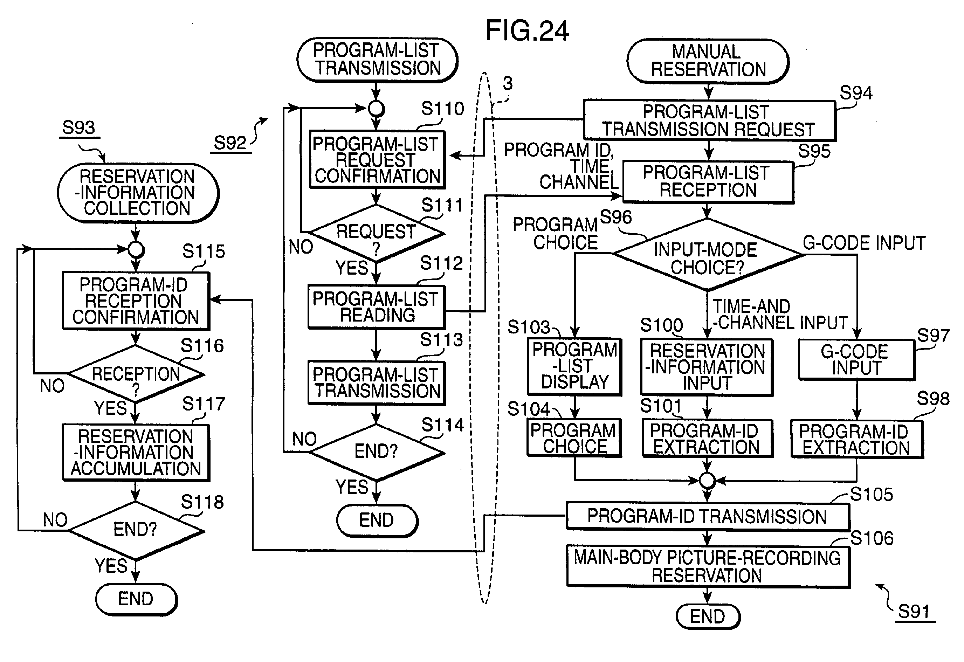

Fig. 24 shows another example of the processing which is executed when a user chooses a manual reservation. In the processing (in a step S91) on the side of the program reservation and picture-recording apparatus 1C, a user operates the key 18 or the like to request a manual reservation. First, the program-list acquisition section 81 transmits, to the information-providing server 2, a request to send a program list (in a step S94). On the other hand, on the side of the information-providing server 2, a processing for transmitting the program list is executed (in a step S92). In this processing, the information-providing server 2 confirms whether or not there is a request to transmit the program list (in a step S110). The step S110 is repeated until a request for the transmission it is made (in a step S111). If the transmission request is made (in the step S111), the information-providing server 2 reads the program list stored in a memory (not shown) (in a step S112). In reply, it sends this program list to the program reservation and picture-recording apparatus 1C which has transmitted the request (in a step S113). The program list includes a program ID. Thereafter, the information-providing server 2 moves the processing back to the step S110, except for the case where the program-list transmission processing (in the step S92) should be terminated, such as the time when the information-providing server 2 itself should be shut down (in a step S114). Herein, the configuration of the information-providing server 2 and its processing will be described in detail in a fifth embodiment of the present invention.

On the side of the program reservation and picture-recording apparatus 1C (in the step S91), the program-list acquisition section 81 receives the program list which has been sent in reply. Then, it allows the program-list memory 68 to store it (in a step S95). A user operates the key 18 or the like and chooses any of a program choice mod, a time-and-channel input mode and a G-code (which may generally be some appointed identifier for identifying a program) input mode (in the step S95). This choice enables any of the display of a program list (in a step S103), a processing for inputting reservation information (in a step S100) and the input of a G-code (in a step S97).

In the step S103, the program-list display section 83 outputs a signal to display the acquired program list to the display 25 or the output section 13. Thereafter, the program choice section 89 accepts a choice operation which is chosen by the user from the displayed program list (in a step S104). Specifically, the program choice section 89 chooses, from the program list, the program which has been given by the user's instruction when the user operates the key 18 or the like, as the program whose picture-recording should be reserved. Thereby, it creates reservation information. The program list includes a program ID, and thus, the created reservation information also includes the program ID.

In the step S100, the user operates the key 18 or the like and inputs the channel of a program to be reserved, a program-recording start time, a program-recording completion time, or the like. Then, the reservation-information input section 61 creates reservation information which indicates the contents of a reservation. Thereafter, the program-ID extraction section 84 extracts the program ID that corresponds to a reserved program from the program list stored in the program-list memory 68. Then, it adds it to a part of the reservation information (in a step S101).

In the step S97, the user operates the key 18 or the like and inputs the G-code which corresponds to the program to be reserved. Then, the reservation-information input section 61C creates reservation information which indicates the reservation contents based upon this G-code. Thereafter, the program-ID extraction section 84 extracts the program ID that corresponds to the reserved program from the program list stored in the program-list memory 68. Then, it adds it to a part of the reservation information (in a step S98).

Thereafter, the reservation-information transmission section 82 transmits the created reservation information in a program-ID contracted form to the program reservation-information management server 7 (in a step S105). Simultaneously, the reservation-information input section 61C stores the reservation information it has created in the reservation-information memory 62 (in a step S106). Thereby, the user's manual program reservation is completed (in the step S91).

On the other hand, on the side of the program reservation-information management server 7, a processing for collecting the reservation information is executed (in a step S93). In this processing, the reservation-information reception section 91 is waiting for any program reservation and picture-recording apparatus 1C to transmit the program ID. It receives it if transmitted (in steps S115 and S116). If the program ID is received, the reservation-information accumulation section 92 accumulates, in a memory (not shown), as the reservation information, the program-reservation contents (such as a program channel, a program picture-recording start time, a program picture-recording completion time) which corresponds to the received program ID (in a step S117). Thereafter, the processing returns to the step S79, except for the case where the reservation-information collection processing (in the step S93) should be terminated, such as the time when the program reservation-information management server 7 itself should be closed (in a step S118).

As described above, in the processing of Fig. 24, reservation information is transmitted in a program-ID contracted form. This helps lessen the quantity of a signal to be transmitted and reduce transmission costs. It also helps lighten the load on the program reservation-information management server 7 when it receives the signal. Furthermore, a user can view a program list on display and easily choose a program to be reserved.

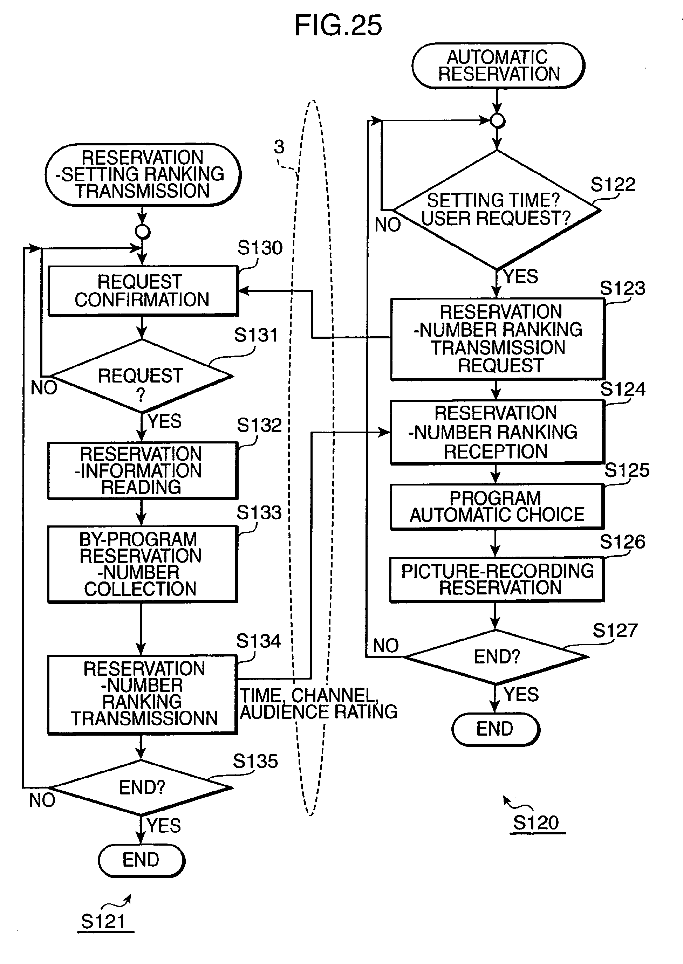

Fig. 25 shows an example of the processing which is executed when a user chooses an automatic reservation. In the processing (in a step S120) on the side of the program reservation and picture-recording apparatus 1C, a user operates the key 18 or the like and makes a request for an automatic reservation. When a preset time comes, or when the user makes the request through the operation of the key 18 or the like (in a step S122), the reservation statistical-information acquisition section 85 requests the program reservation-information management server 7 to transmit the ranking of the number of reservations as reservation statistical information (in a step S123). The arrival at the preset time is detected by a notice from the time clocking section 64.

On the other hand, on the side of the program reservation-information management server 7, a processing for transmitting the reservation-number ranking is executed (in a step S121). In this processing, the reservation-information reception section 91 is waiting for any program reservation and picture-recording apparatus 1C to make a request to transmit the reservation-number ranking. It receives a transmission request if it is made (in steps S130 and S131). If the transmission request is received, the reservation-number statistical section 94 reads the reservation information which is accumulated in a memory (not shown) by the reservation-information accumulation section 92 (in a step S132). Next, the reservation-number statistical section 94 collects the number of reservations for each program and creates the ranking of the number of reservations (in a step S133). Sequentially, in reply, the reservation statistical-information provision section 100 sends the created reservation-number ranking to the program reservation and picture-recording apparatus 1C which has made the transmission request (in a step S134). Thereafter, the processing returns to the step S130, except for the case where the reservation-number ranking transmission processing (in the step S121) should be terminated, such as the time when the program reservation-information management server 7 itself should be closed (in a step S135).

On the side of the program reservation and picture-recording apparatus 1C (in the step S120), the reservation statistical-information acquisition section 85 receives the reservation-number ranking which has been sent in reply. Then, it allows the reservation statistical-information memory 86 to store the reservation-number ranking (in the step S123). Next, the program reservation section 90 refers to the reservation-number ranking stored in the reservation statistical-information memory 86 and chooses the program to be reserved (in a step S125). Then, it creates reservation information which indicates its reservation contents and stores the reservation information in the reservation-information memory 62 (in a step S126). Thereby, the automatic reservation for the program with reference to the ranking of the number of reservations is completed. Thereafter, the processing returns to the step S122, except for the case where the automatic-reservation processing (in the step S120) should be terminated, such as the time when the user operates the key 18 or the like and cancels the function of making the automatic reservation (in a step S127).

In order to refer to the ranking of the number of reservations and choose a program to be reserved, for example, a number of programs of the highest rank may be chosen. More desirably, a reserved program should be chosen, also by referring to a user's tendency to program reservations which is created by the database creation section 88 and is accumulated in a memory (not shown). Such a database on a user's tendency can include, for example, a preference for dramas, sports programs, a broadcast of specific professional-baseball cards, or the like. Furthermore, taking into account not only a user's inclinations but also the storage capacity of a blank area in the recording medium 31, a reservation may also be automatically made. Herein, the program reservation-information management server 7 may also provide, as the program-reservation statistical information, the number of reservations itself, instead of the reservation-number ranking. For example, an automatic choice can be made, like choosing several programs with the greatest number of reservations. This is equivalent to the reservation-number ranking.

As described above, in the processing of Fig. 25, the program is reserved by referring to the acquired reservation-number ranking. Therefore, a reservation can be automatically made which reflects a wide range of users' inclinations for a program. Moreover, the program reservation and picture-recording apparatus 1C acquires a reservation-number ranking based on a request. This helps lighten the load on the program reservation-information management server 7 which is imposed when a reservation-number ranking is provided.

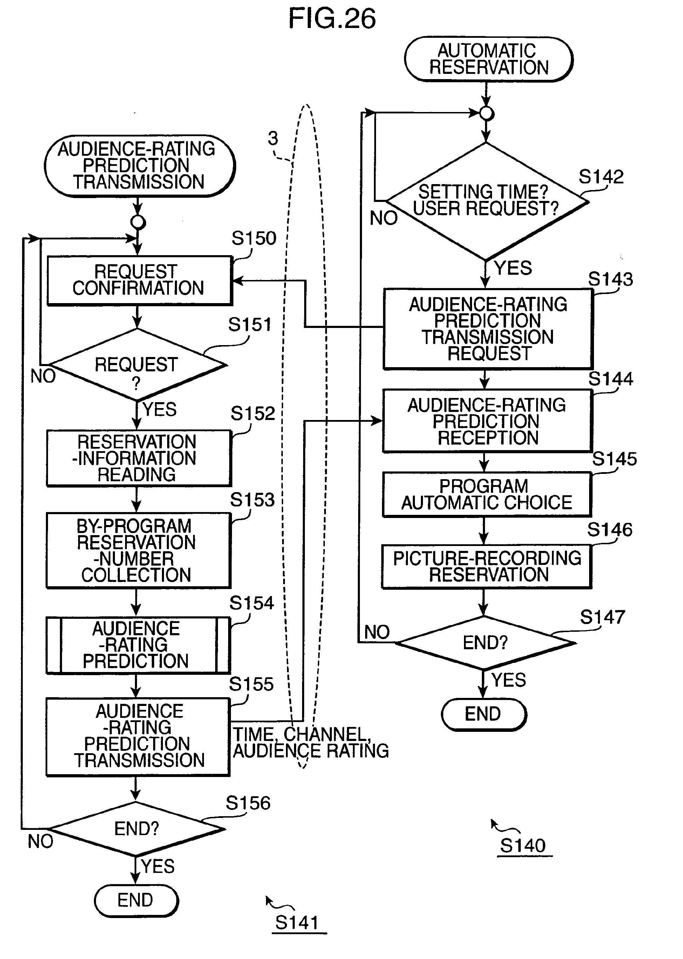

Fig. 26 shows another example of the processing which is executed when a user chooses an automatic reservation. In the processing (in a step S140) on the side of the program reservation and picture-recording apparatus 1C, a user operates the key 18 or the like and makes a request for an automatic reservation. When a preset time comes, or when the user makes the request through the operation of the key 18 or the like (in a step S142), the reservation statistical-information acquisition section 85 requests the program reservation-information management server 7 to transmit audience-rating prediction information as reservation statistical information (in a step S143).

On the other hand, on the side of the program reservation-information management server 7, a processing for transmitting the audience-rating prediction information is executed (in a step S141). In this processing, the reservation-information reception section 91 is waiting for any program reservation and picture-recording apparatus 1C to make a request to transmit audience-rating prediction information. It receives a transmission request if it is made (in steps S150 and S151). If the transmission request is received, the audience-rating prediction section 95 reads the reservation information which is accumulated in a memory (not shown) by the reservation-information accumulation section 92 (in a step S152). Next, the audience-rating prediction section 95 collects the number of reservations for each program (in a step S153) and creates audience-rating prediction information (in a step S154). Sequentially, in reply, the reservation statistical-information provision section 100 sends the created audience-rating prediction information to the program reservation and picture-recording apparatus 1C which has made the transmission request (in a step S155). Thereafter, the processing returns to the step S150, except for the case where the transmission processing for audience-rating prediction information (in the step S141) should be terminated, such as the time when the program reservation-information management server 7 itself should be closed (in a step S156).

On the side of the program reservation and picture-recording apparatus 1C (in the step S140), the reservation statistical-information acquisition section 85 receives the audience-rating prediction information which has been sent in reply. Then, it allows the reservation statistical-information memory 86 to store this audience-rating prediction information (in the step S144). Next, the program reservation section 90 refers to the audience-rating prediction information stored in the reservation statistical-information memory 86 and chooses the program to be reserved (in a step S145). Then, it creates reservation information which indicates its reservation contents and stores the reservation information in the reservation-information memory 62 (in a step S146). Thereby, the automatic reservation for the program with reference to the predicted audience rating is completed. Thereafter, the processing returns to the step S142, except for the case where the automatic-reservation processing (in the step S140) should be terminated, such as the time when the user operates the key 18 or the like and cancels the function of making the automatic reservation (in a step S127).

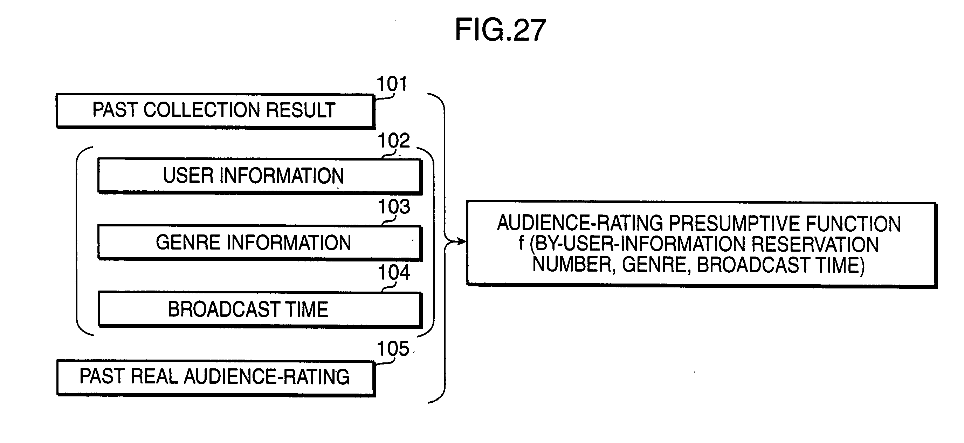

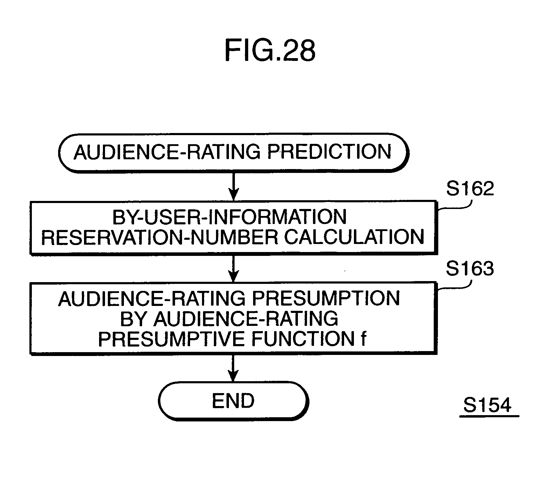

Fig. 27 and Fig. 28 are each an illustration, showing a procedure for a processing which is executed by the audience-rating prediction section 95. The processing of Fig. 27 is executed by the presumptive-function creation section 96. The processing of Fig. 28 is executed by the function-value arithmetic section 97. As shown in Fig. 27, the presumptive-function creation section 96 refers to the relation between a past collection result 101 and a past real audience-rating 105 in the reservation information which is accumulated in a memory (not shown) by the reservation-information accumulation section 92. Thereby, it creates an audience-rating presumptive function f. The presumptive-function creation section 96 assorts the past collection result 101 according to user information 102, program-genre information 103, or a program broadcast time 104. Then, it creates the presumptive function f as a function whose variables are the number of reservations for each piece of user information, the genre of a program, and a broadcast time. The user information is accumulated in a memory (not shown) by the user-information accumulation section 98.

As shown in Fig. 28, if the processing for creating audience-rating prediction information (in a step S154) starts, the function-value arithmetic section 97 counts the number of reservations for each piece of user information from the reservation information which is read from the memory in the step S152 (in a step S162). Next, the function-value arithmetic section 97 substitutes, for the audience-rating presumptive function f created by the function creation section 96, the number of reservations for each piece of user information, the genre of a program and a broadcast time. Thereby, it creates audience-rating prediction information (in a step S163). This brings the processing of the step S154 to an end. The creation of the presumptive function f by the function creation section 96 shown in Fig. 27 may also be executed beforehand at any appropriate time, without waiting for a request to transmit audience-rating prediction information. Every time a request is made to transmit audience-rating prediction information, it may also be executed, for example, in the step S163.

In order to refer to the audience-rating prediction information and choose a program to be reserved, for example, a number of programs with the highest audience rating may be chosen. In the same way as the case where the reservation-number ranking is referred to, more desirably, a reserved program should be chosen by referring to a user's tendency toward program reservations. Such a database on a user's tendency can include, for example, a preference for dramas, sports programs, a broadcast of specific professional-baseball cards, or the like. Furthermore, taking into account not only a user's inclinations but also the storage capacity of a blank area in the recording medium 31, a reservation may also be automatically made.

As described above, in the processing of Fig. 26 to Fig. 28, the program is reserved by referring to the acquired audience-rating prediction information. Therefore, an automatic reservation for a program can be made which reflects the height of a predicted audience rating. In addition, audience-rating prediction information is created by referring to the relation between a collection result of reservation information in the past and a real audience rating, as well as taking into account the program genre of reservation information or the like. This makes it possible to relatively easily obtain highly-reliable audience-rating prediction information. Moreover, the program reservation and picture-recording apparatus 1C acquires audience-rating prediction information based on a request. This helps lighten the load on the program reservation-information management server 7 which is imposed when audience-rating prediction information is provided.

### [Fourth Embodiment]

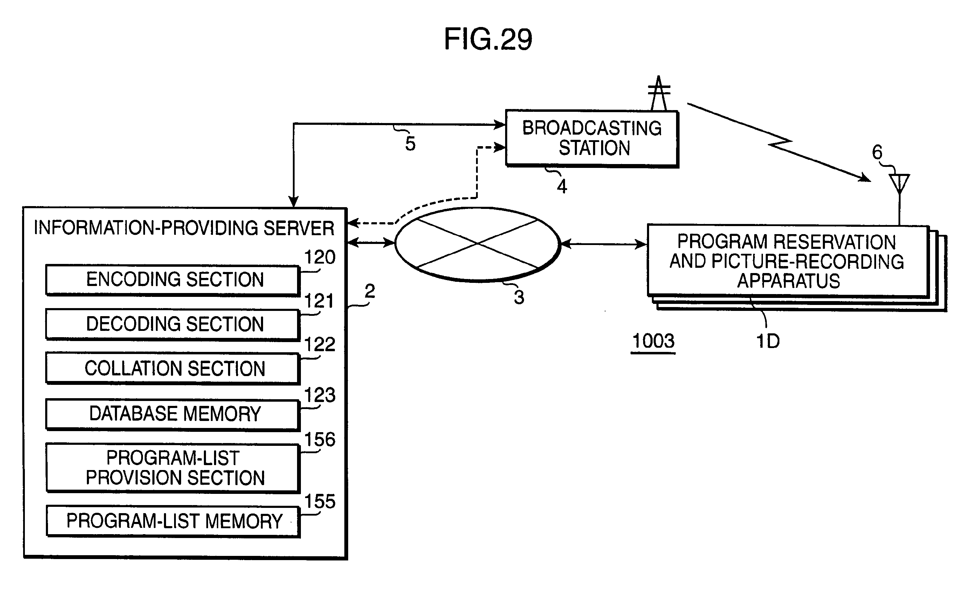

Fig. 29 is a block diagram, showing the configuration of a program reservation and picture-recording system according to a fourth embodiment of the present invention. This program reservation and picture-recording system 1003 is configured so that the information-providing server 2 executes authentication using an apparatus identifier (or apparatus ID) which is sent from a program reservation and picture-recording apparatus 1D. The apparatus 1D is a code for identifying each program reservation and picture-recording apparatus 1D. It is a peculiar code which is given to each program reservation and picture-recording apparatus 1D. As shown in Fig. 29, the information-providing server 2 includes: an encoding section 120; a decoding section 121; a collation section 122; a database memory 123; a program-list provision section 156; and a program-list memory 155. The program-list provision section 156 is a memory which stores a program list that is provided to the program reservation and picture-recording apparatus ID. The program-list provision section 156 is an apparatus element which reads a program list stored in the program-list memory 155 in response to a transmission request from the program reservation and picture-recording apparatus 1D. In reply, it sends this program list to the program reservation and picture-recording apparatus 1D which has requested the program list. The functions of the other apparatus elements will be described together in the following processing procedures. In addition, the creation and provision of a program list will be described in detail in a fifth embodiment of the present invention.

The apparatus elements of the information-providing server 2 may be formed by hardware which needs no software. However, except for the database memory 123 and the program-list memory 155, if they are equivalently formed by a computer which operates according to a program, they are simpler and easier. The program which governs the operation of such a computer is stored in a memory, such as an ROM (or read only memory) (not shown). Thereby, the computer realizes each apparatus element equivalently. The program can be provided through transmission media which include the general-purpose network 3. It can also be provided through a recording medium such as an ROM or a CD-ROM.

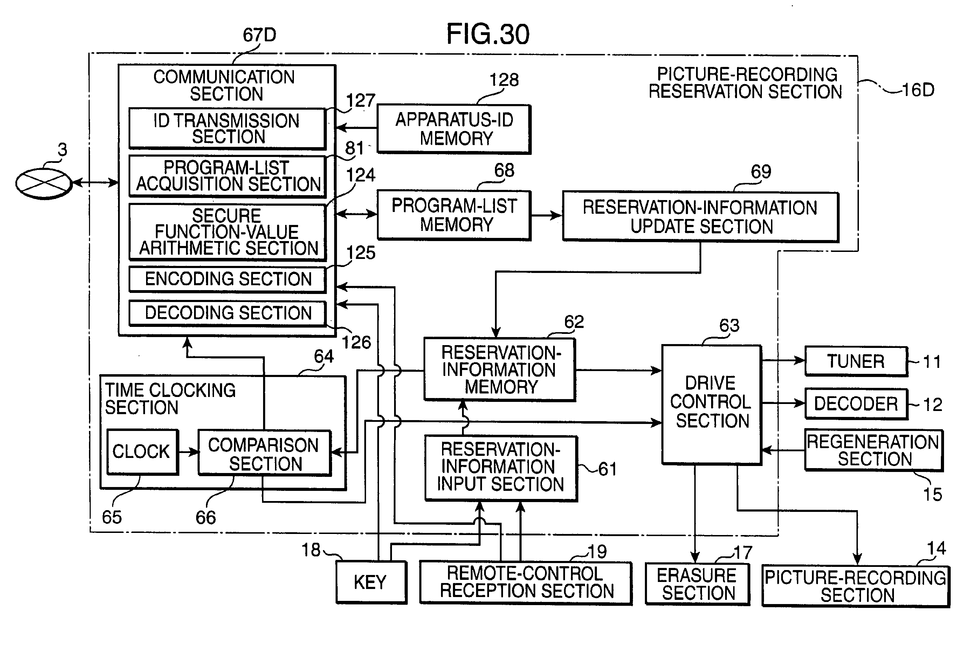

The configuration of the program reservation and picture-recording apparatus 1D is the same as Fig. 2, and thus, its figure is omitted. Fig. 30 is a block diagram, showing the configuration of a picture-recording reservation section 16D in the program reservation and picture-recording apparatus ID. This picture-recording reservation section 16D is different from the picture-recording reservation section 16 (see Fig. 3) of the program reservation and picture-recording apparatus 1, in the following points. It includes an apparatus-ID memory 128, and the communication section 67 is replaced with a communication section 67D which includes a secure function-value arithmetic section 124, an encoding section 125, a decoding section 126 and an ID transmission section 127. The apparatus-ID memory 128 is a memory which stores an apparatus 1D that is a code peculiar to the program reservation and picture-recording apparatus 1D including itself. The characteristic functions of the other apparatus elements will be described together in the following processing procedures.

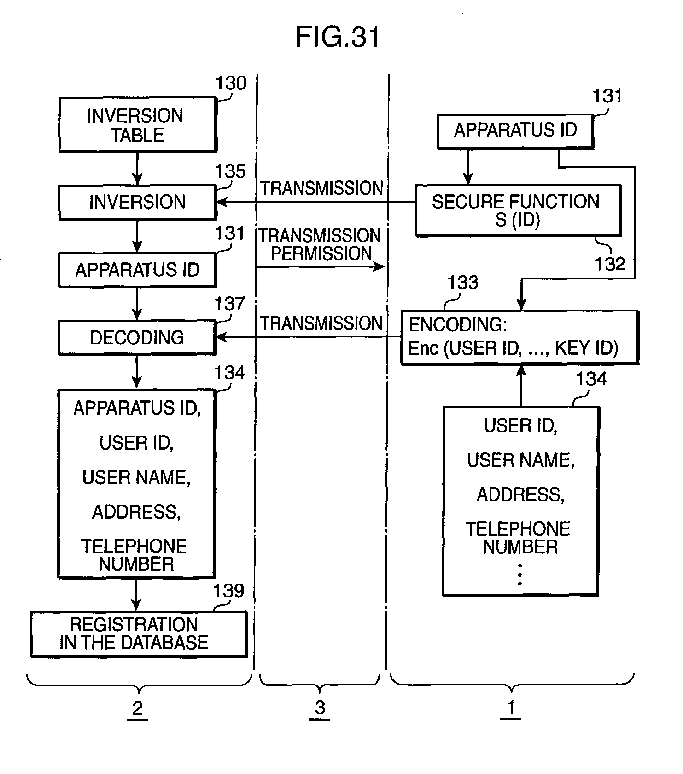

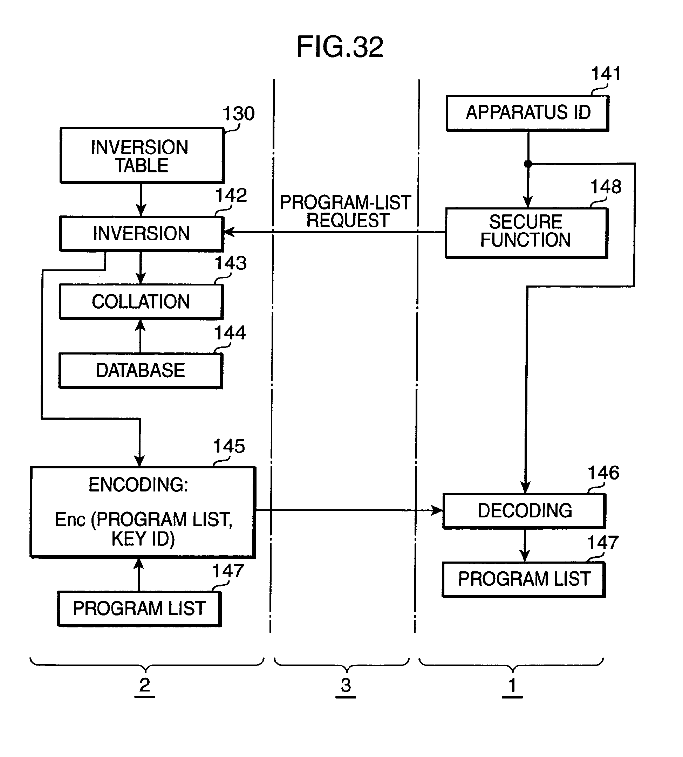

Fig. 31 and Fig. 32 are each an illustration, showing the processing of the program reservation and picture-recording apparatus 1D and the information-providing server 2, mainly along the flow of data. Hence, in Fig. 31 and Fig. 32, each element represents data or the contents of a processing.

First, the processing of Fig. 31 will be described. On the side of the program reservation and picture-recording apparatus 1D, the secure function-value arithmetic section 81 reads an apparatus ID 131 which is stored in the apparatus-ID memory 128. Then, it creates a secure function S(ID) 132. The secure function 132 is a one-way function which is composed so that its variable ID is difficult to obtain as an inverse function. Thus, even if another person intercepts a transmission signal, it is hard to regenerate the variable ID. As this secure function, preferably, a secure-hash function should be used which simultaneously has such a hash-function characteristic as the fact that function values differ largely even if variables approximate to each other. This makes it impossible to reproduce the apparatus ID as the original text from a function value (i.e., a hash value). Hence, it is extremely difficult to create different pieces of data which have the same hash value. Such a secure-hash function is already applied to assistance in encoding a communication, the authentication of a user, a digital signature, or the like. Next, the ID transmission section 127 transmits the secure function 132 to the information-providing server 2.

On the side of the information-providing server 2, the decoding section 121 inverts the secure function 132 it has received (in a processing 135). Thereby, it regenerates the apparatus ID 131 and registers it in the database memory 123. In the information-providing server 2, the apparatus ID of the program reservation and picture-recording apparatus 1D which has been shipped and information after an inversion by its secure function are stored in advance as an inversion table 130 in the database memory 123. Using the inversion table 130, the decoding section 121 extracts the apparatus ID 131 which is the original text of the secure function 132. Thereby, the information-providing server 2 can automatically authenticate whether or not service can be provided to the program reservation and picture-recording apparatus 1D. In sum, the information-providing server 2 realizes both an authentication processing and a secure information-transfer function.

Thereafter, the information-providing server 2 transmits transmission permission to the program reservation and picture-recording apparatus 1D. If the communication section 67D of the program reservation and picture-recording apparatus 1D receives this, the encoding section 125 reads user information (such as a user's identifier, name, address, telephone number) 134 which is stored in a memory (not shown). Using the apparatus ID 131 as a key, it encodes this user information 134. Next, the ID transmission section 127 transmits user information 133 which is obtained by this encoding to the information-providing server 2.

On the side of the information-providing server 2, the decoding section 121 executes a decoding processing 137 for the user information 133 it has received, using the apparatus ID 131 which is already received. Thereby, it regenerates the user information 134. The decoding section 121 registers this user information 134 in the database memory 123 (in a processing 139). In this way, the information-providing server 2 can accumulate the apparatus ID 131 and the user information 134 in the database memory 123, without leaking them to another person.

Next, the processing of Fig. 32 will be described. On the side of the program reservation and picture-recording apparatus 1D, the secure function-value arithmetic section 81 reads an apparatus ID 141 which is stored in the apparatus-ID memory 128. Then, it creates a secure function S(ID) 148. The secure function-value arithmetic section 81 transmits a program-list request, together with the secure function 148, to the information-providing server 2. On the side of the information-providing server 2, the decoding section 121 refers to the inversion table 130 and inverts this secure function 148 (in a processing 142) . Thereby, it regenerates the apparatus ID 141. The collation section 122 executes authentication by collating the received apparatus ID 141 with the apparatus ID 141 registered in the database memory 123 (in a processing 143). As a result of the collation, only in the case where the authentication is established, the encoding section 120 reads a program list 147 which is stored in the program-list memory 155. Using the apparatus ID 141 as a key, it encodes this program list 147. In reply, the information-providing server 2 sends a program list 145 which is obtained by this encoding to the program reservation and picture-recording apparatus 1D which has made the transmission request.

On the side of the program reservation and picture-recording apparatus 1D, the secure function-value arithmetic section 81 receives the encoded program list 145. Then, the decoding section 126 decodes the encoded program list 145 (in a processing 146) and stores a program list 147 which is obtained by this decoding in the program-list memory 68.

In this way, the apparatus IDs which are transmitted beforehand from the plurality of program reservation and picture-recording apparatuses 1D are accumulated in the information-providing server 2. Then, authentication is executed by collating an apparatus ID which is transmitted together with a request to transmit a program list with the accumulated apparatus IDs. Only in the case where the authentication is established, the program list is sent in reply. Therefore, the program list can be given only to a person who is eligible for the program list. This prevents an unqualified person from acquiring it illegally.

### [Fifth Embodiment]

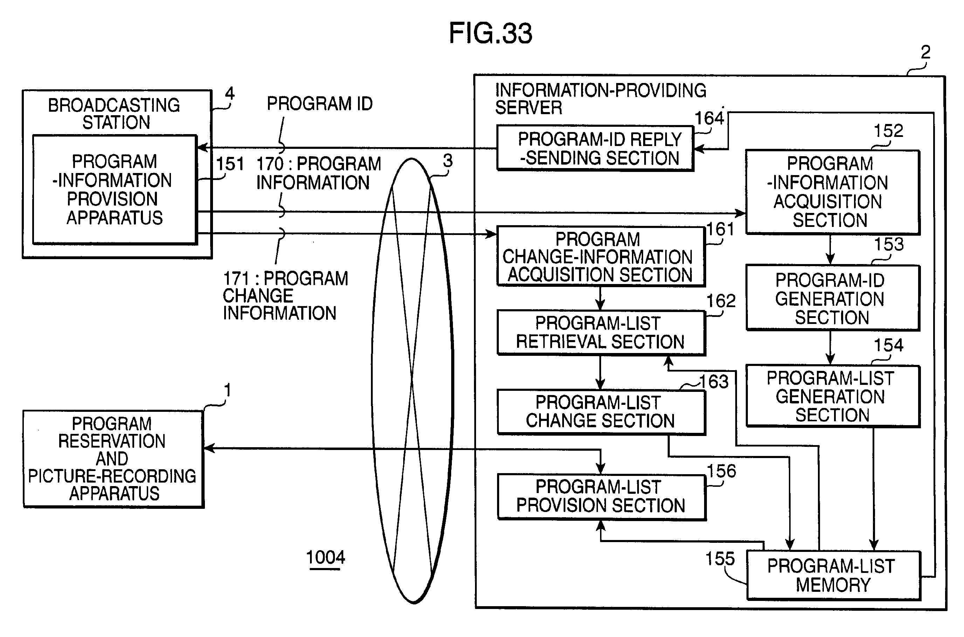

Fig. 33 is a block diagram, showing the configuration of a program reservation and picture-recording system according to a fifth embodiment of the present invention. This program reservation and picture-recording system 1004 is configured, for example, so that the information-providing server 2 is given the provision of information from a program-information provision apparatus 151 provided in the broadcasting station 4. Thereby, it creates a program list, and by request, sends this program list to the program reservation and picture-recording apparatus 1. Therefore, the information-providing server 2 includes: a program-information acquisition section 152; a program-ID (or identifier) generation section 153; a program-list generation section 154; a program-list memory 155; a program-list provision section 156; a program-list change section 163; a program-list retrieval section 162; and a program change-information acquisition section 161. The apparatus elements of the information-providing server 2 shown in Fig. 33 may be formed by hardware which needs no software. However, if the other apparatus elements than the program-list memory 155 are equivalently formed by a computer which operates according to a program, they are simpler and easier. The program which governs the operation of such a computer is stored in a memory, such as an ROM (or read only memory) (not shown). Thereby, the computer realizes each apparatus element equivalently. The program can be provided through transmission media which include the general-purpose network 3. It can also be provided through a recording medium such as an ROM or a CD-ROM.

The program-information provision apparatus 151 transmits program information 170 which is the newest to the information-providing server 2. The program-information acquisition section 152 receives the transmitted program information 170. The program-ID generation section generates the program ID which is a code for identifying each program illustrated in Fig. 7. On the basis of the acquired program information, the program-list generation section 154 creates the program list illustrated in Fig. 6. Then, it stores it in the program-list memory 155. The created program list also includes the program ID which is generated for each program. At the request of the program reservation and picture-recording apparatus 1, the program-list provision section 156 reads the program list from the program-list memory 155. In response, it sends this program list to the program reservation and picture-recording apparatus 1 which has made the request. A program-ID reply-sending section 164 transmits the program ID generated for each program to the program-information provision apparatus 151.

If a change is made in the time when a program starts or ends, the program-information provision apparatus 151 transmits the time after this change as well as the program ID of the program which has undergone the change, as program change information 171, to the information-providing server 2. The program change-information acquisition section 161 of the information-providing server 2 receives the transmitted program change information 171. The program-list retrieval section 162 compares the program ID included in the program change information 171 and the program ID inside of the program list stored in the program-list memory 155. Thereby, it retrieves the program to be changed in the program list. In terms of the retrieved program inside of the program list stored in the program-list memory 155, the program-list change section 163 changes its start time and completion time according to the program change information 171. Therefore, after the program list has been changed, if the program reservation and picture-recording apparatus 1 makes a request to transmit the program list, then the program-list provision section 156 can transmit the program list after the change. Furthermore, the program ID is used for such a retrieval, and thus, the retrieval can be executed swiftly and easily.

### [Sixth Embodiment]

### (The configuration of an apparatus)

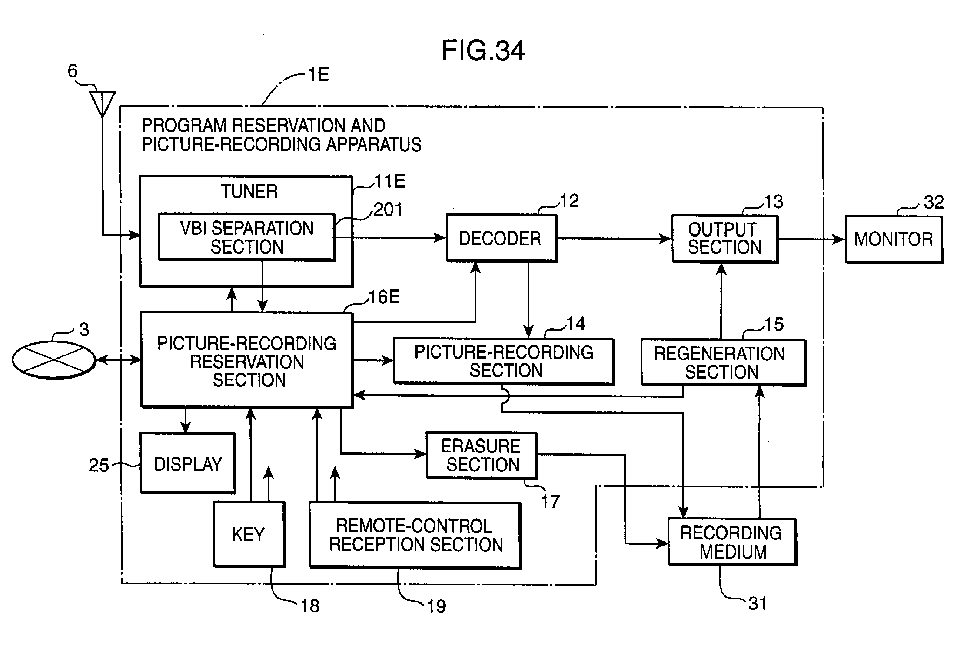

Fig. 34 is a block diagram, showing the configuration of a program reservation and picture-recording apparatus 1E according to a sixth embodiment of the present invention. In this apparatus 1E, the tuner 11 is replaced with a tuner 11E, and the picture-recording reservation section 16 is replaced with a picture-recording reservation section 16E. In this respect, it is different from the program reservation and picture-recording apparatus 1 shown in Fig. 2.

The tuner 11E includes a VBI separation section 201. The VBI separation section 201 separates information which is transmitted by using the VBI (or vertical blanking interval) of a TV-broadcast radio wave. In Japan, a program list on which a program time is described for each program is provided using the VBI of a ground-wave TV-broadcast radio wave which corresponds to a specific channel. In other words, a program list is provided so as to be inserted into a space between programs. As a typical example of the program list provided in this form, an ADAMS-EPG (or TV-Asahi data and multimedia service, electronic program guide) can be mentioned. The ADAMS-EPG is provided at a fixed time twice a day. In the ADAMS-EPG, program information is provided in a text form, so that AV equipment which receives this guide can automatically control the picture recording of a program. The information provided using the VBI is separated by the VBI separation section 201 and is inputted in the picture-recording reservation section 16E.

At the time when the ADAMS-EPG is provided, if the program reservation and picture-recording apparatus 1E is recording the picture of a program of the channel which provides the ADAMS-EPG, then the VBI separation section 201 can output the ADAMS-EPG. On the other hand, at the time when the ADAMS-EPG is provided, if the program reservation and picture-recording apparatus 1E is not recording the picture of any program, then the tuner 11E chooses the channel which provides the ADAMS-EPG. Thereby, the VBI separation section 201 can output the ADAMS-EPG. At the time when the ADAMS-EPG is provided, in order to change the channel which is chosen by the tuner 11E, for example, a picture-recording control section 70E provided in a drive control section 63E (described later) may change the channel of the tuner 11E, based on the time which is given through a notification by the time clocking section 64.

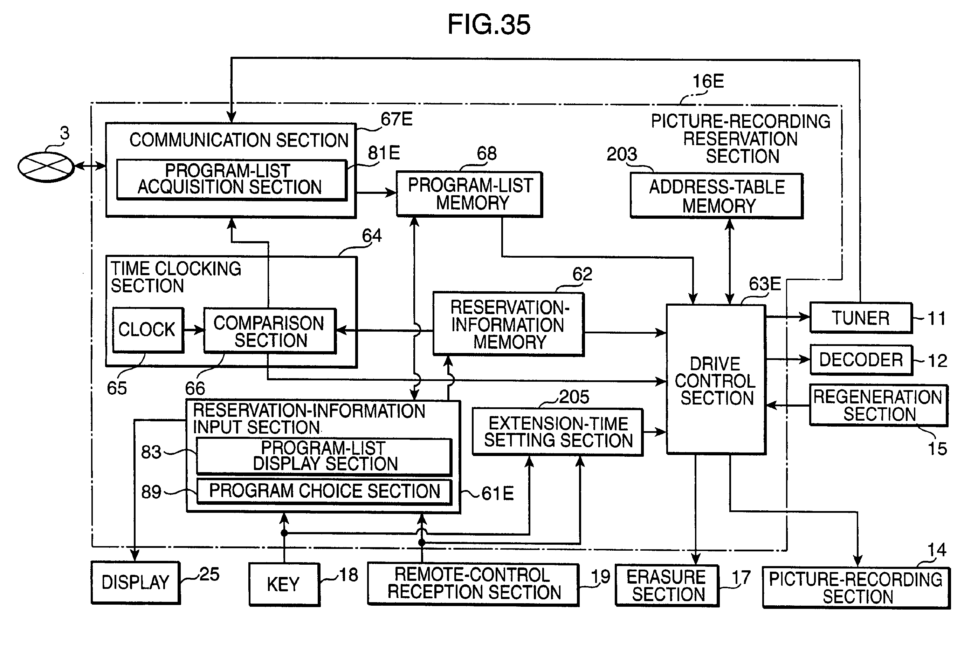

Fig. 35 is a block diagram, showing the configuration of the picture-recording reservation section 16E. The picture-recording reservation section 16E is different from the picture-recording reservation section 16 shown in Fig. 3 in the following points. The communication section 67 is replaced with a communication section 67E which includes a program-list acquisition section 81E. Then, the reservation-information input section 61 is replaced with a reservation-information input section 61E which includes a program-list display section 83 and a program choice section 89. Next, the drive control section 63 is replaced with a drive control section 63E. Then, there is no need to provide the reservation-information update section 69, an extension-time setting section 205 is provided, and an address-table memory 203 is provided.

The program-list acquisition section 81E extracts a program from information which is sent from the VBI separation section 201. The program-list acquisition section 81E recognizes, for example, a predetermined code or the like which indicates the beginning and end of a program list. Thereby, it distinguishes the program list from other information.

Similarly to the communication section 67 shown in Fig. 3, the communication section 67E can also communicate via the network 3 with the information-providing server 2. Thereby, the program-list acquisition section 81E can acquire a program list from the information-providing server 2 (see Fig. 1) connected to the network 3. In the same way as the program-list acquisition section 81 of Fig. 3, the program-list acquisition section 81E may transmit a request to the information-providing server 2 connected to the network 3 and receive the program list in reply. However, it may also acquire a program list which is provided through a one-way transmission via the network 3 by the information-providing server 2.

In the form where the program-list acquisition section 81E acquires a program list by transmitting a request, the time when the request should be transmitted may also be related to the time when the picture recording of a reserved program is completed. For example, based upon the reservation information stored in the reservation-information memory 62, the program-list acquisition section 81E may also transmit the request after a certain period of time elapses from the time when the reserved program has been picture-recorded. Or, based on the contents of an address table stored in the address-table memory 203, the program-list acquisition section 81E may also transmit the request after the elapse of a certain period of time from the time when the reserved program has actually been picture-recorded. Furthermore, the program-list acquisition section 81E may also acquire the program list only from the information sent from the VBI separation section 201. In contrast, it may also acquire the program list only through the network 3.

As described earlier with reference to Fig. 22, the program-list display section 83 is an apparatus element which outputs, to the display 25 or the output section 13, a signal (tentatively called a list-display signal) to display a program list stored in the program-list memory 68. In Fig. 35, only the display 25 is shown. The program choice section 89 is an apparatus element which accepts a choice operation chosen by a user from a displayed program list. It chooses, from the program list, a program which is given by a user's instruction when the user operates the key 18 or the like, as the program whose picture-recording should be reserved.

The extension-time setting section 205 is an apparatus element which accepts the setting of an extension time for the picture recording of a program by a user. As described later, when recording the picture of a program base on the reservation information, the picture-recording control section 70E provided in the drive control section 63E extends the reservation program-completion time by a predetermined time and makes the picture recording. The extension-time setting section 205 accepts the setting of an extension time by a user, through the operation of the key 18 or the remote-control reception section 19. The extension-time setting section 205 may be formed by hardware which needs no software. However, it may also be equivalently formed by a computer which operates according to a program, along with each apparatus element except for the reservation-information memory 62, the program-list memory 68 and the address-table memory 203.

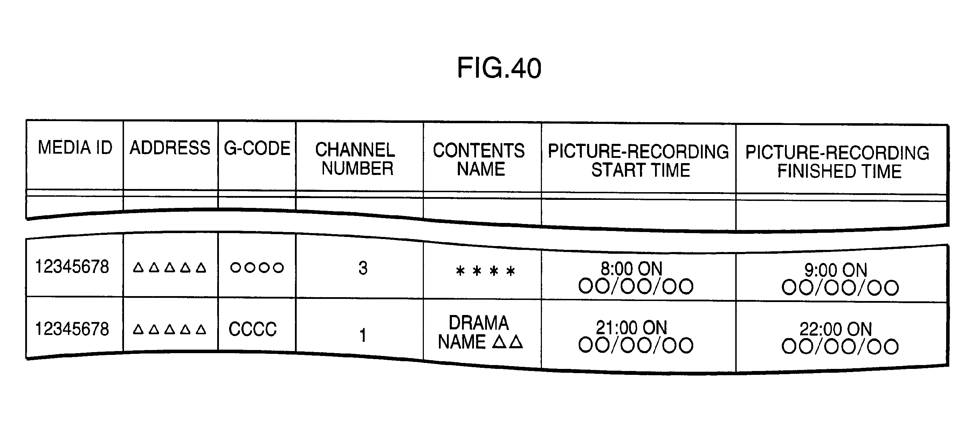

The address-table memory 203 is a memory for storing an address table. It is a memory area which is allocated to, for example, a part of a hard disk (or HDD). When recording the picture of a program, the picture-recording control section 70E registers, in an address table, a media ID for identifying the recording medium 31, an address which indicates a picture-recording position in the recording medium 31, a channel number, a program picture-recording start time, a program picture-recording completion time, or the like. The address table will be described in detail later with reference to Fig. 40.

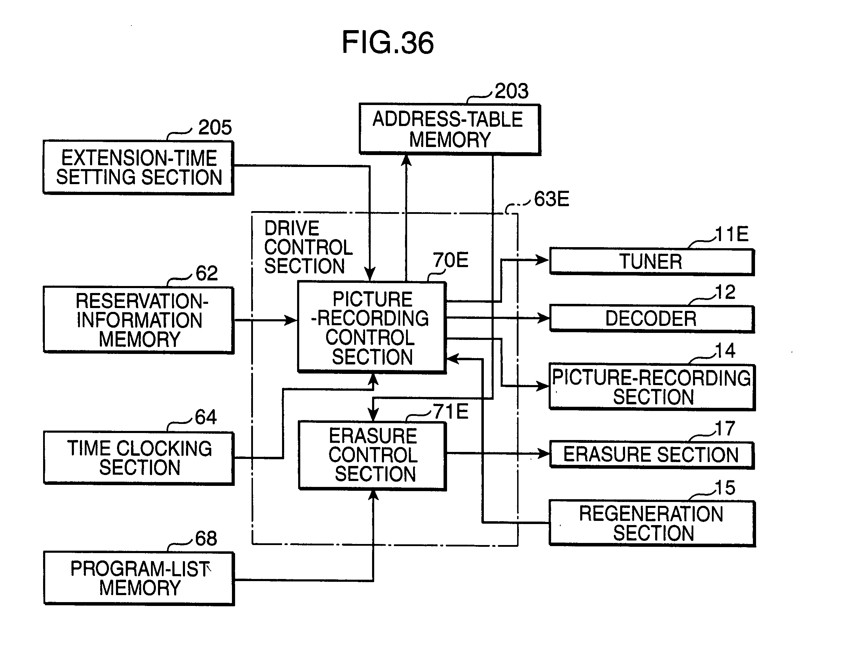

Fig. 36 is a block diagram, showing the configuration of the drive control section 63E. The drive control section 63E includes the picture-recording control section 70E, instead of the picture-recording control section 70. Then, the erasure control section 71 is replaced with an erasure control section 71E. In these respects, it is different from the drive control section 63 shown in Fig. 4. In the same way as the picture-recording control section 70 (see Fig. 4), the picture-recording control section 70E refers to a time which is given by the notification of the time clocking section 64. Thereby, it controls the tuner 11E, the decoder 12 and the picture-recording section 14, so that based on the reservation information stored in the reservation-information memory 62, the picture of a program can be recorded in the recording medium 31. Incidentally, the picture-recording control section 70E records the program's picture by extending the program picture-recording start time indicated in the reservation information by the extension time set in the extension-time setting section 205. Furthermore, the picture-recording control section 70E executes registration in the address table when recording the program picture.

In the same way as the erasure control section 71 (see Fig. 4), in terms of a program whose picture has been recorded, the erasure control section 71E has the function of erasing an unreserved program from the recording medium 31. Incidentally, the erasure control section 71E erases a program by referring to the address table stored in the address-table memory 203 and the program list stored in the program-list memory 68.

Herein, the program reservation and picture-recording apparatuses 1, 1A to 1D, 1F according to the other embodiments may also include the address-table memory 203, in the same way as the program reservation and picture-recording apparatus 1E according to this embodiment. In that case, the picture-recording control sections 70, 70A, 70F registers in the address table when recording the picture of a program, in the same way as the picture-recording control section 70E. Thereby, for example, in the step 13 of Fig. 3, the erasure control section 71 compares an address table and a program list which has been latest acquired, so that a unnecessary program can be specified.

### (The operation of an apparatus)

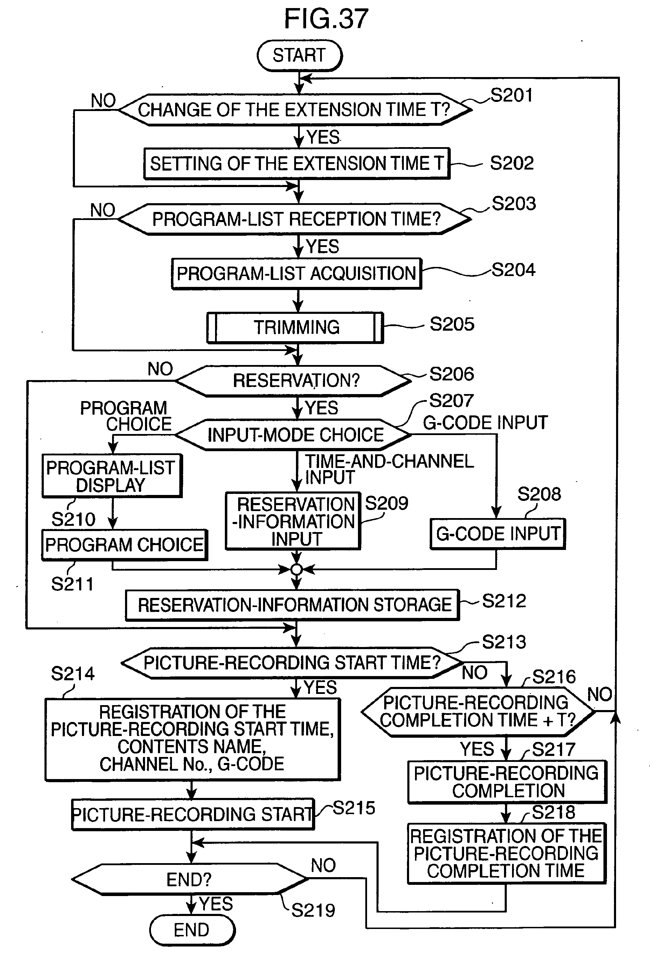

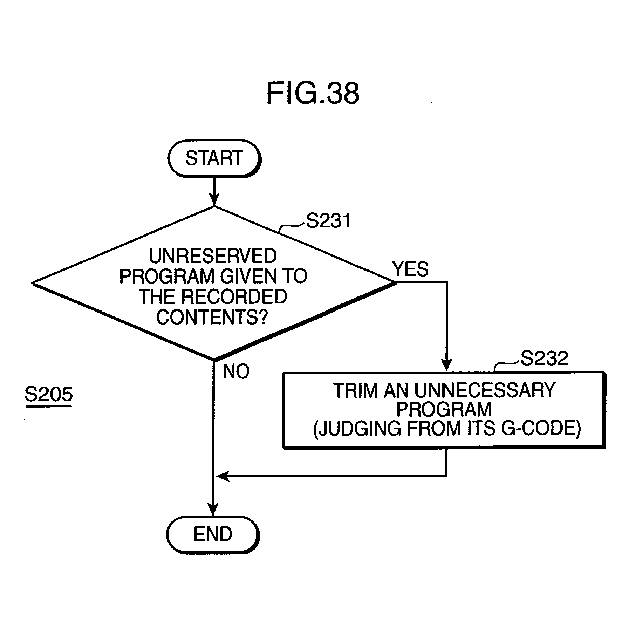

Herein, the operation of each of the sections which configure the above described program reservation and picture-recording apparatus 1E will be described in detail with reference to the attached flow charts. Besides, the following explanation will make such an operation more obvious. Fig. 37 is a flow chart, showing the flow of the processing by the program reservation and picture-recording apparatus 1E described so far. Fig. 38 is a flow chart, showing the processing of a step S205 in Fig. 37. Herein, in the flow charts of Fig. 37 and Fig. 38, the program-list acquisition section 81E acquires a program list only from information which is outputted by the VBI separation section 201.

If the processing begins when the power of the program reservation and picture-recording apparatus 1E is turned on, the extension-time setting section 205 decides whether or not a user has operated the key 18 or the like to change the extension time (expressed by a reference character T) (in a step S201). If the user has conducted the operation for changing the extension time T (Yes in the step S201), then based on the user's operation, the extension-time setting section 205 sets the extension time T in a memory (not shown)(in a step S202). This memory is a memory area which is allocated to, for example, a part of a hard disk (or HDD).

After the processing of the step S202 is completed, or unless the user conducts the operation for changing the extension time T (No in the step S201), the time clocking section 64 decides whether or not the time (tentatively called the program-list reception time) when the program list should be received has come (in a step S203). This decision is made, for example, through a comparison by the comparison section 68 between the time stored in the memory (not shown) as the time when the program list is transmitted and the time indicated in the clock 65. The memory which stores the time when the program list is transmitted is a memory area which is allocated to, for example, a part of a hard disk (or HDD).

When the time when the program list should be received has come (Yes in the step S203), unless the tuner 11E is picture-recording the program, the picture-recording control section 70E operates the tuner 11E so that it chooses the channel which provides the program list. As a result, the program-list acquisition section 81E acquires the program list from information which is sent from the VBI separation section 201 (in a step S204). Next, the erasure control section 71 trims the program whose picture has already been recorded (in a step S205). This trimming processing will be described in detail later with reference to Fig. 38. After the trimming processing (in the step S205) is completed, or unless the program-list reception time has arrived in the step S203 (No in the step S203), the processing goes ahead to a step S206.

In the step S206, the reservation-information input section 61E decides whether or not a user has operated the key 18 or the like to reserve a program. If the user has performed the operation for reserving a program (Yes in the step S206), the reservation-information input section 61E accepts a choice on how the user wants to input the reservation information (in the step S207). If the user operates the key 18 or the like to choose any of a program choice mode, a time-and-channel input mode and a G-code (which is generally some appointed identifier for identifying a program) input mode (in a step S207), then according to this choice, the reservation-information input section 61E enables any of a program-list display (in a step S210), a reservation-information input processing (in a step S209) and a G-code input (in a step S208).

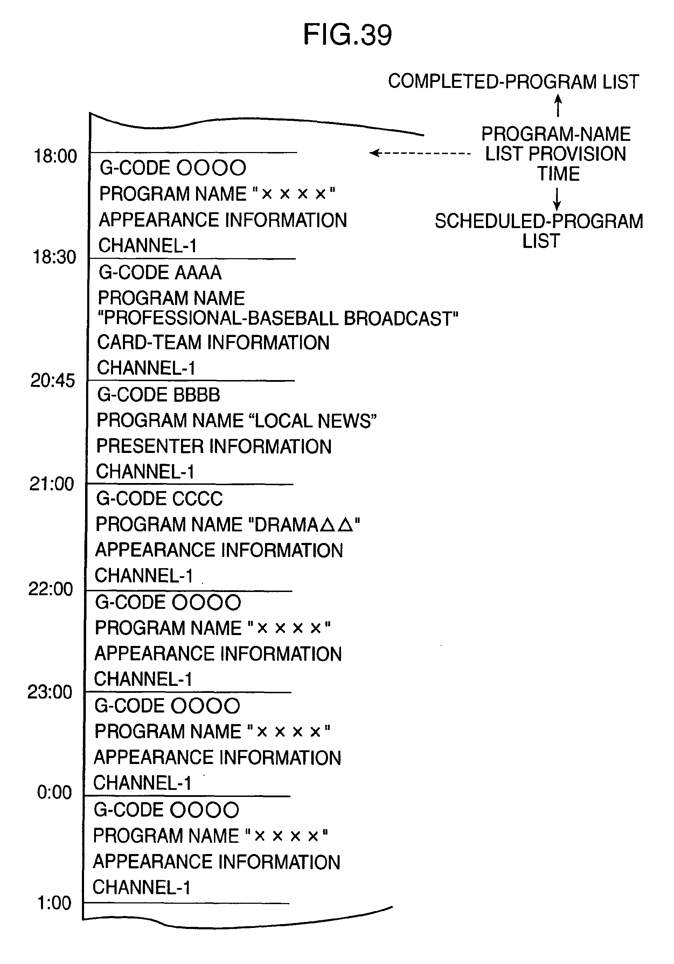

In the step S210, the program-list display section 83 outputs a list-display signal to display the latest-acquired program list to the display 25 or the output section 13. Fig. 39 is an illustration, showing a program list displayed in the display 25 or a program list displayed through the output section 13 in the monitor 32. On the program list illustrated in Fig. 39, a broadcast channel, a program name, a program start time, a program completion time, information on those who appear on a program and a G-code are enumerated for each program.

As shown in Fig. 39, for example, if the time when the program list is provided is 18:00, the information ahead of 18:00 relates to programs which have been completed, or a completed-program list. On the other hand, the information behind 18:00 relates to programs which are scheduled, or a scheduled-program list. Hence, in this embodiment, both the scheduled-program list and the completed-program list are supposed to be provided as the program list. As shown in Fig. 39, the scheduled-program list and the completed-program list may be simultaneously provided as a part of a single program list. However, each of them may also be provided at a different time as a separate program list.

On the completed-program list, information is placed on programs which were actually broadcast in the past. For example, in terms of a certain program whose broadcast was completed, its real broadcast time is described. With regard to such a program list, it is desirable that the information ahead of the time when a program list was provided, including the information immediately ahead, should all correspond to the completed-program list. However, only the information earlier than a certain period of time ahead of the program-list provision time may also be equivalent to the completed-program list. It takes a certain time to create a program list including the newest information, and thus, the completed-program list is often limited to the information some time back to the past.

Moving back to Fig. 37, after the step S210, the program choice section 89 accepts a choice operation for the program which a user wants to choose on the displayed program list (in a step S211). Specifically, the program choice section 89 chooses, from the program list, the program which has been given by the user's instruction at the time when the user operates the key 18 or the like, as the program whose picture-recording should be reserved. Thereby, it creates reservation information. The program list includes a G-code, and thus, the created reservation information also includes a G-code.

In the step S209, if the user operates the key 18 or the like to input the channel of a reserved program, a picture-recording start time and a picture-recording completion time, then the reservation-information input section 61E creates reservation information which indicates the reservation contents. In the step S208, if the user operates the key 18 or the like to input the G-code of the reserved program, then based upon the G-code, the reservation-information input section 61C creates reservation information which indicates the reservation contents. The reservation information also includes the G-code itself.

Thereafter, the reservation-information input section 61E stores the reservation information it has created in the reservation-information memory 62 (in a step S212). Thereby, the user's program reservation is completed. If the recording of the reservation information (in the step S212) is completed, or unless the user conducts the operation for the program reservation in the step S206 (No in the step S206), then the processing goes ahead to a step S213.

In the step S213, based on the reservation information stored in the reservation-information memory 62, the time clocking section 64 decides whether or not the current time has reached the program picture-recording start time described in the reservation information. If the current time has reached the program picture-recording start time (Yes in the step S213), then the picture-recording control section 70E registers, in the address table, the program picture-recording start time, the contents name or the program name, the channel number, the G-code, or the like (in a step S214).

Fig. 40 is an illustration, showing the data structure of an address table. In the address table, every time the picture of a program is recorded, its media ID, address, G-code, channel number, contents name, program picture-recording start time and program picture-recording completion time are registered. The media ID is a peculiar identification code which is given in advance to the individual recording media 31. The address is a numerical value which indicates the position of the picture-recorded program in the recording medium 31. It is, for example, the leading address of the area which is occupied by the picture-recorded program. All the items in the address table are registered by the picture-recording control section 70E.

Returning to Fig. 37, after the step S214, the picture-recording control section 70E begins to record the picture of the program indicated by the reservation information (in a step S215). Thereafter, if the processing should be terminated, such as the case where an operation is executed for shutting off the power of the program reservation and picture-recording apparatus 1E (Yes in a step S219), then the program reservation and picture-recording apparatus 1E puts an end to the whole processing. Unless the processing should be terminated (No in the step S219), the program reservation and picture-recording apparatus 1E returns the processing to the step S201.

In the step S213, if the current time has not reached the program picture-recording start time (No in the step S213), the picture-recording control section 70E decides whether or not the current time has reached the time which is the extension time T behind the program picture-recording completion time indicated by the reservation information (in a step S216). If the current time has reached the program picture-recording completion time + the extension time T (Yes in the step S216), the picture-recording control section 70E terminates the picture recording of the program which is now in execution (in a step S217). Thereafter, the picture-recording control section 70E registers the program picture-recording completion time in the address table (in a step S218). After this, the processing goes ahead to the step S219. On the other hand, unless the current time has reached the program picture-recording completion time + the extension time T in the step S216 (No in the step S216), the program reservation and picture-recording apparatus 1E brings the processing back to the step S201.

The trimming processing of the step S205 is executed according to the procedure of Fig. 38. If the processing of the step S205 begins, the erasure control section 71E contrasts the part of the completed-program list of the newest program list which is stored in the program-list memory 68 and the contents of an address table which is stored in the address-table memory 203. Thereby, it decides whether or not an unreserved program is included within the picture-recording time of the program whose picture-recording is completed (in a step S231). If an unreserved program or an unnecessary program is included within the picture-recording time (Yes in the step S231), the unnecessary program is erased from the recording medium 31 (in a step S232). If the processing of the step S232 finishes, or if the decision is made in the step S231 that an unnecessary program is not included (No in the step S231), then the trimming processing of the step S205 is completed.

### (Operation example)

Next, a program reservation, a picture recording and a trimming will be described specifically by picking up one of the programs illustrated in Fig. 39 as an example. In the step S208, S209 or S211 of Fig. 37, among the program lists shown in Fig. 39, the program specified by a G-code "CCCC" is assumed to be reserved. The program start time when this program is scheduled to begin is 21:00, and its program completion time on schedule is 22:00. The program's channel is "1". Hence, in the step S212, in the reservation information which is stored in the reservation-information memory 62, 21:00 is written as the program picture-recording start time. Then, 22:00 is written as the program picture-recording completion time, "1" is written as the channel, and the G-code "CCCC" is written as the program identifier for identifying the program.

In the step S202, let's assume that the preset extension time T is 30 minutes. In this case, the picture recording of the program which is given the G-code "CCCC" starts at 21:00 in the step S214. Then, it ends at 22:30, an extension time of 30 minutes behind 22:00 in the step S217.

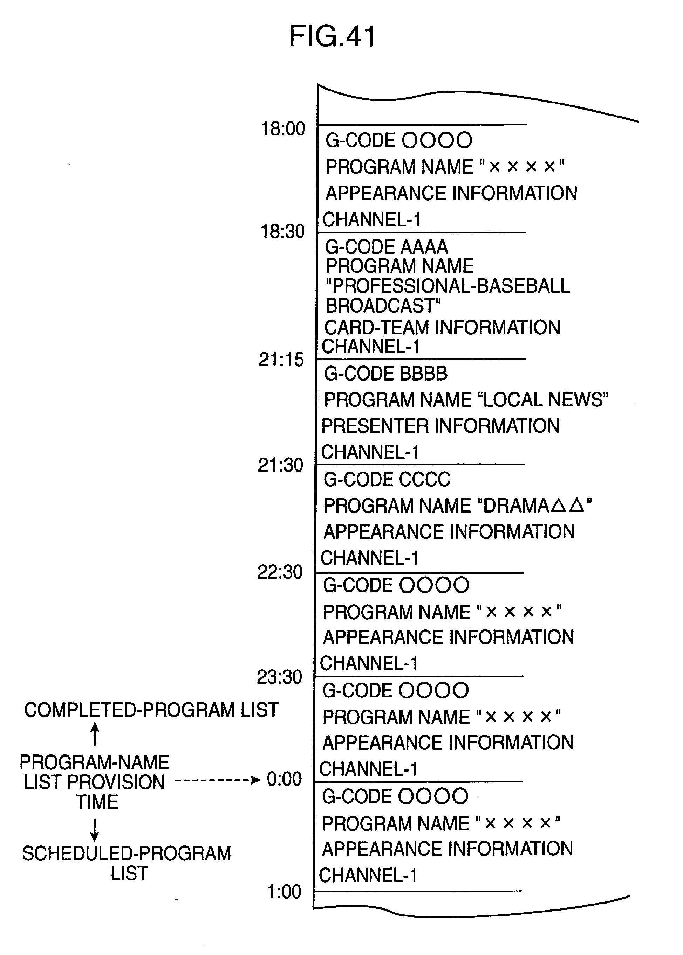

As shown in Fig. 41, let's assume that the real broadcast time of each of the program which is given the G-code "CCCC" and the programs before and after this program, has been postponed for 30 minutes, because the broadcast of the "professional-baseball broadcast" program which is given a G-code "AAAA" has been extended. Fig. 41 shows a program list which is provided, for example, at 0:00 after the broadcast of the G-code "CCCC". On the program list of Fig. 41, the information before 0:00 corresponds to the completed-program list and the information after 0:00 corresponds to the scheduled-program list.

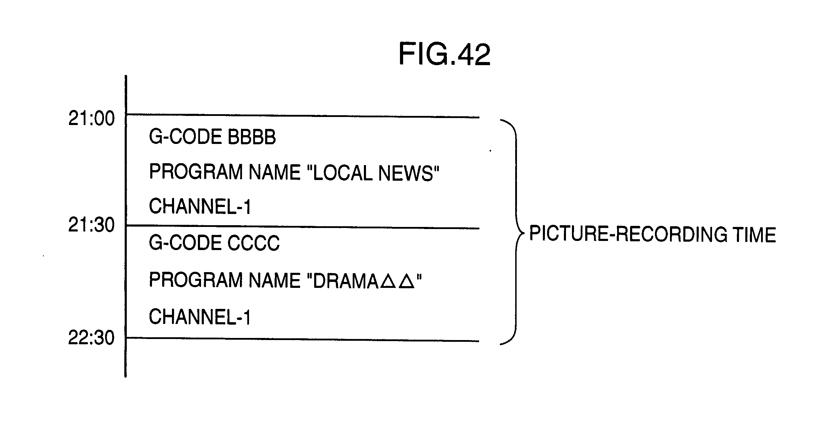

Then, within the picture-recording time of 21:00 to 22:30, as shown in Fig. 42, the program given a G-code "BBBB" is picture-recorded in its first-half part. In the latter-half part, the program given the G-code "CCCC" is picture-recorded. The program given the G-code "CCCC" in the latter-half part is the program to be reserved or the reserved program, while the program given the G-code "BBBB" in the first-half part is an unreserved unnecessary program.

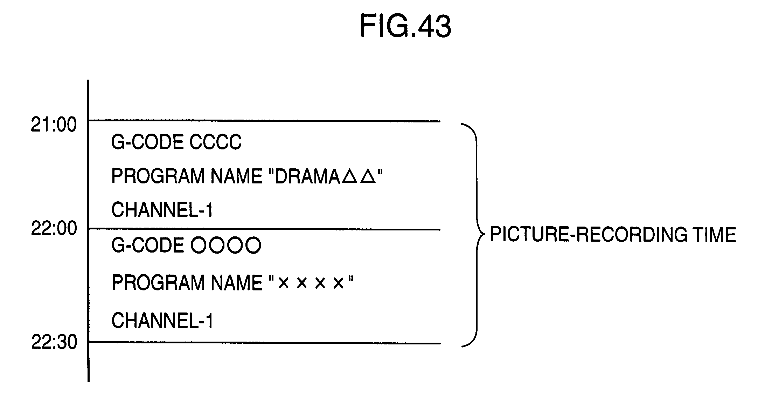

On the other hand, if each program is broadcast according to the program list shown in Fig. 39 because the "professional-baseball broadcast" program given the G-code "AAAA" has not been extended, then the program shown in Fig. 43 is picture-recorded within the picture-recording time of 21:00 to 22:30. Specifically, the program given the G-code "CCCC" is picture-recorded in the first-half part and the unnecessary program given a G-code "○○○○" is picture-recorded in the latter-half part.

In the step S231, the erasure control section 71E contrasts a program list which is acquired after the picture-recording is completed, for example, the program list shown in Fig. 41, with the contents of the address table. Thereby, it finds out an unnecessary program except for the reserved program given the G-code "CCCC" within the picture-recording time of 21:00 to 22:30. The G-code of the reserved program is registered in the address table. Thus, the erasure control section 71E contrasts this G-code and the G-code written in the program list, so that it can easily search for the unnecessary program. In the step S232, the erasure control section 71E deletes the unnecessary program it has found out from the recording medium 31 . Consequently, in the case of Fig. 42, the unnecessary program given the G-code "BBBB" is erased. In Fig. 43, the unnecessary program given the G-code "○○○○" is erased.

If a program is reserved in the step S209, a G-code is not inputted in the reservation-information input section 61E. In the case, the reservation-information input section 61E may add, to the reservation information, the G-code given to the channel and the picture-recording time which correspond to the channel and the picture-recording time of the reserved program in the part of the scheduled-program list of the program list stored in the program-list acquisition section 81E.

As described above, in the program reservation and picture-recording apparatus 1E according to this embodiment, an unreserved program is automatically erased from the recording medium 31. This releases a user from being compelled to view an unreserved unnecessary program, or manually erasing an unnecessary program from the recording medium 31.

The program reservation and picture-recording apparatus 1E and an apparatus which provides a program list (referred to as the program-list provision apparatus) configures a program reservation and picture-recording system. This program reservation and picture-recording system is equivalent to a program reservation-and-recording system according to an embodiment of the present invention. The program-list provision apparatus is, for example, an apparatus which is provided in the broadcasting station 4, or the information-providing server 2 which is connected to the general-purpose network 3.

Fig. 37 shows an example in which a G-code is written in a program list, the reservation-information input section 61E accepts an input of the G-code by a user in the step S208 of Fig. 37, and thereby, an unnecessary program can be easily searched for. In contrast, in the same way as a G-code, a program identifier can also be generally used for specifying the channel number of a program and the broadcast-start schedule time and broadcast-completion schedule time of a program.

Furthermore, it is not limited to the one which can specify the channel number of a program and the broadcast-start schedule time and broadcast-completion schedule time of a program. A program identifier can also be generally used which is a program-identification code that is assigned beforehand for each program. A program identifier may be the same as the one which is used in a program list. In this case, in the step S208 of Fig. 37, the reservation-information input section 61E may accept the input of, in addition to a program identifier, information which cannot be specified by a program identifier, for example, a picture-recording start time or the like for a program to be reserved.

There is a case in which a program identifier, as well as all of the channel number, picture-recording start time and picture-recording completion time of a program to be reserved, should be inputted. In this case, it is no use preparing not only the step S209 but also the step S208 as a choice item. Unless the reservation-information input section 61E has the function of automatically adding a program identifier to the reservation information based on the program list after the step S209, it is worth preparing the step S208.

Fig. 37 shows an example where a program list is provided through a broadcast radio wave. In contrast, in the case where a program list is provided through a one-way transmission via the network 3, in the step S203, the time clocking section 64 may decide whether or not the time has arrived when the program list should be provided through the network 3. In the form where the program-list acquisition section 81E makes a request to transmit a program list, in the step S203, the time clocking section 64 may decide whether or not the time when the provision of the program list should be requested has come. The time when the request to provide the program list should be made may also be, as described already, for example, after a certain period of time has elapsed from the picture-recording completion time of the reserved program which is written in the reservation information stored in the reservation-information memory 62, or after a certain period of time has passes from the actual picture-recording completion of the reserved program which is written in the address table stored in the address-table memory 203.

### [Seventh Embodiment]

### (The configuration of a system)

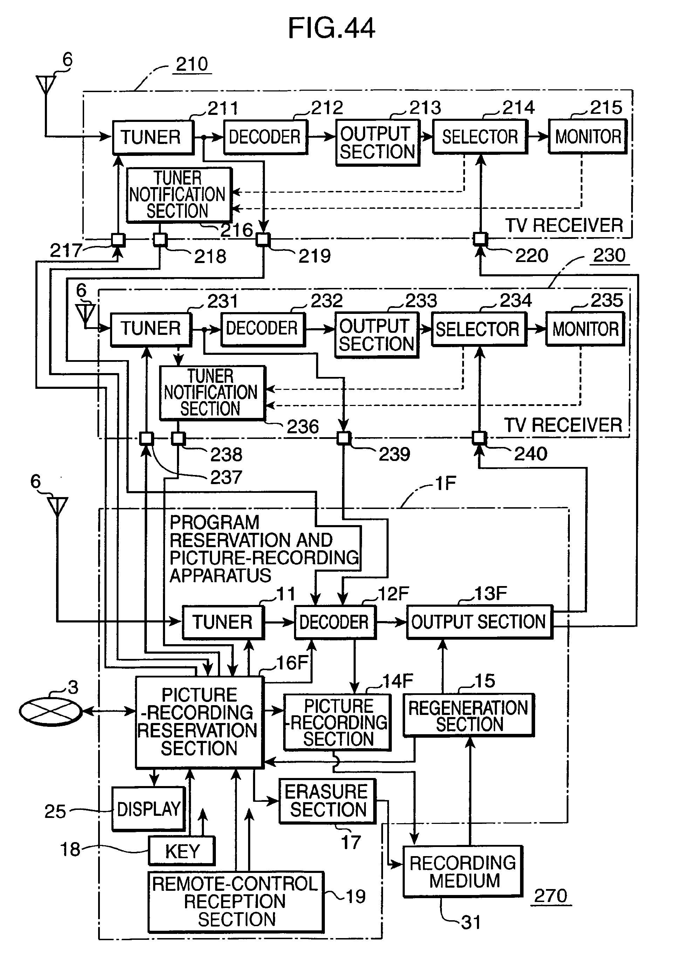

Fig. 44 is a block diagram, showing the configuration of a program reservation and picture-recording system 270 according to a seventh embodiment of the present invention. This program reservation and picture-recording system 270 includes a program reservation and picture-recording apparatus 1F, and one or more TV receivers 210 and 220. The TV receivers 210 and 220 correspond to a program reception apparatus according to an embodiment of the present invention. Further, a tuner 11 provided in the program reservation and picture-recording apparatus 1F corresponds to an internal tuner according to an embodiment of the present invention. Tuners 211 and 231 which are provided in the TV receivers 210 and 230 as an external apparatus, respectively, correspond to an external tuner according to an embodiment of the present invention.

The program reservation and picture-recording system 270 can be easily built only by connecting the TV receivers 210 and 220 to the program reservation and picture-recording apparatus 1F. In addition, if a lighting line (i.e., a home power line) is used as the distribution line by which the TV receiver 210 and the TV receiver 220 are connected to the program reservation and picture-recording apparatus 1F, the program reservation and picture-recording system 270 can be more easily established.

The TV receiver 210 includes: an antenna 6; the tuner 211; a decoder 212; an output section 213; a selector 214; a monitor 215; a tuner notification section 216; and terminals 217 to 220. Similarly, the TV receiver 230 includes: an antenna 6 ; the tuner 231; a decoder 232; an output section 233; a selector 234; a monitor 235; a tuner notification section 236; and terminals 237 to 240.

The TV receiver 210 and the TV receiver 230 have the same structure, and thus, only the TV receiver 210 will be typically described. The tuner 211 is connected to the antenna 6 and takes out any channel program data from a broadcast radio wave received by the antenna 6. The decoder 212 is an apparatus element which decodes a program received in a compressed-code format. It starts to operate, for example, when a digital-TV broadcast program is received. The output section 213 outputs a program to the monitor 215. The selector 214 chooses either a program which is outputted by the output section 213 or a program which is sent from an output section 13F of the program reservation and picture-recording apparatus 1F and is inputted through the terminal 220. Then, it sends it to the monitor 215.

The tuner notification section 216 detects the tuner 211's usage state. Then, it notifies the program reservation and picture-recording apparatus 1F of this usage state. The detected usage state includes which channel the tuner 211 is choosing and whether the program received by the tuner 211 is displayed in the monitor 215. Hence, the tuner notification section 216 detects how the tuner 211 is used through the operation state of the tuner 211, the selector 214 and the monitor 215.

The tuner 211 receives, through the terminal 217, a channel choice signal which is transmitted by the program reservation and picture-recording apparatus 1F. The tuner 211 chooses a channel according to the channel choice signal it has received. In other words, the tuner 211 can choose a channel according to a user's operation for the TV receiver 210, or it can also choose a channel according to a channel choice signal which is transmitted by the program reservation and picture-recording apparatus 1F. Besides, the tuner 211 outputs the program it has received to the decoder 212 and transmits it through the terminal 219 to the program reservation and picture-recording apparatus 1F. The terminal 219 corresponds to a program transmission section according to an embodiment of the present invention.

The program reservation and picture-recording apparatus 1F is configured so that not only its own tuner 11, but also the tuners 211 and 231 which are provided in the TV receivers 210 and 230 connected as an external apparatus, can be used as if they were its own tuners. This enables the program reservation and picture-recording apparatus 1F to record the pictures of several reserved programs simultaneously. The power of the tuner 211 and the tuner notification section 216 of the TV receiver 210, as well as the power of the tuner 231 and the tuner notification section 236 of the TV receiver 230, remain supplied, even if a user is not using the TV receiver 210 and the TV receiver 230. Thereby, their operation state can be kept so that an operation can be executed in the program reservation and picture-recording apparatus 1F.

The program reservation and picture-recording apparatus 1F is different from the program reservation and picture-recording apparatus 1 shown in Fig. 2, in the following points. In order to make a simultaneous picture recording of several programs: the decoder 12 is replaced with a decoder 12F; the output section 13 is replaced with the output section 13F; the picture-recording section 14 is replaced with a picture-recording section 14F; and the picture-recording reservation section 16 is replaced with a picture-recording reservation section 16F.

The decoder 12F is designed to simultaneously decode a plurality of programs which have been compressed into codes. At present, a decoder has already been known which can decode several programs simultaneously. The advancement of semiconductor technology has heightened the processing speed of a decoder, thus allowing the decoder 12F to decode more programs simultaneously. The picture-recording section 14F is designed to concurrently record, in the recording medium 31, the pictures of a plurality of programs which are outputted by the decoder 12F.

In order to display a program which is outputted by the decoder 12F or a program which is outputted by the regeneration section 15 in the monitors 215 and/or 235, the output section 13F outputs it to the TV receivers 210 and/or 230. In the case where the output section 13F outputs a program which is outputted by the decoder 12F, if the decoder 12F outputs several programs simultaneously, then according to a user's choice operation, the output section 13F outputs any one of the several programs. In terms of the regeneration section 15, even if several programs are recorded at the same time in the recording medium 31, it chooses and regenerates one of them according to a user's choice operation.

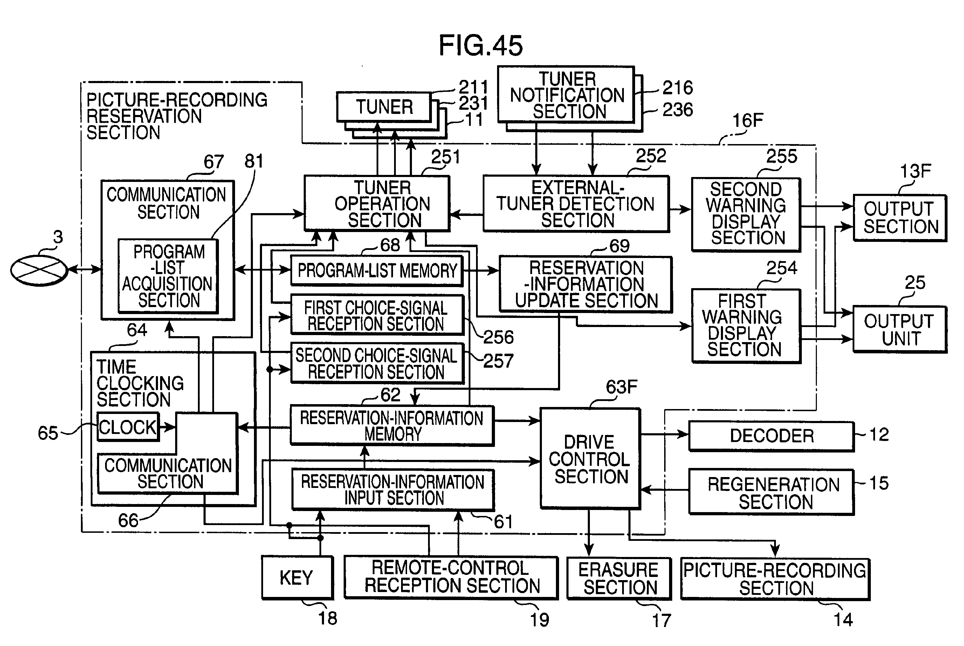

Fig. 45 is a block diagram, showing the configuration of the picture-recording reservation section 16F. The picture-recording reservation section 16F includes a tuner operation section 251, an external-tuner detection section 252, a first warning display section 254, a second warning display section 255, a first choice-signal reception section 256, a second choice-signal reception section 257, and instead of the drive control section 63, a drive control section 63F. In these points, it is different from the picture-recording reservation section 16 shown in Fig. 3. The apparatus elements 251 to 257 which are added to the picture-recording reservation section 16 (see Fig. 3) may be formed by hardware which needs no software. However, it may also be equivalently formed by a computer which operates according to a program, along with each apparatus element except for the reservation-information memory 62 and the program-list memory 68.

With respect to the tuner operation section 251, in the case where a plurality of programs whose channels are different and whose pictures should be simultaneously recorded are included in the reservation information, it operates the tuners 11, 211 and 231 so that several tuners which are chosen from among the three tuners made up of the tuners 11, 211 and 231 can receive the plurality of programs concurrently. The tuner operation section 251 operates the tuners 11, 211 and 231, based on information from the reservation-information memory 62, the drive control section 63F, the time clocking section 64, the external-tuner detection section 252, the first choice-signal reception section 256 and the second choice-signal reception section 257.

The external-tuner detection section 252 detects the usage state of the tuners 211 and 231, based on information which is transmitted by the tuner notification sections 216 and 236. On the basis of the usage state detected by the external-tuner detection section 252, the tuner operation section 251 distinguishes the tuners which can be used to receive a plurality of programs which should be concurrently picture-recorded. Then, it allocates, to these usable tuners, the channels which correspond to the plurality of programs.

In terms of the first warning display section 254, in the case where several programs cannot be simultaneously picture-recorded without using the external tuners which a user is now operating, it outputs, to the output section 13F and the display 25, a first warning display signal for displaying a warning for inquiring whether to give permission to change the channel so that the pictures of the several programs can be simultaneously recorded. The first warning display signal outputted to the output section 13F is displayed in the monitor 215 or 235. In order to display the first warning display signal in the monitor 215 or 235, at the same time, the output section 13F also outputs a choice signal to switch the selector 214 or 234.

When the first warning display signal is displayed, a user inputs a response by operating the key 18, a remote control, or the like. Then, the first choice-signal reception section 256 receives a first choice signal which is generated by the user's input. The first choice signal is a signal which indicates the user's choice result on whether to give permission to change the channel. The first choice-signal reception section 256 extracts the first choice signal, for example, from among the signals inputted by the operation of the key 18.

In terms of the second warning display section 255, if a user executes an operation for changing the channel of the tuner which is used to receive one of a plurality of programs which should be concurrently picture-recorded, of the tuners 211 and 231, then it outputs a second warning display signal to the output section 13F and the display 25. The second warning display signal is a signal which displays the fact that this tuner is in operation and also displays a warning for inquiring whether to cancell the recording. In order to display the second warning display signal in the monitor 215 or 235, at the same time, the output section 13F also outputs a choice signal to switch the selector 214 or 234.

When the second warning display signal is displayed, a user inputs a response by operating the key 18, a remote control, or the like. Then, the second choice-signal reception section 257 receives a second choice signal which is generated by the user's input. The second choice signal indicates the user's choice result on whether to cancel the recording. The second choice-signal reception section 257 extracts the second choice signal, for example, from among the signals inputted by the operation of the key 18.

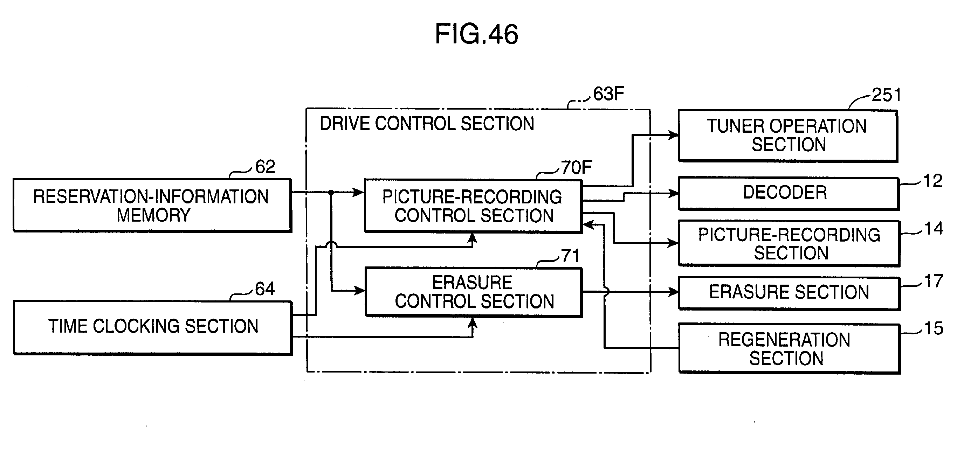

Fig. 46 is a block diagram, showing the configuration of the drive control section 63F. In the drive control section 63F, the picture-recording control section 70 is replaced with a picture-recording control section 70F. In this respect, it is different from the drive control section 63 shown in Fig. 4. The picture-recording control section 70F operates the tuner operation section 251, instead of the tuner 11. In this point, it is different from the picture-recording control section 70 shown in Fig. 4. As described above, in the program reservation and picture-recording apparatus 1F, the tuner 11 is controlled by the tuner operation section 251.

### (The operation of a system)

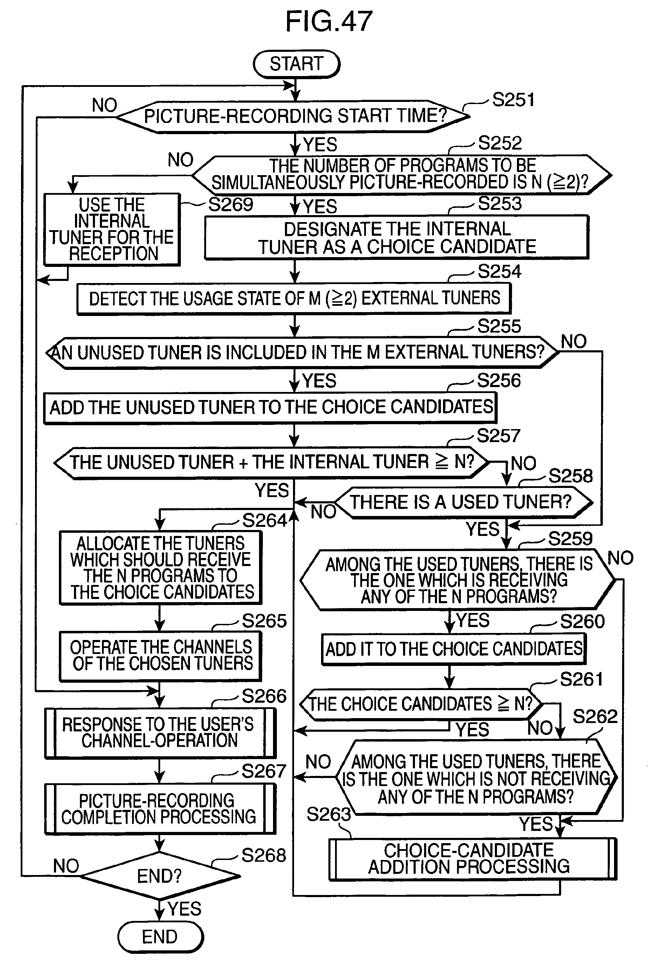

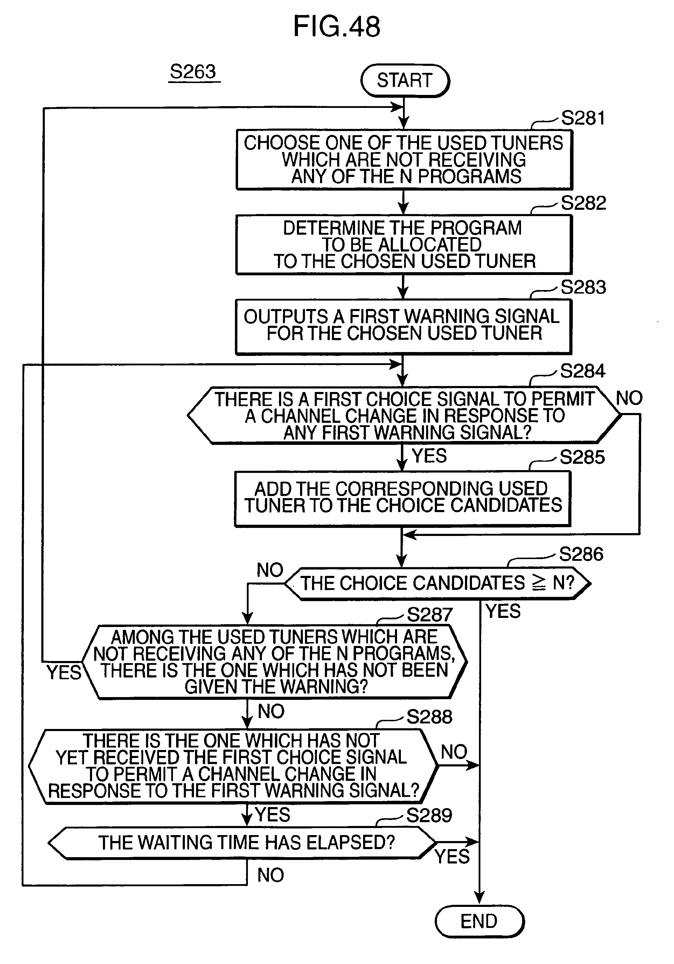

The details of the operation of each of the sections which configure the program reservation and picture-recording apparatus 1F described so far will be more obvious in the following explanation with reference to the attached flow charts. Fig. 47 is a flow chart, showing a picture-recording processing for a reserved program in the program reservation-and-recording apparatus 1F described above. In Fig. 47, to the program reservation and picture-recording apparatus 1F, one or more TV receivers are connected, for example, the TV receivers 210 and 230. Fig. 48 to Fig. 50 are flow charts, showing the processing of steps S263, S266 and S267 in Fig. 47, respectively.

When the processing starts, based upon the reservation information stored in the reservation-information memory 62, the time clocking section 64 decides whether or not the current time has reached the program picture-recording start time written in the reservation information (in a step S251). If the current time has reached the program picture-recording start time (Yes in the step S251), the picture-recording control section 70F operates the tuner operation section 251. Thereby, based upon the reservation information stored in the reservation-information memory 62, the tuner operation section 251 decides whether or not a plurality of, or N, programs, should be simultaneously picture-recorded (in a step S252). Herein, N is any integer and N ≧ 2.

If N programs should be simultaneously picture-recorded (Yes in the step S252), then first, the tuner operation section 251 adds the tuner 11 which is an internal tuner as a candidate for the choice (in a step S253). The choice candidate means a tuner which can be chosen as the tuner to be used for receiving the N programs simultaneously. If only an internal tuner is added as the choice candidate, the choice candidate is merely one tuner. Therefore, the tuner operation section 251 decides at the same time in the step S253 that the choice candidates is short of N, or the choice candidates < N.

Next, the external-tuner detection section 252 detects the usage state of one or more, or M, external tuners which are connected to the program reservation and picture-recording apparatus 1F (in a step S254). Herein, M is any integer and M **≧** 1. The M external tuners are, for example, the tuners 211 and 231.

Sequentially, the external-tuner detection section 252 decides based on this usage state whether or not an unused tuner is included in the M external tuners (in a step S255). Herein, the unused tuner means an external tuner which is not used to display a received program in a monitor. For example, in the TV receiver 210, if the tuner 211 is not used to display the program it has received in the monitor 215, the tuner 211 is an unused tuner. In contrast, an external tuner which is used for displaying a received program in a monitor is called a used tuner. If an unused tuner is included in the M external tuners (Yes in the step S255), the tuner operation section 251 adds this unused tuner to candidates for the choice (in a step S256).

Next, the tuner operation section 251 decides whether or not the number of tuners which is obtained by adding unused tuners to the internal tuners is N or more, in other words, the number of candidates for the choice is N or more (in a step S257). In the decision of the step S257, if the number of choice candidates is N or more (Yes in the step S257), the tuner operation section 251 chooses, from among the choice candidates, N tuners which should be used for the reception of N programs (in a step S264). In other words , the tuner operation section 251 allocates N tuners which should be used for the reception of N programs to the choice candidates. Further, the tuner operation section 251 assigns, to the N tuners it has chosen, the channels which correspond to the N programs. Then, it operates the channels of these N tuners according to the allocation (in a step S265).

Sequentially, the processing goes the way of steps S266 and S267. The step S266 has the contents of a processing in which, while N programs are being simultaneously picture-recorded, a user makes an operation for changing the channel of the external tuner which is being used for the picture recording of a program. On the other hand, in the step S267, a processing is executed for finishing the picture recording of a program at the time when the program's picture-recording completion time has arrived. The steps S266 and S267 will be described later.

After the step S267, when the processing should be terminated, such as the case where a user operates the key 18 or the like so that all the operations of the program reservation and picture-recording apparatus 1F will come to a halt (Yes in a step S268), the program reservation and picture-recording apparatus 1F ends the entire processing of Fig. 47. In an ordinary case where the processing should not be terminated, it returns the processing to the step S251.

In the step S252, if the number of programs which should be simultaneously picture-recorded is not plural (No in the step S252), the tuner operation section 251 uses the tuner 11 which is an internal tuner for the reception of the program to be picture-recorded (in a step S269). Thereafter, the processing shifts to the step S266.

In the step S257, if the choice candidates < N (No in the step S257), the external-tuner detection section 252 decides based on the usage state it has detected whether or not a used tuner is included in the external tuners (in a step S258). If a used tuner is not included in the external tuners (No in the step S258), the processing goes to the step S264. At this time, since the choice candidates < N, not all the N programs can be assigned for the choice candidates in the step S264. Therefore, the tuner operation section 251 allocates, to all the choice candidates, only the programs which are as many as the choice candidates, out of the N programs.

In the decision of the step S258, if a used tuner is included in the external tuners (Yes in the step S258), or if the decision of the step S255 is negative (No), then the external-tuner detection section 252 decides whether or not, among these used tuners, there is the one which is receiving any of the N programs (in a step S259). If the decision result of the step S259 is positive (Yes), the tuner operation section 251 adds the used tuner which is receiving any of the N programs to the choice candidates (in a step S260).

Next, the tuner operation section 251 decides whether or not the number of candidates for the choice is N or more (in a step S261). If the number of candidates for the choice is N or more (Yes in the step S261), the processing goes to the step S264. In contrast, unless the number of candidates for the choice reaches N (No in the step S261), the external-tuner detection section 252 decides based on the usage state it has detected in the step S254 whether or not, among the used tuners, there is the one which is not receiving any of the N programs (in a step S262). If the decision result of the step S262 is negative (No), the processing shifts to the step S264. On the other hand, if the decision result of the step S262 is positive (Yes), the processing goes to the step S263. Further, if the decision of the step S259 is negative (No), then in the same way, the processing goes to the step S263.

As shown in Fig. 48, when the processing of the step S263 begins, first, the tuner operation section 251 chooses one of the used tuners which are not receiving any of the N programs (in a step S281). Next, the tuner operation section 251 determines, out of the N programs, a program which should be allocated to the used tuner it has chosen (in a step S282). Sequentially, the first warning display section 254 outputs, as the first warning display signal, a signal to display a warning for inquiring whether to give permission to change the channel of the chosen used tuner (in a step S283).

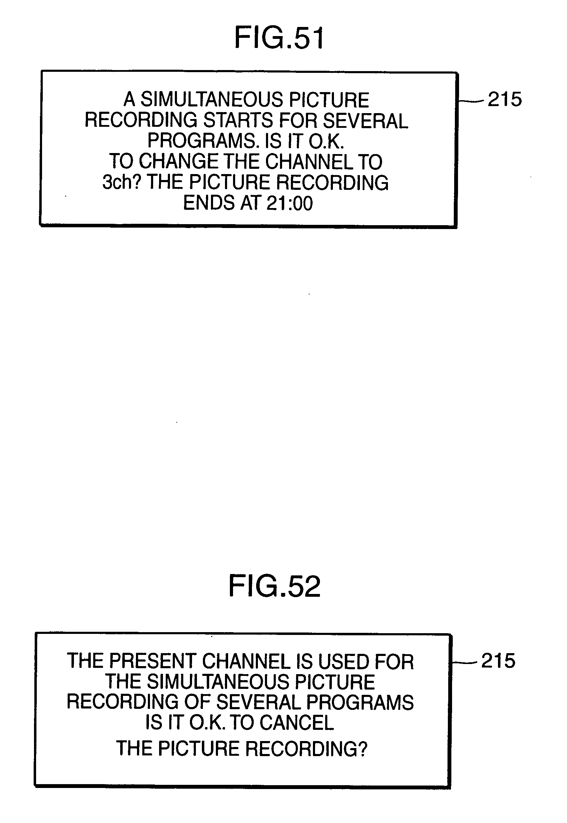

Fig. 51 is an illustration, showing an example of the warning which is displayed by the first warning display signal. Fig. 51 shows an example in which the chosen used tuner is the tuner 211 provided in the TV receiver 210, and as a result, a warning is displayed in the monitor 215. The warning includes the channel number which corresponds to the program allocated to the used tuner in the step S282 and the picture-recording completion time of the allocated program. Thereby, the user who is viewing a program in the TV receiver 210 can obtain an appropriate material for deciding whether to permit changing the channel.

Moving back to Fig. 48, after the step S283, the tuner operation section 251 decides whether or not the first choice-signal reception section 256 has received, as the first choice signal, a signal to permit changing the channel in response to the first warning display signal outputted in the step S283 (in a step S284). Every time a circle is made around the loop of the steps S281 to S287, a new used tuner is chosen in the step S281 and a first warning display signal is outputted for this new used tuner in the step S283. Therefore, in the step S284, a decision is generally made whether it has received, or not, a first choice signal to permit changing the channel in response to any first warning display signal which was already outputted.

If the decision result of the step S284 is positive (Yes), the tuner operation section 251 adds the used tuner which corresponds to the first choice signal to the choice candidates (in a step S285). After the step S285, or if the decision of the step S284 is negative (No), then the tuner operation section 251 decides whether or not the number of candidates for the choice is N or more (in a step S286). If the number of candidates for the choice is N or more (Yes in the step S286), the processing of the step S263 comes to an end. In contrast, unless the number of candidates for the choice is below N (No in the step S286), the tuner operation section 251 decides whether or not, among the used tuners which are not receiving any of the N programs, there is the one which has not been given the warning by the first warning display signal (in a step S287).

If the decision result of the step S287 is positive (Yes), the processing goes back to the step S281. On the other hand, if the decision result of the step S287 is negative (No), the tuner operation section 251 decides whether or not, among the first warning display signals which were already outputted, there is the one which has not yet been given the first choice signal to permit changing the channel in response to them (in a step S288).

If the decision result of the step S288 is negative (No), the processing of the step S263 comes to an end. In contrast, if the decision result of the step S288 is positive (Yes), the tuner operation section 251 decides whether or not the time which has elapsed after the first warning display signal was outputted in the step S283 executed last has exceeded a predetermined waiting time (in a step S289). This waiting time is equivalent to a period of time which is given by a user so that a response can be made. If the waiting time has passed (Yes in the step S289), the processing of the step S263 comes to an end. On the other hand, if the waiting time has not passed (No in the step S289), the processing returns to the step S284. In the case where the step S289 is executed, the decision of the step S287 cannot be positive (Yes). Hence, thereafter, unless a fresh first choice signal is received in the step S284, the loop of the steps S284 to S289 is repeatedly executed until the waiting time elapses.

Returning to Fig. 47, if the processing of the step S263 has finished, the processing goes to the step S264. As described already, if the processing of the step S264 and S265 has ended, the processing shifts to the step S266.

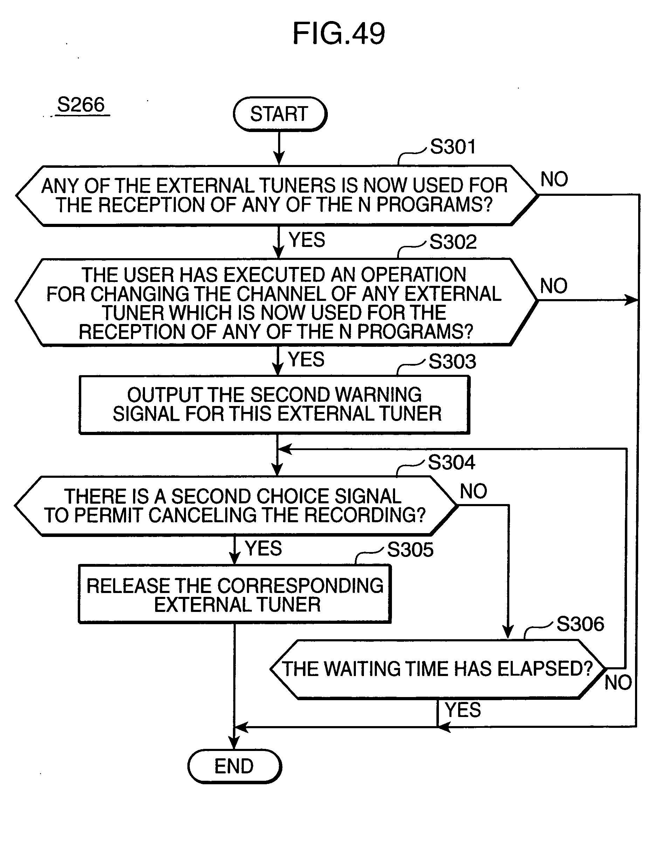

As shown in Fig. 49, when the processing of the step S266 begins, the external-tuner detection section 252 decides whether or not any of the external tuners is now used for the reception of any of the N programs (in a step S301). If the decision result of the step S301 is positive (Yes), the external-tuner detection section 252 decides whether or not a user has executed an operation for changing the channel of any of the (one or more) external tuners which are being used for the reception of the N programs (in a step S302) . For example, when both the tuners 211 and 231 as external tuners are now used for the reception of the N programs, if a user has executed a button operation or the like for changing the channel of the tuner 211 so that the user can start to view a program using the TV receiver 210, a positive decision (Yes) is obtained in the step S302.

If the decision result of the step S302 is positive (Yes), the second warning display section 254 outputs, to the tuner which is an object for changing channels, as the second warning display signal, a signal to display the fact that the tuner is now used and display a warning for inquiring whether or not the picture-recording should be cancelled (in a step S303). Fig. 52 is an illustration, showing an example of the warning which is displayed by the second warning display signal. Fig. 52 shows an example in which the tuner which is an object for a user changing channels is the tuner 211 provided in the TV receiver 210, and as a result, a warning is displayed in the monitor 215. Such a warning is displayed, and thus, a user who is trying to view a program using the TV receiver 210 can decide whether or not the user should view the program other than the picture-recorded program by daring to cancel the picture recording by the tuner 211.

Moving back to Fig. 49, after the step S303, the tuner operation section 251 decides whether or not the second choice-signal reception section 257 has received, as the second choice signal, a signal to permit changing the channel in response to the second warning display signal outputted in the step S303 (in a step S304). Then, unless the tuner operation section 251 confirms that the second choice signal to permit changing the channel has been received, it reiterates the decision of the step S304 until the elapse of a predetermined waiting time (in a step S306).

If the decision result of the step S304 is positive (Yes), the tuner operation section 251 removes restriction on the channel choice of the external tuner which is an object for the warning, or the tuner 211 in the above described example. Thereby, such a channel choice is left to a user's operation (in a step S305). In other words, the initiative in choosing the channel of the external tuner which is an object for the warning is transferred to a user from the tuner operation section 251. Thereafter, the processing of the step S266 comes to an end. If the decision result of the step S301 is negative (No), if the decision result of the step S302 is negative (No), and if the waiting time has passed in the step S306 (Yes in the step S306), the processing of the step S266 also comes to an end.

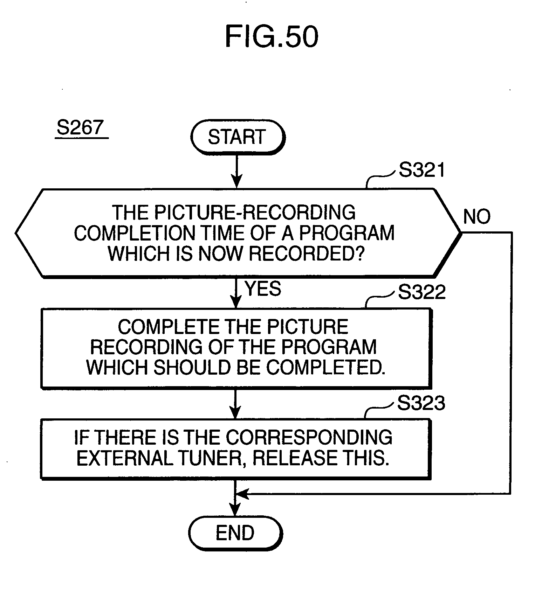

Returning to Fig. 47, if the processing of the step S266 has finished, the processing goes to the step S267. As shown in Fig. 50, if the processing of the step S267 starts, based upon the reservation information stored in the reservation-information memory 62, the time clocking section 64 decides whether or not, for any (in general, one or more) of the one or more programs whose pictures are now recorded, the current time has reached the program picture-recording completion time written in the reservation information (in a step S321). If the current time has reached the program picture-recording completion time (Yes in the step S321), the picture-recording control section 70F puts an end to the picture recording of the program which should be completed (in a step S322). Thereafter, based upon an instruction of the picture-recording control section 70F, if the tuner receiving the program which is an object for the completion is an external tuner, the tuner operation section 251 removes restriction on the channel choice of this external tuner (in a step S323). If the processing of the step S323 is completed, or if the decision result of the step S321 is negative (No), then the processing of the step S267 comes to an end.

As described so far, the program reservation and picture-recording apparatus 1F is used by connecting, to itself, M (≧1) TV-receivers, for example, the TV receivers 210 and 230. Thereby, in the program reservation and picture-recording apparatus 1F, if the reservation information includes N (≧ 2) programs which are different from each other in the channel and should be simultaneously picture-recorded, then in addition to the tuner 11 provided in itself, the external tuners provided in the M TV-receivers, for example, the tuners 211 and 231, are effectively used. Thereby, the pictures of N programs can be concurrently recorded. Hence, if the number of such connected TV-receivers is increased, the number N of programs which can be simultaneously picture-recorded can be increased within the capacity of the decoder 12F or the like.

Furthermore, if there is an external tuner which is now used for the viewing of a program by a user, the program reservation and picture-recording apparatus 1F confirms the user's intention. Then, it uses the external tuner which is now used by the user for the simultaneous picture recording of N programs. Moreover, even if a user has executed an operation for changing the channel of any of external tuners which are used for the simultaneous picture recording of N programs, for example, the tuners 211 and 231, the program reservation and picture-recording apparatus 1F confirms the user's intention. Then, it continues using the external tuner which the user is trying to use for the simultaneous picture recording of the N programs. In this way, the program reservation and picture-recording apparatus 1F can record the pictures of N programs concurrently, as long as a user permits doing so. Therefore, the program reservation and picture-recording apparatus 1F can realize the viewing of a program by a user and the simultaneous picture recording of N programs in a harmonious form.

### (Variation 1 of the seventh embodiment)

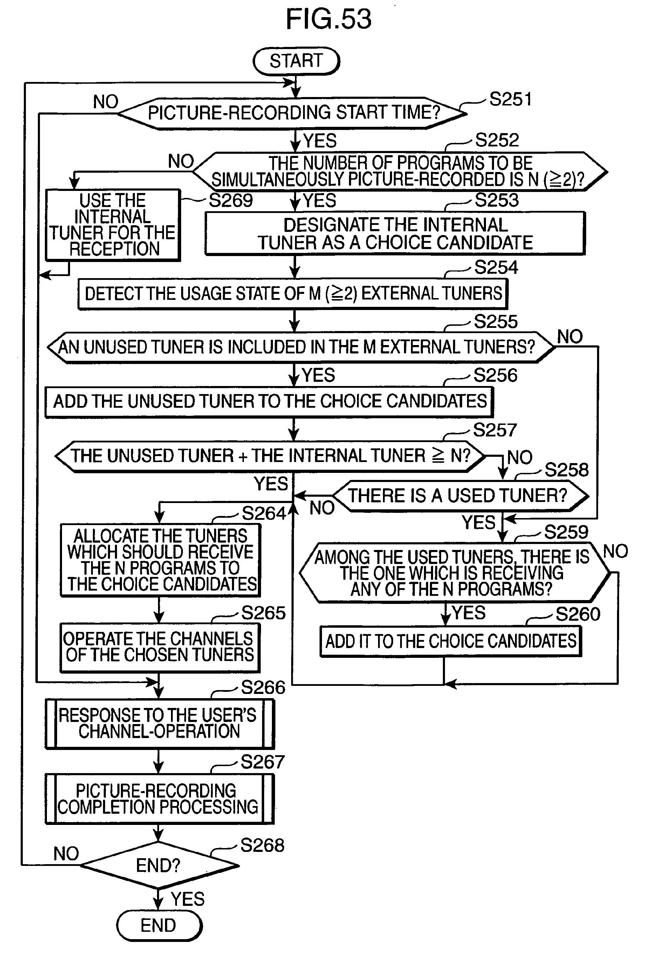

The program reservation and picture-recording apparatus 1F may also execute along the procedure shown in the flow chart of Fig. 53, instead of the flow chart of Fig. 47. In the program reservation and picture-recording apparatus 1F which has this form, there is no need to provide the first warning display section 254 and the first choice-signal reception section 256 shown in Fig. 45. The processing procedure of Fig. 53 is different from the processing procedure of Fig. 47, in the following points. The steps S261, S262 and S263 are removed, and the processing shifts to the step S264 after the step S260 is completed or the decision result of the step S259 is negative (No).

Specifically, in the processing procedure of Fig. 53, if there is an external tuner which is now used for the viewing of a program by a user, then without confirming the user's intention, the program reservation and picture-recording apparatus 1F unconditionally excludes the external tuner which is now used by the user from the tuners for the simultaneous picture-recording of N programs. Thereby, the program reservation and picture-recording apparatus 1F in the form of Fig. 53 can record the pictures of several programs concurrently to such a degree that a user cannot be prevented from viewing a program.

### (Variation 2 of the seventh embodiment)

In addition, the program reservation and picture-recording apparatus 1F according to the seventh embodiment realizes the simultaneous picture recording of a plurality of programs, using the tuners 11, 211 and 231. However, in addition to the tuners 11 , 211 and 231, the decoders 12F, 212 and 233 may also be used so that the pictures of several programs can be concurrently recorded. In this case, there is no need for the decoder 12F to have a great processing capacity. For example, it may also be the one which is capable of decoding only a single program.

### [Other Embodiments]

The above described embodiments can be implemented by combining them suitably. Furthermore, in each embodiment described so far, the program reservation and picture-recording apparatus 1, 1A, 1B, 1C, 1D, 1E and 1F is configured as an apparatus which reserves and picture-records a TV broadcast program. However, the program reservation-and-recording apparatus according to the present invention can also be implemented as an apparatus which reserves and records a radio broadcast program. Moreover, in general, it is not limited to the one for a broadcast program. It can also be implemented as an apparatus which receives information whose provision time is given in advance as a program and that reserves and records it.

### [Summary of the Embodiments]

The summary of the embodiments of the present invention will be described below.
(1) A program reservation-and-recording apparatus is the program reservation-and-recording apparatus which records a reserved program in a recording medium, comprising: a reservation-information input section which accepts a reservation for a program by a user; a reservation-information memory which stores reservation information which indicates the contents of a reservation for a program; a recording control section which records the program in the recording medium, based on the reservation information; a program-list acquisition section which makes a request to an information-providing server that is connected via a general-purpose network, and from the information-providing server, acquires a program list on which a program time is described for each program; and a reservation-information update section which updates the reservation information that is stored in the reservation-information memory, based on the acquired program list.
   According to this configuration, based on reservation information stored in the reservation-information memory, a program is recorded in the recording medium. Besides, based on a program list acquired from the information-providing server, the reservation information is updated. Therefore, when the time or the like of a program is changed, the reservation can be automatically changed. Furthermore, the program reservation-and-recording apparatus acquires a program list by request. Therefore, the load on the information-providing server can be lightened which is imposed when the program list is provided. In addition, a program list is acquired through a general-purpose network, and there is no need to receive the provision of a program list using a vertical blanking interval which is a space in an electronic radio wave transmitted from a broadcasting station. Therefore, it can be also used for the reservation and recording of a program except for an analog TV-broadcast program, for example, a digital TV-broadcast program.
(2) A program reservation-and-recording apparatus is the program reservation-and-recording apparatus (1), wherein: a time when the program-list acquisition section acquires the program list includes a time immediately before a program-recording start time which is described in the reservation information.
   According to this configuration, a program list is acquired immediately before a program-recording start time written in the reservation information. Therefore, even if a program time is changed by the time immediately before a reserved program starts to be recorded, a response to this change is automatically made so that the reserved program can be recorded.
(3) A program reservation-and-recording apparatus is the program reservation-and-recording apparatus (1) or (2), wherein: a time when the program-list acquisition section acquires the program list includes a time immediately before a program-recording completion time which is described in the reservation information.
   According to this configuration, a program list is acquired immediately before a program-recording completion time written in the reservation information. Therefore, even if a program completion time is changed for a reserved program's extension by the time immediately before the reserved program finishes being recorded, a response to this change is automatically made so that the reserved program can be recorded.
(4) A program reservation-and-recording apparatus is any of the program reservation-and-recording apparatuses (1) to (3), wherein: a time when the program-list acquisition section acquires the program list includes a time after a program-recording completion time which is described in the reservation information; and the program reservation-and-recording apparatus further comprises an erasure control section which makes a decision, based on the program list acquired at the time after the program-recording completion time, whether or not an unreserved program is included within a recording time for the program whose recording has already been completed, and if it is included, erases the unreserved program from the recording medium.
   According to this configuration, a program list is acquired at the time after a program completion time which is described in the reservation information. On the basis of this program list, if an unreserved program is included within the recording time of the program whose recording is already completed, this unreserved program is erased from the recording medium. This helps save a user from erasing an unreserved program manually from the recording medium.
(5) A program reservation-and-recording apparatus is the program reservation-and-recording apparatus (4), wherein: the time when the program-list acquisition section acquires the program list includes a time when a program reservation is made in the reservation-information input section; the program list includes a program identifier for each program which is a code for identifying a program; the reservation-information input section includes a program-identifier extraction section which extracts the program identifier which corresponds to a program for which a reservation is made by the user from the program list acquired at a time when the program is reserved, and stores it as a part of the reservation information in the reservation-information memory; and the erasure control section makes the decision by comparing the program identifier of the program whose recording is completed and a program identifier on the program list acquired at the time after the program-recording completion time.
   According to this configuration, a program list is acquired at the time when a program reservation is made. Besides, the program list includes a program identifier. Then, the program identifier which corresponds to the program for which the reservation has been made is extracted and is stored as a part of the reservation information. This program identifier is compared with a program identifier on the program list which is newly acquired after the program recording has been completed, and thereby, a decision is made whether or not there is an unreserved program. This makes it possible to decide easily and quickly whether or not there is an unreserved program.
(6) A program reservation-and-recording apparatus is any of the program reservation-and-recording apparatuses (1) to (4), wherein: a time when the program-list acquisition section acquires the program list includes a time when a program reservation is made in the reservation-information input section and a time subsequent to it; the program list includes a program identifier for each program which is a code for identifying a program; the reservation-information input section includes a program-identifier extraction section which extracts the program identifier which corresponds to a program for which a reservation is made by the user from the program list acquired at the time when the program is reserved, and stores it as a part of the reservation information in the reservation-information memory; and the reservation-information update section compares the program identifier of the program for which the reservation is made and a program identifier on the program list acquired after the time when the reservation is made, and retrieves information on the program list so as to update the reservation information.
   According to this configuration, a program list is acquired at the time when a program reservation is made. Besides, the program list includes a program identifier. Then, the program identifier which corresponds to the program for which the reservation has been made is extracted and is stored as a part of the reservation information. This program identifier is compared with a program identifier on the program list which is newly acquired after the program reservation has been completed, and thereby, the information on the program list is retrieved so as to update the reservation information. This makes it possible to execute this retrieval easily and swiftly.
(7) A program reservation-and-recording apparatus is any of the program reservation-and-recording apparatuses (1) to (4), wherein: a time when the program-list acquisition section acquires the program list includes a time when a program reservation is made in the reservation-information input section; the program list includes a program identifier for each program which is a code for identifying a program; the program identifier includes an identifier for identifying whether or not a corresponding program is a final one of serial programs; and the reservation update section erases the contents of a periodic recording reservation for the serial programs from the reservation information based on the identifier, after a recording of the final program is completed.
   According to this configuration, based on an identifier which is included in a program identifier and identifies whether or not a recording is the final one of serial programs, the contents of a periodic recording reservation for the serial programs are erased from the reservation information after the final recording has been completed. This helps save a user from erasing the periodic recording reservation of serial programs manually after their final broadcast has been recorded.
(8) A program reservation-and-recording apparatus is the program reservation-and-recording apparatus which records a reserved program in any of a plurality of recording media, comprising: a reservation-information memory which stores reservation information which indicates the contents of a reservation; and a recording control section which decides whether or not there is a blank area large enough to record a program to be recorded in a reserved recording medium at a program-recording start time given by the reservation information, records this program in the reserved recording medium if there is the blank area in the reserved recording medium, and unless there is the blank area in the reserved recording medium and if there is the blank area in another recording medium, records the program in another such recording medium.
   According to this configuration, a reserved program can be recorded in any of a plurality of recording media. Before the reserved program begins to be recorded, a decision is made whether or not there is a recordable blank area in a reserved recording medium. If there is the recordable blank area, the program is recorded in the reserved recording medium. On the other hand, if there is no recordable blank area, it is recorded in another recording medium if it has such a recordable blank area. Therefore, a part or the whole of a program reserved by a user can be prevented from being unconditionally left out without recorded because of a shortage of a blank area in a reserved recording medium.
(9) A program reservation-and-recording apparatus is the program reservation-and-recording apparatus (8), wherein: the program reservation-and-recording apparatus further comprises an encoding section which executes data compression of the program; and if there is no blank area in the reserved recording medium and if there is no blank area in any other recording medium, the recording control section records the program in the reserved recording medium by allowing the encoding section to execute the data compression of the program.
   According to this configuration, if there is no recordable blank area in the reserved recording medium and if there is no recordable blank area in any other recording medium, a program to be recorded is data-compressed so as to be recorded in the reserved recording medium. Therefore, a part or the whole of a program reserved by a user can be further restrained from being left out without being recorded because of a shortage of a blank area.
(10) A program reservation-and-recording apparatus is the program reservation-and-recording apparatus which records a reserved program in a recording medium, comprising: a tuner which receives the program; an output section which outputs the program received by the tuner to a monitor; a reservation-information memory which stores reservation information which indicates the contents of a reservation; a channel decision section which decides whether or not the same channel as the channel of the program to be recorded is chosen in the tuner, immediately before a program-recording start time which is determined by the reservation information; a warning display section which outputs a signal to display a warning for inquiring whether or not the reservation should be cancelled, if a different channel from the channel of the program to be recorded is chosen in the tuner; an operation input section which accepts a choice operation by the user on whether or not the reservation should be cancelled; a recording control section which changes the channel chosen in the tuner to the channel of the program to be recorded unless the reservation is cancelled, and records the program in the recording medium; and a reservation cancellation section which erases the reservation of the program to be recorded from the reservation-information memory, if the reservation is cancelled.
   According to this configuration, if a different channel from the channel of the program to be recorded is chosen in the tuner, a signal is outputted to display a warning for inquiring whether or not the reservation should be cancelled. Unless the user cancels the reservation, the channel chosen in the tuner is changed to the channel of the program to be recorded. Then, the reserved program is recorded in the recording medium. On the other hand, if the user cancels the reservation, the reservation of the program to be recorded is erased from the reservation-information memory. Therefore, a reserved program can be prevented from being unconditionally omitted from its recording because a different channel is used in the tuner.
(11) A program reservation-and-recording apparatus is the program reservation-and-recording apparatus which records a reserved program in a recording medium where reading and writing can be executed at a double speed, comprising: a reservation-information memory which stores reservation information which indicates the contents of a reservation; a regeneration section which executes the regeneration of a program that is recorded in the recording medium; and a recording control section which decides whether or not the regeneration section is executing this regeneration at a program-recording start time which is determined by the reservation information, and if the regeneration section is executing the regeneration, records a program to be recorded in the recording medium in parallel with the regeneration by the regeneration section.
   According to this configuration, a double-speed readable-and-writable recording medium is an object for recording a program. Thereby, if a program is regenerated from such a recording medium in which a reserved program should be recorded, side by side with the program's regeneration, the reserved program is recorded. Therefore, a reserved program can be prevented from being unconditionally omitted from its recording because another program is being regenerated from a recording medium.
(12) A program reservation-and-recording apparatus is the program reservation-and-recording apparatus which records a reserved program in a recording medium, comprising: a plurality of tuners which receive the program; an output section which outputs the program received by any of the plurality of tuners to a monitor; a reservation-information memory which stores reservation information which indicates the contents of a reservation; a channel decision section which decides whether or not the same channel as the channel of the program to be recorded is chosen in any tuner, at a program-recording start time which is determined by the reservation information; a recording control section which, if a different channel from the channel of the program to be recorded is chosen in any such tuner, starts another tuner and records the program to be recorded in the recording medium.
   According to this configuration, a plurality of tuners are provided. Hence, if a different channel from the channel of a program to be recorded is chosen in any tuner, another tuner is started so that the program to be recorded is recorded in a recording medium. Therefore, a reserved program can be prevented from being unconditionally omitted from its recording because another channel is used in a tuner.
(13) A program reservation-and-recording apparatus is the program reservation-and-recording apparatus which records a reserved program in a recording medium, comprising: a plurality of tuners which receive the program; an output section which outputs the program received by any of the plurality of tuners to a monitor; a reservation-information memory which stores reservation information which indicates the contents of a reservation; a channel decision section which decides whether or not the same channel as the channel of the program to be recorded is chosen in any tuner, immediately before a program-recording start time which is determined by the reservation information, and decides whether or not, if a different channel from the channel of the program to be recorded is chosen in any such tuner, the program to be recorded can be received in another tuner; a warning display section which outputs a signal to display a warning for inquiring whether or not the reservation should be cancelled, if a different channel from the channel of the program to be recorded is chosen in any such tuner and if the program to be recorded cannot be received in any other tuner; an operation input section which accepts a choice operation by the user on whether or not the reservation should be cancelled; a recording control section which, if a different channel from the channel of the program to be recorded is chosen in any such tuner and if the program to be recorded can be received in another tuner, starts another such tuner and records the program to be recorded in the recording medium, and if a different channel from the channel of the program to be recorded is chosen in any such tuner and if the program to be recorded cannot be received in any other tuner, changes the channel chosen in any such tuner to the channel of the program to be recorded unless the reservation is cancelled and records the program in the recording medium; and a reservation cancellation section which erases the reservation of the program to be recorded from the reservation-information memory, if the reservation is cancelled.
   According to this configuration, a plurality of tuners are provided. Hence, if a different channel from the channel of a program to be recorded is chosen in any tuner and if the program to be recorded cannot be received in any other tuner, then a signal is outputted to display a warning for inquiring whether or not the reservation should be cancelled. On the other hand, if a different channel from the channel of the program to be recorded is chosen in any such tuner and if the program to be recorded can be received in another tuner, then another such tuner is started so that the program to be recorded is recorded in the recording medium. Further, if a different channel from the channel of the program to be recorded is chosen in any such tuner, if the program to be recorded cannot be received in any other tuner and if the reservation is not cancelled, the channel chosen in any such tuner is changed to the channel of the program to be recorded and the program to be recorded is recorded in the recording medium. Further, if the reservation is cancelled, the reservation of the program to be recorded is erased from the reservation-information memory. Therefore, a reserved program can be further restrained from being unconditionally left out without being recorded because another channel is used in a tuner.
(14) A program reservation-and-recording apparatus is the program reservation-and-recording apparatus (10) or (13), wherein: the warning display section outputs, as the signal to display the warning, a signal to display a choice item for canceling the reservation and a choice item for not canceling the reservation.
   According to this configuration, a signal to display a choice item for canceling a reservation and a choice item for not canceling the reservation are outputted as the signal to display the warning. Therefore, a user can execute such a choice operation easily.
(15) A program reservation-and-recording apparatus is the program reservation-and-recording apparatus (10) or (13), wherein: the program reservation-and-recording apparatus further comprises a display; the operation input section includes the reservation-cancellation button; the display includes a lamp which is embedded in the reservation-cancellation button; and the warning display section outputs, to the display, a signal to flash the lamp on and off as the signal to display the warning.
   According to this configuration, a warning is displayed by blinking the lamp incorporated in the reservation-cancellation button. Therefore, a user can execute a choice operation easily. Besides, this structure is simple, thus cutting down the cost of manufacturing the apparatus.
(16) A program reservation-and-recording apparatus is the program reservation-and-recording apparatus which records a reserved program in a recording medium, comprising: a reservation-information input section which accepts a reservation for a program by a user; and a reservation-information transmission section which, every time a new program reservation is made, transmits the contents of this reservation to a program reservation-information management server which is connected via a general-purpose network and supplies program-reservation statistical information.
   According to this configuration, every time a new program reservation is made, its reservation contents are transmitted to the program reservation-information management server. This can automatically contribute toward creating program statistical information. Besides, the reservation contents are transmitted via a general-purpose network, so that costs for a circuit connection can be prevented from being greater. Hence, this apparatus is suitable as an apparatus for home and personal use.
(17) A program reservation-and-recording apparatus is the program reservation-and-recording apparatus (16), wherein: the program reservation-and-recording apparatus further comprises a program-list acquisition section which makes a request to an information-providing server connected via a general-purpose network if a request for a reservation is made to the reservation-information input section, and acquires, from the information-providing server, a program list including a program identifier which is a code for identifying a program, a program channel and a program time for each program; the reservation-information input section includes a program-identifier extraction section which extracts, from the program list, the program identifier which corresponds to a program for which a reservation is made by the user; and the reservation-information transmission section transmits the extracted program identifier as the reservation contents to the program reservation-information management server.
   According to this configuration, a request is made to the information-providing server when a request for a program reservation has been made, so that a program list including a program identifier is acquired. From this program list, the program identifier which corresponds to a reserved program is extracted and is transmitted to the program reservation-information management server. This helps lessen the quantity of a signal to be transmitted and reduce transmission costs. It also helps lighten the load on the program reservation-information management server when it receives the signal.
(18) A program reservation-and-recording apparatus is the program reservation-and-recording apparatus (17), wherein: the reservation-information input section further includes a program-list display section which outputs a signal to display the acquired program list, and a program choice section which accepts a choice operation from the program list for a program to be reserved by the user.
   According to this configuration, a signal is outputted to display a program list acquired when a program-reservation request has been made. Thereby, a choice operation by a user is accepted, so that the user can reserve a program easily. Besides, a program list includes a program identifier, so that the program identifier which corresponds to a reserved program can be easily extracted.
(19) A program reservation-and-recording apparatus is any of the program reservation-and-recording apparatuses (16) to (18), wherein: the program reservation-and-recording apparatus further comprises a reservation statistical-information acquisition section which makes a request to the program reservation-information management server and acquires the program-reservation statistical information from the program reservation-information management server; and the reservation-information input section includes a program reservation section which refers to the program-reservation statistical information and reserves a program.
   According to this configuration, program-reservation statistical information is acquired from the program reservation-information management server. Then, the acquired program-reservation statistical information is referred to, so that a program is reserved. Therefore, a reservation can be automatically made which reflects a wide range of users' inclinations for a program. Moreover, the program reservation-and-recording apparatus acquires program-reservation statistical information based on a request. This helps lighten the load on the program reservation-information management server which is imposed when the program-reservation statistical information is provided.
(20) A program reservation-and-recording apparatus is the program reservation-and-recording apparatus (19), wherein: the reservation-information input section further includes a database creation section which accumulates a user's inclinations for a program reservation as a database; and the program reservation section refers to the program-reservation statistical information as well as the database and reserves a program.
   According to this configuration, in the program reservation-and-recording apparatus, a user's inclinations for a program reservation are accumulated as a database. Not only the program-reservation statistical information, but also the database, is referred to, so that a program is reserved. Therefore, an automatic reservation for a program can be realized which reflects a wide range of users' inclinations as well as a user's inclinations in the program reservation-and-recording apparatus.
(21) A program reservation-and-recording apparatus is the program reservation-and-recording apparatus (19) or (20), wherein: the reservation-information transmission section does not transmit the reservation contents on a program which is reserved by the program reservation section to the program reservation-information management server.
   According to this configuration, in terms of a program which has been reserved by the program reservation section, specifically, a program which has been reserved by referring to program-reservation statistical information, its reservation contents are not transmitted to the program reservation-information management server. Therefore, the program-reservation statistical information can be prevented from being disturbed by a feedback effect.
(22) A program reservation-and-recording apparatus is any of the program reservation-and-recording apparatuses (16) to (21), wherein: the program-reservation statistical information is the number of reservations for each program, or the ranking of the number of reservations.
   According to this configuration, the program-reservation statistical information is the number of reservations for each program, or the ranking of the number of reservations. Therefore, an automatic reservation for a program can be realized which reflects the popularity.
(23) A program reservation-and-recording apparatus is any of the program reservation-and-recording apparatuses (16) to (21), wherein: the program-reservation statistical information is audience-rating prediction information on each program.
   According to this configuration, the program-reservation statistical information is audience-rating prediction information on each program. Therefore, an automatic reservation for a program can be realized which reflects the height of a predicted audience rating.
(24) A program reservation-and-recording apparatus is any of the program reservation-and-recording apparatuses (1) to (7), (17) and (18), comprising: an apparatus-identifier memory which stores an apparatus identifier for identifying the program reservation-and-recording apparatus itself; and an apparatus-identifier transmission section which transmits the apparatus identifier to the information-providing server when communication is executed between the program reservation-and-recording apparatus itself and the information-providing server.
   According to this configuration, an apparatus identifier is stored for identifying the program reservation-and-recording apparatus itself. When communication is executed between the program reservation-and-recording apparatus itself and the information-providing server, the apparatus identifier is transmitted to the information-providing server. Therefore, the information-providing server can execute authentication using the apparatus identifier. Besides, a program list which should be provided can be encoded using the apparatus identifier.
(25) A program reservation-information management server, comprising: a reservation-information accumulation section which accumulates reservation information indicating the contents of a reservation for a program that is transmitted from a plurality of program reservation-and-recording apparatuses which are connected via a general-purpose network; a reservation statistical-information creation section which collects the accumulated reservation information and creates program-reservation statistical information; and a reservation statistical-information provision section which sends the program-reservation statistical information in response to a request from the plurality of program reservation-and-recording apparatuses.
   According to this configuration, reservation information is accumulated which is transmitted from a plurality of program reservation-and-recording apparatuses. Then, the accumulated reservation information is collected to create program-reservation statistical information. Sequentially, the program-reservation statistical information is sent in reply to requests from the program reservation-and-recording apparatuses. Therefore, a program reservation-and-recording apparatus can use program-reservation statistical information based on reservation information on a plurality of users. Besides, the program-reservation statistical information is sent in reply to requests from the program reservation-and-recording apparatuses. This helps lighten the load on the program reservation-information management server which is imposed when the program-reservation statistical information is provided.
(26)A program reservation-information management server is the program reservation-information management server (25), wherein: the reservation statistical-information creation section includes a reservation-number statistical section that creates the number of reservations for each program, or the ranking of the number of reservations.
   According to this configuration, the reservation statistical-information creation section includes a reservation-number statistical section that creates the number of reservations for each program, or the ranking of the number of reservations. Therefore, a program reservation-and-recording apparatus can acquire and use the number of reservations for each program or the ranking of the number of reservations.
(27)A program reservation-information management server is the program reservation-information management server (25) or (26), wherein: the reservation statistical-information creation section includes a audience-rating prediction section which creates audience-rating prediction information on each program.
   According to this configuration, the reservation statistical-information creation section includes a audience-rating prediction section which creates audience-rating prediction information on each program. Therefore, a program reservation-and-recording apparatus can acquire and use the audience-rating prediction information on each program.
(28) A program reservation-information management server is the program reservation-information management server (26), wherein: the audience-rating prediction section creates the audience-rating prediction information by referring to the relation between a collection result of the reservation information in the past and a real audience rating.
   According to this configuration, the audience-rating prediction information is created by referring to the relation between a collection result of the reservation information in the past and a real audience rating. This makes it possible to relatively easily obtain highly-reliable audience-rating prediction information.
(29) A program reservation-information management server is the program reservation-information management server (28), wherein: the audience-rating prediction section creates the audience-rating prediction information by referring to the relation between a collection result of the reservation information for each program genre in the past and a real audience rating.
   According to this configuration, the relation between a collection result of the reservation information for each program genre in the past and a real audience rating is referred to, so that the audience-rating prediction information is created taking into account the program genre. This makes it possible to obtain more highly-reliable audience-rating prediction information.
(30) A program reservation-information management server is the program reservation-information management server (28) or (29), wherein: the audience-rating prediction section creates the audience-rating prediction information by referring to the relation between a collection result of the reservation information for each program time in the past and a real audience rating.
   According to this configuration, the relation between a collection result of the reservation information for each program time in the past and a real audience rating is referred to, so that the audience-rating prediction information is created taking into account the program time. This makes it possible to obtain more highly-reliable audience-rating prediction information.
(31)A program reservation-information management server is any of the program reservation-information management servers (27) to (29), wherein: a user-information accumulation section which accumulates user information as information on users of the plurality of program reservation-and-recording apparatuses that is transmitted from the plurality of program reservation-and-recording apparatuses, and the audience-rating prediction section, that creates the audience-rating prediction information by referring to the relation between a collection result of the reservation information for each piece of user information in the past and a real audience rating.
   According to this configuration, each piece of user information is accumulated which is transmitted from the plurality of program reservation-and-recording apparatuses. Then, the relation between a collection result of the reservation information for each piece of user information in the past and a real audience rating is referred to, so that the audience-rating prediction information is created. This makes it possible to obtain more highly-reliable audience-rating prediction information.
(32) An information-providing server, comprising: a program-information acquisition section which is connected via a general-purpose network and acquires program information from a program-information provision apparatus that provides the program information; a program-identifier generation section which generates a program identifier that is a code for identifying each program included in the acquired program information; a program-list generation section which generates a program list including the program identifier, a program channel and a program time for each program on a basis of the program information and the program identifier; a program-list memory which stores the generated program list; and a program-list provision section which sends the program list stored in the program-list memory in response to a request from a plurality of program reservation-and-recording apparatuses which are connected via a general-purpose network.
   According to this configuration, program information is acquired from the program-information provision apparatus, a program identifier is generated for each program included in this program information, and a program list including this program identifier is sent in reply to a request from the program reservation-and-recording apparatuses. Therefore, a program reservation-and-recording apparatus can use a useful program list including a program identifier. Besides, a program list is sent in response to a request from the program reservation-and-recording apparatuses. Thereby, the load on the information-providing server can be lightened which is imposed when the program list is provided.
(33) An information-providing server is the information-providing server (32), comprising: a program-identifier reply-sending section which sends, in response, the program identifier of each program to the program-information provision apparatus; a program change-information acquisition section which, if the start time or completion time of a program is changed, acquires the changed time and the program identifier of the program that undergoes this change as program change information from the program-information provision apparatus; a program-list retrieval section which compares the program identifier included in the program change information and the program identifier in the program list stored in the program-list memory, and retrieves the program to be changed in the program list stored in the program-list memory; and a program-list change section which changes the start time or completion time of the retrieved program in the program list stored in the program-list memory, according to the program change information.
   According to this configuration, a program identifier is sent in reply to the program-information provision apparatus from which program information is acquired. Thereby, if the time of a program has been changed, the changed time and the program identifier are acquired from the program-information provision apparatus. Then, program identifiers are compared each other, the program to be changed in the program list stored in the program-list memory is retrieved, and the program time of the retrieved program is changed. Therefore, the program time can easily be changed in the program list.
(34) An information-providing server, comprising: a database memory which accumulates an apparatus identifier for identifying each of a plurality of program reservation-and-recording apparatuses connected via a general-purpose network, the apparatus identifier being transmitted beforehand from the plurality of program reservation-and-recording apparatuses; a program-list memory which stores a program list including a program channel and a program time for each program; a collation section which executes authentication by collating the apparatus identifier transmitted together with a transmission request for the program list from the plurality of program reservation-and-recording apparatuses, with an apparatus identifier accumulated in the database memory; and a program-list provision section which, only in the case where the authentication is established, sends the program list stored in the program-list memory in response to the transmission request.
   According to this configuration, an apparatus identifier is accumulated which is transmitted in advance from a plurality of program reservation-and-recording apparatuses. Then, authentication is executed by collating the apparatus identifier transmitted along with a transmission request for the program list with an apparatus identifier accumulated in the database memory. Only in the case where the authentication is established, the program list is sent in reply. Therefore, the program list can be given only to a person who is eligible for the program list.
(35) An information-providing server is the information-providing server (34), wherein: the information-providing server further comprises an encoding section which transforms the program list stored in the program-list memory into an encoding form using the apparatus identifier as a key; and the program-list provision section sends, in reply, the program list in the encoding form.
   According to this configuration, the program list is sent in reply in an encoding form, using an apparatus identifier for identifying each program reservation-and-recording apparatus as a key. This helps prevent another program reservation-and-recording apparatus from intercepting the program list.
(36) A program reservation-information system comprising: a plurality of the program reservation-and-recording apparatuses according to any of the apparatuses (1) to (7), (17) and (18); and further, an information-providing server which is connected via a general-purpose network to the plurality of program reservation-and-recording apparatuses and sends the program list in response to a request from the plurality of program reservation-and-recording apparatuses.
   According to this configuration, there are provided any of the program reservation-and-recording apparatuses (1) to (7), (17) and (18), and an information-providing server which is connected via a general-purpose network to these program reservation-and-recording apparatuses and sends the program list in response to a request from these program reservation-and-recording apparatuses. Therefore, the load on the information-providing server can be lightened which is imposed when the program list is provided. At the same time, such a program list can be used by a program reservation-and-recording apparatus.
(37) A program reservation-information system comprising: any of the information-providing servers (32) to (35); and a plurality of program reservation-and-recording apparatuses which are connected via a general-purpose network to the information-providing server, send a request to the information-providing server and acquire the program list from the information-providing server.
   According to this configuration, there are provided any of the information-providing servers (32) to (35), and a plurality of program reservation-and-recording apparatuses which are connected via a general-purpose network to the information-providing server, send a request to the information-providing server and acquire the program list from the information-providing server. Therefore, the load on the information-providing server can be lightened which is imposed when the program list is provided. At the same time, such a useful program list including a program identifier can be used by a program reservation-and-recording apparatus.
(38) A program reservation-information system comprising: a plurality of the program reservation-and-recording apparatuses according to any of the apparatuses (16) to (23); and further, a program reservation-information management server which is connected via a general-purpose network to the plurality of program reservation-and-recording apparatuses, receives the reservation contents from the plurality of program reservation-and-recording apparatuses, creates the program-reservation statistical information and supplies the program-reservation statistical information.
   According to this configuration, there are provided a plurality of the program reservation-and-recording apparatuses according to any of the apparatuses (16) to (23); and, a program reservation-information management server which is connected via a general-purpose network to these program reservation-and-recording apparatuses, receives the reservation contents from these program reservation-and-recording apparatuses, and creates and supplies the program-reservation statistical information. This makes it possible to use such useful program-reservation statistical information. Besides, the reservation contents are transmitted via a general-purpose network. Therefore, in each program reservation-and-recording apparatus, costs for a circuit connection can be prevented from being greater. This facilitates the system's establishment.
(39) A program reservation-information system comprising: any of the program reservation-information management servers (25) to (31); and a plurality of program reservation-and-recording apparatuses which are connected via a general-purpose network to the program reservation-information management server, send a request to the program reservation-information management server and acquire the program-reservation statistical information.
   According to this configuration, there are provided any of the program reservation-information management servers (25) to (31), and a plurality of program reservation-and-recording apparatuses which are connected via a general-purpose network to the program reservation-information management server, send a request to this program reservation-information management server and acquire the program-reservation statistical information. Therefore, a program reservation-and-recording apparatus can use program-reservation statistical information based upon reservation information on a plurality of users. Besides, program-reservation statistical information is sent in response to a request from a program reservation-and-recording apparatus. This helps lighten the load on the program reservation-information management server which is imposed when the program-reservation statistical information is provided.
(40) A program reservation-and-recording apparatus is the program reservation-and-recording apparatus which records a reserved program in a recording medium, comprising: a reservation-information input section which accepts a reservation for a program by a user; a reservation-information memory which stores reservation information which indicates the contents of a reservation for a program; a recording control section which records the program in the recording medium, based on the reservation information and by extending its recording time for a predetermined time; a program-list acquisition section which acquires, through a network or a broadcast radio wave, a completion program list on which the real provision time of a program whose provision is completed is described; and an erasure control section which makes a decision, based on the acquired program list, whether or not an unreserved program is included within a recording time for the program whose recording is already completed, and if it is included, erases the unreserved program from the recording medium.
   According to this configuration, on the basis of reservation information indicating the contents of a reservation for a program by a user, the program is recorded in a recording medium. At this time, the program's recording time is extended by a predetermined period. Therefore, for example, in the case where the provision completion time of the program before a reserved program is put off or in another such case, even if the reserved program's provision completion time is postponed within a predetermined time from its schedule time, the entire reserved program can be recorded. Besides, based upon a completion program list on which the actual provision time of a program whose provision has been completed is written, if an unreserved program is included within the recording time of a program which has already been recorded, this unreserved program is erased from the recording medium. This releases a user from being compelled to view an unreserved unnecessary program, or manually erasing an unnecessary program from the recording medium.
(41) A program reservation-and-recording apparatus is the program reservation-and-recording apparatus (40), wherein: the reservation-information input section accepts the reservation of a program by accepting the input of information which includes a program identifier which is a code for identifying a program and is allocated beforehand to each program; the reservation-information memory stores, as the reservation information, the information which includes the program identifier; the program-list acquisition section acquires, as the completion program list, the one which includes a program identifier; and the erasure control section contrasts the program identifier which corresponds to a program whose recording is completed and the program identifier included in the acquired completion program list, and finds out the program which corresponds to the program whose recording is completed from the completion program list.
   According to this configuration, the input of a program identifier by a user is accepted, and thereby, reservation information which includes the program identifier is stored in the reservation-information memory. Then, the one which includes a program identifier is acquired as the completion program list. Thereby, the erasure control section contrasts the program identifier which corresponds to a program whose recording has been completed and the program identifier included in the completion program list. Through this contrast, it finds out the program which corresponds to the program whose recording has been completed from the completion program list. Therefore, the erasure control section can easily find out the program which corresponds to the program whose recording has been completed from the completion program list.
(42) A program reservation-and-recording apparatus is the program reservation-and-recording apparatus (40), wherein: the program-list acquisition section also acquires a scheduled-program list on which the provision schedule time of a program whose provision is not yet completed is described, through a network or a broadcast radio wave; and the reservation-information input section includes a program-list display section which outputs a list-display signal to display a scheduled-program list which is latest acquired, and a program choice section which accepts a choice operation from the scheduled-program list for a program to be reserved by the user.
   According to this configuration, a scheduled-program list is acquired, and a list-display signal is outputted to display the scheduled-program list which has been latest acquired. The list-display signal is displayed as the scheduled-program list, for example, in a display unit which is connected to the outside. Thereby, a user can recognize a program which the user should reserve. Besides, a choice operation for a program by the user is accepted in the program choice section. Therefore, instead of inputting by hand the information necessary for the program the user should reserve, the user only chooses this program from the scheduled-program list indicated in the list-display signal. This makes it possible to reserve a program easily.
(43) A program reservation-and-recording apparatus is the program reservation-and-recording apparatus (42), wherein: the program-list acquisition section acquires, as the scheduled-program list, the one which includes a program identifier which is a code for identifying a program and is allocated beforehand to each program; the reservation-information memory stores, as the reservation information, the information which includes the program identifier; the program-list acquisition section acquires, as the completion program list, the one which includes a program identifier; and the erasure control section contrasts the program identifier which corresponds to a program whose recording is completed and the program identifier included in the acquired completion program list, and finds out the program which corresponds to the program whose recording is completed from the completion program list.
   According to this configuration, as the scheduled-program list, the one which includes a program identifier is acquired. Thereby, as the reservation information, information which includes the program identifier is stored in the reservation-information memory. Then, the one which includes a program identifier is acquired as the completion program list. Thereby, the erasure control section contrasts the program identifier which corresponds to a program whose recording has been completed and the program identifier included in the completion program list. Through this contrast, it finds out the program which corresponds to the program whose recording has been completed from the completion program list. Therefore, the erasure control section can easily find out the program which corresponds to the program whose recording has been completed from the completion program list.
(44) A program reservation-and-recording apparatus is the program reservation-and-recording apparatus (41) or (43), wherein: the program identifier includes information for specifying a program's channel, provision-start schedule time and provision-completion schedule time.
   According to this configuration, the program identifier includes information which can specify a program's channel, provision-start schedule time and provision-completion schedule time. When a user reserves a program manually, all the user has to do is to input the program identifier. In short, the operation required for such a reservation becomes simpler.
(45) A program reservation-and-recording apparatus is any of the program reservation-and-recording apparatuses (40) to (44), further comprising an extension-time setting section which accepts the setting of the predetermined extension time by a user.
   According to this configuration, the setting of a predetermined extension time by a user is accepted in the extension-time setting section. Therefore, the predetermined extension time can be set to the length which the user desires.
(46) A program reservation-and-recording system comprises: any of the program reservation-and-recording apparatuses (40) to (45); and a program-list supply apparatus which supplies the program list through a network or a broadcast radio wave.
   According to this configuration, there are provided any of the program reservation-and-recording apparatuses (40) to (45), and a program-list supply apparatus which supplies the program list through a network or a broadcast radio wave. Therefore, according to the program reservation-and-recording system, a user is released from being compelled to view an unreserved unnecessary program, or manually erasing an unnecessary program from the recording medium.
(47) A program reservation-and-recording apparatus is the program reservation-and-recording apparatus which is connected to one or more program reception apparatuses that each comprises a tuner which receives a program and a monitor which displays the received program, and records a reserved program in a recording medium, comprising: a reservation-information input section which accepts a reservation for a program by a user; a reservation-information memory which stores reservation information which indicates the contents of a reservation for a program; an internal tuner which receives a program, referring to the tuner provided in the one or more program reception apparatuses as one or more external tuners; a tuner operation section which, if two or more programs whose channels are different from each other and which should be simultaneously recorded are included in the reservation information, allows two or more tuners chosen from among a plurality of tuners made up of the internal tuner and the one or more external tuners to receive the two or more programs simultaneously; and a recording control section which records these two or more programs simultaneously in the recording medium.
   According to this configuration, one or more program reception apparatuses are connected. Thereby, if two or more programs whose channels are different from each other and which should be simultaneously recorded are included in the reservation information, the two or more programs are simultaneously received by two or more tuners chosen from among a plurality of tuners which are formed by adding the one or more external tuners to the internal tuner. The two or more programs which have been received are simultaneously recorded in the recording medium. The reception of two or more programs which should be simultaneously recorded cannot be attained, using only an internal tuner provided in the program reservation-and-recording apparatus. Hence, this can be attained by, so to speak, borrowing a tuner provided in a program reception apparatus connected the outside. The program reservation-and-recording apparatus is usually used with being connected to a program reception apparatus. This program reservation-and-recording apparatus (47) realizes the simultaneous recording of two or more programs, also using the tuner of a program reception apparatus effectively which is ordinarily connected to itself. If the number of connected program reception apparatuses is increased, the number of programs to be simultaneously recorded can be raised.
(48) A program reservation-and-recording apparatus is the program reservation-and-recording apparatus (47), wherein: the program reservation-and-recording apparatus further comprises an external-tuner detection section which detects the usage state of the one or more external tuners; and if the external-tuner detection section detects the fact that a used tuner which is a tuner used to display a received program in a monitor is included in the one or more external tuners and that the used tuner is not choosing any of the channels which correspond to the two or more programs, the tuner operation section does not choose the used tuner as one of the two or more tuners.
   According to this configuration, an external tuner which is used to display a received program in a monitor and is not choosing any of the channels which correspond to the two or more programs which should be simultaneously recorded is not chosen as the tuner which should receive any of the two or more programs. In other words, in this external tuner, its channels are not supposed to be changed for the purpose of receiving any of the two or more programs. In this way, the program reservation-and-recording apparatus (48) can record two or more programs concurrently to such a degree that a user cannot be prevented from viewing a program.
(49) A program reservation-and-recording apparatus is the program reservation-and-recording apparatus (47), wherein: the program reservation-and-recording apparatus further comprises an external-tuner detection section which detects the usage state of the one or more external tuners, a first warning display section which, if the external-tuner detection section detects the fact that a used tuner which is a tuner used to display a received program in a monitor is included in the one or more external tuners and that the used tuner is not choosing any of the channels which correspond to the two or more programs, outputs a first warning display signal to display a warning for inquiring whether to change the channel when the two or more programs cannot be received by only the other tuners than the used tuner among the plurality of tuners, and a first choice-signal reception section which receives a first choice signal that indicates the result of a choice operation by the user on whether to give permission to change the channel; and if the first choice-signal reception section receives a signal which indicates a choice operation for giving permission to change the channel as the first choice signal, the tuner operation section changes the channel of the used tuner and chooses the used tuner as one of the two or more tuners, and unless the first choice-signal reception section receives a signal which indicates a choice operation for giving permission to change the channel as the first choice signal, the tuner operation section does not change the channel of the used tuner.
   According to this configuration, if there is an external tuner which is used to display a received program in a monitor and is not choosing any of the channels which correspond to the two or more programs which should be simultaneously recorded and if the two or more programs which should be simultaneously recorded cannot be received without this external tuner, then the first warning display signal is outputted to display a warning for inquiring whether to change the channel. If the first choice signal is received which indicates the choice operation by the user for giving permission to change the channel, then the tuner operation section changes the channel of the external tuner and uses the external tuner for the reception of one of the two or more programs which should be simultaneously recorded. On the other hand, unless the first choice signal is received which indicates the choice operation by the user for giving permission to change the channel, then the tuner operation section does not change the channel of the external tuner and keeps it as it is. Therefore, when a user is viewing a desired program using a program reception apparatus, this viewing cannot be hindered by the program reservation-and-recording apparatus. Besides, if the user intends that the recording of a program be given priority, the program reservation-and-recording apparatus executes the program recording according to this intention. In this way, the program reservation-and-recording apparatus (49) can record two or more programs concurrently, as long as a user permits doing so. Thereby, the viewing of a program by the user and the simultaneous recording of two or more reserved programs can be realized in a harmonious form.
(50) A program reservation-and-recording apparatus is the program reservation-and-recording apparatus (49), wherein: the first warning display signal includes a signal to display which channel the channel should be changed to.
   According to this configuration, the first warning display signal includes a signal to display which channel the channel should be changed to. Therefore, when a user conducts a choice operation whether to give permission to change the channel, the user can make a decision by comparing the program which will be given when the channel is changed and the program which the user is now viewing.
(51) A program reservation-and-recording apparatus is the program reservation-and-recording apparatus (49) or (50), wherein: the first warning display signal includes a signal to display the time when a channel change is completed.
   According to this configuration, the first warning display signal includes a signal to display the time when a channel change is completed. Therefore, when a user conducts a choice operation whether to give permission to change the channel, the user can make a decision by becoming aware how long the user will be hindered from viewing the program which the user is now viewing.
(52) A program reservation-and-recording apparatus is any of the program reservation-and-recording apparatuses (47) to (50), wherein: the program reservation-and-recording apparatus further comprises a second warning display section which, if the tuner operation section is choosing any of the one or more external tuners as the two or more tuners and if the external-tuner detection section detects that there is an operation for changing the channel of any such external tuner by the user, displays the fact that the tuner is currently used and outputs a second warning display signal to display a warning for inquiring whether to cancel the recording, and a second choice-signal reception section which receives a second choice signal which indicates the result of a choice operation by the user on whether to cancel the recording; and if the second choice-signal reception section receives a signal which indicates a choice operation for giving permission to cancel the recording as the second choice signal, the tuner operation section removes any such external tuner from the choice as one of the two or more tuners, and unless the second choice-signal reception section receives a signal which indicates a choice operation for giving permission to cancel the recording as the second choice signal, the tuner operation section continues to choose the external tuner as one of the two or more tuners.
   According to this configuration, if the user has executed an operation for changing the channel of the external tuner which is used to receive one of the two or more programs which should be simultaneously recorded, then the fact that the tuner is now used is displayed, and a second warning display signal is outputted to display a warning for inquiring whether to cancel the recording. If a second choice signal is received which indicates the user's choice operation for giving permission to cancel the recording, then the tuner operation section removes this external tuner from the choice as one of the two or more tuners which receive the two or more programs which should be simultaneously recorded. This leaves a channel choice for this external tuner to a user's operation.
   On the other hand, unless a second choice signal is received which indicates the user's choice operation for giving permission to cancel the recording, the tuner operation section continues to choose this external tuner as one of the two or more tuners which receive the two or more programs which should be simultaneously recorded. Therefore, while two or more reserved programs are being simultaneously recorded, for example, even if a user has executed a channel operation to view a desired program using a program reception apparatus, this program recording cannot be unexpectedly hindered. Besides, if the user intends that the program recording be cancelled, the program reservation-and-recording apparatus cancels the program recording according to this intention. In short, the user's channel operation is prioritized. In this way, the program reservation-and-recording apparatus (52) can record two or more programs concurrently, as long as a user permits doing so. Thereby, the viewing of a program by the user and the simultaneous recording of two or more reserved programs can be realized in a harmonious form.
(53) A program reception apparatus is the program reception apparatus which is connected to any of the program reservation-and-recording apparatuses (47) to (52), comprising: a tuner which receives a program and whose channels are changed by the tuner operation section; a program transmission section which transmits a program received by the tuner to the program reservation-and-recording apparatus; and a monitor which displays a program received by the tuner.
   The program reception apparatus according to this configuration comprises a tuner and a monitor which displays a program received by this tuner. Therefore, a user can view a program received by the tuner. Besides, the tuner's channels can be changed by the tuner operation section of the program reservation-and-recording apparatus connected to the program reception apparatus. Then, a program which is received by the tuner is transmitted to the program reservation-and-recording apparatus by the program transmission section. Therefore, in addition to its own tuner, the program reservation-and-recording apparatus can use the tuner of the program reception apparatus for receiving the two or more programs which should be simultaneously recorded.
(54) A program reservation-and-recording system comprises: any of the program reservation-and-recording apparatuses (47) to (52); and the program reception apparatus (53) which is connected to any such program reservation-and-recording apparatus.

According to this configuration, there are provided any of the program reservation-and-recording apparatuses (47) to (52), and the program reception apparatus (53) which is connected to this. Therefore, each tuner is used together which is provided in a program reservation-and-recording apparatus and the program reception apparatus, respectively. This makes it possible to record the two or more programs simultaneously. In other words, beyond the framework of individual apparatuses, the tuners held in the program reservation-and-recording system are effectively used to record the two or more programs simultaneously. Besides, if the number of connected program reception apparatuses is increased, the number of programs to be simultaneously recorded can be raised.

The application concerned is based upon Japanese Patent Application No. 2003-286090 (filed on August 4, 2003) which is a Japanese patent application. The contents of this basic application are incorporated into the application concerned.

The present invention is described in detail, however, the above description is illustrations in all aspects. The present invention is not limited to those. Numerous variations which are not illustrated can be expected without departing from the scope of the present invention.

### Industrial Applicability

The program reservation-and-recording apparatus, the information-providing server, the program reservation-information management server, the program reception apparatus and the program reservation-and-recording system according to the present invention which are capable of relieving the load on the side of a server and recording a program exactly according to a user's reservation. Therefore, they are industrially useful.

## Claims

1. A program reservation-and-recording apparatus which records a reserved program in a recording medium, comprising:
a reservation-information input section which accepts a reservation for a program by a user;
a reservation-information memory which stores reservation information which indicates the contents of a reservation for a program;
a recording control section which records the program in the recording medium, based on the reservation information;
a program-list acquisition section which makes a request to an information-providing server that is connected via a general-purpose network, and from the information-providing server, acquires a program list on which a program time is described for each program; and
a reservation-information update section which updates the reservation information that is stored in the reservation-information memory, based on the acquired program list.

2. The program reservation-and-recording apparatus according to claim 1, wherein a time when the program-list acquisition section acquires the program list includes a time immediately before a program-recording start time which is described in the reservation information.

3. The program reservation-and-recording apparatus according to claim 1 or 2, wherein a time when the program-list acquisition section acquires the program list includes a time immediately before a program-recording completion time which is described in the reservation information.

4. The program reservation-and-recording apparatus according to any of claims 1 to 3, wherein:
a time when the program-list acquisition section acquires the program list includes a time after a program-recording completion time which is described in the reservation information; and
the program reservation-and-recording apparatus further comprises an erasure control section which makes a decision, based on the program list acquired at the time after the program-recording completion time, whether or not an unreserved program is included within a recording time for the program whose recording has already been completed, and if it is included, erases the unreserved program from the recording medium.

5. The program reservation-and-recording apparatus according to claim 4, wherein:
the time when the program-list acquisition section acquires the program list includes a time when a program reservation is made in the reservation-information input section;
the program list includes a program identifier for each program which is a code for identifying a program;
the reservation-information input section includes a program-identifier extraction section which extracts the program identifier which corresponds to a program for which a reservation is made by the user from the program list acquired at a time when the program is reserved, and stores it as a part of the reservation information in the reservation-information memory; and
the erasure control section makes the decision by comparing the program identifier of the program whose recording is completed and a program identifier on the program list acquired at the time after the program-recording completion time.

6. The program reservation-and-recording apparatus according to any of claims 1 to 4, wherein:
a time when the program-list acquisition section acquires the program list includes a time when a program reservation is made in the reservation-information input section and a time subsequent to it;
the program list includes a program identifier for each program which is a code for identifying a program;
the reservation-information input section includes a program-identifier extraction section which extracts the program identifier which corresponds to a program for which a reservation is made by the user from the program list acquired at the time when the program is reserved, and stores it as a part of the reservation information in the reservation-information memory; and
the reservation-information update section compares the program identifier of the program for which the reservation is made and a program identifier on the program list acquired after the time when the reservation is made, and retrieves information on the program list so as to update the reservation information.

7. The program reservation-and-recording apparatus according to any of claims 1 to 4, wherein:
a time when the program-list acquisition section acquires the program list includes a time when a program reservation is made in the reservation-information input section;
the program list includes a program identifier for each program which is a code for identifying a program;
the program identifier includes an identifier for identifying whether or not a corresponding program is a final one of serial programs; and
the reservation update section erases the contents of a periodic recording reservation for the serial programs from the reservation information based on the identifier, after a recording of the final program is completed.

8. The program reservation-and-recording apparatus according to any of claims 1 to 7, further comprising:
an apparatus-identifier memory which stores an apparatus identifier for identifying the program reservation-and-recording apparatus itself; and
an apparatus-identifier transmission section which transmits the apparatus identifier to the information-providing server when communication is executed between the program reservation-and-recording apparatus itself and the information-providing server.

9. A program reservation-and-recording system, comprising:
a plurality of the program reservation-and-recording apparatuses according to any of claims 1 to 8; and further,
an information-providing server which is connected via a general-purpose network to the plurality of program reservation-and-recording apparatuses and sends the program list in response to a request from the plurality of program reservation-and-recording apparatuses.
